# EUROPÄISCHE PATENTSCHRIFT

(11) **EP 3 889 807 B1**
(45) Veröffentlichungstag und Bekanntmachung des Hinweises auf die Patenterteilung: **16.10.2024**
(21) Anmeldenummer: 21166690.4
(22) Anmeldetag: 01.04.2021
(51) Int. Cl.: H04L 9/40, G06F 16/908, G06F 21/32

(54) **AUTHENTIFIZIERUNGSSYSTEM AUF BASIS EINES TELEKOMMUNIKATIONSGERÄTS MIT EINEM HIRNAKTIVITÄTSSENSOR**
AUTHENTICATION SYSTEM BASED ON A TELECOMMUNICATION DEVICE WITH A BRAIN ACTIVITY SENSOR
SYSTÈME D'AUTHENTIFICATION BASÉ SUR UN APPAREIL DE TÉLÉCOMMUNICATION DOTÉ D'UN CAPTEUR D'ACTIVITÉ CÉRÉBRALE

(30) Priorität: 02.04.2020 DE 102020109286
(43) Veröffentlichungstag der Anmeldung: 06.10.2021
(73) Patentinhaber: Bundesdruckerei GmbH, 10969 Berlin (DE)
(72) Erfinder: FISCHER, Jörg, 10317 Berlin (DE); GRAUPNER, Hendrik, 14050 Berlin (DE); Dr. PAESCHKE, Manfred, 16348 Wandlitz (DE); TIETKE, Markus, 12439 Berlin (DE); TRÖLENBERG, Stefan, 15749 Mittenwalde, OT Ragow (DE)
(74) Vertreter: Richardt Patentanwälte PartG mbB

(56) Entgegenhaltungen:
- TOUYAMA HIDEAKI ET AL: "Non-target photo images in oddball paradigm improve EEG-based personal identification rates", ENGINEERING IN MEDICINE AND BIOLOGY SOCIETY (EMBC), 2013 34TH ANNUAL INTERNATIONAL CONFERENCE OF THE IEEE, 25 August 2008 (2008-08-25), pages 4118 - 4121, XP055832699, ISSN: 1557-170X, DOI: 10.1109/IEMBS.2008.4650115

## Beschreibung

### Gebiet

Die Erfindung betrifft ein Verfahren und System zur Authentifizierung einer Person aus der Ferne.

### Hintergrund

Bei vielen Gelegenheiten müssen Personen sich auf verlässliche Weise gegenüber einer Behörde oder gegenüber Diensten authentifizieren. Beispiele hierfür sind die Stellung eines Antrags auf Verlängerung eines Personalausweises, die Stellung eines Antrags auf Ausstellung eines Reisepasses, der Nachweis der Identität, um einen Bankkredit aufzunehmen, oder ähnliches.

Die Notwendigkeit, persönlich in den Räumlichkeiten einer Behörde oder eines Unternehmens der Privatwirtschaft zu erscheinen, ist sowohl für die Person, die erscheinen muss, als auch für die Behörde bzw. Firma, vor der die sich ausweisende Person erscheinen muss, mit Aufwand und Kosten verbunden. Viele Regierungen versuchen daher, einen wachsenden Anteil derartiger Vorgänge zu digitalisieren ("Electronic Government"), und auch die Privatwirtschaft ist bestrebt, Prozesse auf allen Ebenen möglichst effizient zu gestalten.

Manchmal ist das persönliche Erscheinen auch nicht möglich (z.B. bei körperlichen Einschränkungen) oder unverhältnismäßig aufwändig (z.B. Auslandsaufenthalt).

Ein sicheres Authentifizierungsverfahren aus der Ferne, das hinreichend sicher ist, wäre daher für Bürger wie Behörden bzw. Konsumenten wie Dienstanbieter vorteilhaft.

Aus dem Stand der Technik bekannt ist die wissenschaftliche Veröffentlichung TOUYAMA HIDEAKI ET AL: "Non-target photo images in oddball paradigm improve EEG-based personal identification rates", ENGINEERING IN MEDICINE AND BIOLOGY SOCIETY (EMBC), 2013 34TH ANNUAL INTERNATIONAL CONFERENCE OF THE IEEE, 25. August 2008, Seiten 4118-4121, ISSN: 1557-170X, DOI: 10.1109/IEMBS.2008.4650115. Darin wird ein Verfahren zur Identifizierung von Testpersonen unter Verwendung von EEG-Messungen beschrieben. Den Testpersonen werden verschiedene Bilder gezeigt, während sie einer EEG-Messung unterzogen werden. Die Testpersonen werden gebeten, sich auf Bilder vorab vereinbarter Art besonders zu fokussieren. Dabei ergeben sich in Abhängigkeit davon, ob sich eine Testperson auf ein Bild fokussiert oder nicht, unterschiedliche EEG-Messkurven, die eine verbesserte Identifizierung der Testpersonen erlauben.

### Zusammenfassung

Der Erfindung liegt die Aufgabe zugrunde, ein verbessertes Authentifizierungsverfahren vorzuschlagen, sowie ein entsprechendes Authentifizierungssystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Verfahren zur Authentifizierung einer Person wie es in Anspruch 1 spezifiziert ist. Das Verfahren umfasst:
- Registrierung einer Person bei einer Server-Applikation, wobei die Server-Applikation auf einem Server-Computersystem instanziiert ist, wobei die Registrierung eine Erfassung zumindest eines Bekanntbilds der einen Person innerhalb sicherer Räumlichkeiten bei Anwesenheit der einen Person in der sicheren Räumlichkeit umfasst, wobei ein Bekanntbild ein Bild ist mit einem Bildmotiv, das der einen Person bekannt ist;
- Empfang des zumindest einen Bekanntbilds von der Server-Applikation über eine Netzwerkverbindung durch eine Client-Applikation, wobei die Client-Applikation auf einem portablen Telekommunikationsgeräts instanziiert ist, das der einen Person zugeordnet ist, wobei das Telekommunikationsgerät reversibel oder irreversibel mit einem KLHA-Sensor verbunden ist, wobei der KLHA-Sensor ein kontaktloser Sensor zur Erfassung von Hirnaktivitäten ist;
- Erzeugen einer Spezifikation einer Sequenz von Bekanntbildern und Fremdbildern durch ein Authentifizierungsmodul, wobei ein Fremdbild ein Bild mit einem Motiv ist, das der einen Person nicht bekannt ist, wobei das Authentifizierungsmodul Bestandteil der Server-Applikation oder der Client-Applikation ist;
- Anzeige mehrerer Bilder auf einer Anzeige des Telekommunikationsgeräts durch die Client-Applikation außerhalb der sicheren Räumlichkeit, wobei die angezeigten Bilder eine Sequenz aus einem oder mehreren Bekanntbildern und einem oder mehreren Fremdbildern gemäß der Spezifikation beinhalten;
- während die mehreren Bilder der Person angezeigt werden, Erfassung von ersten und zweiten Hirnaktivitätssignalen, die in der einen Person durch die Betrachtung der Bilder jeweils ausgelöst werden, durch den KLHA-Sensor, wobei erste Hirnaktivitätssignale erfasst werden, während der Person ein Bekanntbild angezeigt wird, und wobei zweite Hirnaktivitätssignale erfasst werden, während der einen Person ein Fremdbild angezeigt wird;
- Authentifizierung der einen Person als Funktion der Ähnlichkeit der erfassten ersten und zweiten Hirnaktivitätssignale unter Berücksichtigung der Spezifikation der Bildsequenz durch das Authentifizierungsmodul; und
- Ausgabe eines Authentifizierungsergebnisses bezüglich der einen Person.

Das Verfahren zur Authentifizierung einer Person behandelt die eine Person als erfolgreich authentifiziert, wenn die ersten Hirnaktivitätssignale einander ähnlich sind, wenn die zweiten Hirnaktivitätssignale einander ähnlich sind, wenn die ersten Hirnaktivitätssignale unähnlich zu den zweiten Hirnaktivitätssignalen sind und wenn die Sequenz voneinander ähnlichen ersten Hirnaktivitätssignalen und einander ähnlichen zweiten Hirnaktivitätssignalen zu der Sequenz der angezeigten Bekanntbildern und Fremdbildern korrespondiert.

Ausführungsformen der Erfindung können den Vorteil haben, dass sich eine Person einmalig auf sichere Art und Weise bei einer Behörde oder einem Dienst authentifizieren und registrieren kann. Bei dieser Gelegenheit können ein oder mehrere Bekanntbilder dieser Person erfasst werden. Beispielsweise können ein oder mehrere Gesichtsbilder dieser Person mit einer Kamera innerhalb der sicheren Räumlichkeit angefertigt werden, sodass die Behörde bzw. der sonstige Besitzer der sicheren Räumlichkeit mit Sicherheit davon ausgehen kann, dass die innerhalb der sicheren Räumlichkeit erfassten Gesichtsbilder tatsächlich von der Person stammen, die sich aktuell in der sicheren Räumlichkeit befindet und sich im Zuge der Registrierung authentifiziert hat, zum Beispiel durch Vorlage entsprechender Dokumente (je nach Art des Registrierungsvorgangs kann die Authentifizierung in den sicheren Räumlichkeiten zum Beispiel auf Basis biometrischer Merkmale, Ausweisdokumente, Geburtsurkunden, Meldebescheinigungen oder sonstigen elektronischen oder papierbasierten Dokumenten durchgeführt werden. Als Ergebnis der Registrierung kann für die eine Person ein Nutzerprofil erzeugt und in ein von der Serverapplikation verwaltetes Nutzerregister gespeichert werden.

Die Authentifizierung als Funktion der Ähnlichkeit der erfassten ersten und zweiten Hirnaktivitätssignale umfasst eine Analyse der Ähnlichkeit der erfassten ersten und zweiten Hirnaktivitätssignale.

Die ein oder mehreren Bekanntbilder dieser Person können verknüpft mit dem Nutzerprofil dieser Person gespeichert werden, denn das eigene Gesichtsbild ist nur für diese eine Person ein "Bekanntbild", für andere Personen ein "Fremdbild". Die Speicherung der ein oder mehreren im Zuge der Registrierung erfassten Bekanntbilder kann zum Beispiel in einer Datenbank, auf welche die Serverapplikation zugreifen kann, erfolgen ("serverseitige Speicherung"). Zusätzlich oder alternativ dazu kann die Speicherung der ein oder mehreren im Zuge der Registrierung der einen Person erfassten Bekanntbilder aber auch in einen lokalen Datenspeicher eines Telekommunikationsgerätes, welches diese einen Person zugeordnet ist, erfolgen. Auch hierdurch ist gewährleistet, dass die Bekanntbilder explizit oder implizit mit dem Profil und/oder einen der Person spezifisch zugewiesenen Gerät verknüpft gespeichert sind.

Bei dem portablen Telekommunikationsgerät kann es sich beispielsweise um ein Smartphone handeln. Wenn diese eine Person nun nach einigen Jahren sich erneut bei der Behörde authentifizieren möchte, ohne die Räumlichkeiten der Behörde aufzusuchen, kann die Person dies über die Client-Applikation des portablen Telekommunikationsgerätes bewerkstelligen.

Beispielsweise kann im Zuge der erneuten Authentifizierung der einen Person Jahre nach der ursprünglichen Registrierung von der Client-Applikation oder der Server-Applikation eine zufällige Bildsequenz erzeugt und die Bilder der Bildsequenz auf dem Display des Telekommunikationsgerätes der einen Person angezeigt werden. Bei der Bildsequenz handelt es sich zum Beispiel um eine Mischung der Bekanntbilder der Person, die bei dem Registrierungsprozess erfasst wurden, und mehreren Fremdbildern. Außerdem kann die eine Person für den Zweck der Authentifizierung den KLHA Sensor mit dem Telekommunikationsgerät verbinden. Beispielsweise kann die Person den KLHA Sensor für diesen Zweck bei der Behörde bzw. der jeweils relevanten authentifizierenden Instanz anfordern und per Post erhalten. Gemäß mancher Ausführungsformen ist es jedoch auch möglich, dass das Telekommunikationsgerät den KLHA Sensor von vorneherein beinhaltet (zum Beispiel in Form einer Smartphonekamera).

Während die Client-Applikation dies Bildsequenz auf dem Display des Telekommunikationsgeräts anzeigt, erfasst der KLHA-Sensor Hirnaktivitätssignale und leitet diese an die Client-Applikation weiter. Die Client-Applikation wertet die empfangenen Hirnsignale aus um festzustellen, ob der Person, die in diesem Moment auf das Display blickt, die Motive auf den angezeigten Bekanntbildern vertraut sind bzw. zumindest deutlich vertrauter sind als die Motive der angezeigten Fremdbilder, und ob sich die Hirnaktivitätssignale beim Anzeigen von Bildern des gleichen Typs (entweder Bekanntbild oder Fremdbild) signifikant ähnlicher sind als bei der Anzeige von Bildern unterschiedlichen Typs. Nur falls die Analyse der Hirnaktivitätssignale ergibt, dass das erwartete Muster an ersten und zweiten Hirnaktivitätssignalen der angezeigten Sequenz aus Fremdbildern und Bekanntbildern entspricht, gilt der eine Person als authentifiziert.

Ausführungsformen der Erfindung können also den Vorteil haben, dass eine Hardwareerweiterung für ein Telekommunikationsgerät verwendet werden kann, um eine Person auf sichere Weise gegenüber einer Behörde oder einer sonstigen Organisation zu authentifizieren und für diese eine Person einen Identitätsnachweis zu erbringen. Es ist nicht notwendig, dass die Person hierfür erneut eine sichere Räumlichkeit der Behörde bzw. der sonstigen Organisation betritt.

Ausführungsformen der Erfindung können zudem vorteilhaft sein, dass das Authentifizierungsverfahren aus der Ferne verlässlich davor schützt, dass eine andere Person als die, die sich ursprünglich registriert hat, aus der Ferne erfolgreich authentifiziert. Würde beispielsweise das Telekommunikationsgerät in die Hände einer anderen Person gelangen, und würde diese andere Person versuchen, sich mit dem Telekommunikationsgerät zu authentifizieren, zum Beispiel um die Ausstellung eines neuen Passes für das eigene Gesichtsbild zu beantragen oder um einen Kredit zu beantragen, der auf das eigene Konto ausgezahlt wird, würde der Authentifizierungsversuch scheitern, denn die Hirnaktivitätssignale dieser anderen, unberechtigten Person würden sich beim Betrachten der Bekanntbilder der registrierten/berechtigten Person nicht signifikant unterscheiden von den Hirnaktivitätssignalen, die beim Betrachten von Fremdbildern gemessen werden. Dies liegt daran, dass die Bekanntbilder der berechtigten Person Fremdbilder für die unberechtigte Person darstellen und die Hirnaktivitätssignale vom Gehirn der jeweiligen Person automatisch erzeugt werden, ohne dass die Person bewusst darauf Einfluss hätte.

Ausführungsformen der Erfindung können also den Vorteil haben, ein fälschungssicheres Authentifizierungsverfahren aus der Ferne zu ermöglichen, dass sowohl die Person, die sich authentisieren möchte wie auch die entsprechenden Behörden von der Notwendigkeit freistellt, dass die Person, die sich authentisieren möchte, bestimmte Räumlichkeiten der Behörde aufsuchen muss. Ein weiterer Vorteil kann die erhöhte Nutzerfreundlichkeit des Authentifizierungsverfahrens sein. Man muss sich beispielsweise kein Passwort merken.

Gegenüber anderen aus dem Stand der Technik bekannten biometrischen Authentifizierungsverfahren können Ausführungsformen der Erfindung mehrere Vorteile aufweisen: Das Verfahren ist noch sicher gegenüber einem Angreifer, der sich fälschlicherweise als eine andere Person zu authentifizieren versucht, denn das Verfahren beruht nicht notwendigerweise auf dem Vergleich eines beobachteten Merkmals mit dem in einer Datenbank gespeicherten Merkmal, sondern auf dem direkten Vergleich von Hirnaktivitätssignalen, die in Reaktion auf Selbst- bzw. Fremdbilder erzeugt wurden. Das Verfahren benötigt außerdem nicht die Speicherung von Merkmalen einzelner Personen in einer Datenbank, wodurch die Privatsphäre der zu authentifizierenden Person geschützt wird. Hierdurch kann das Verfahren auch in Situationen eingesetzt werden bei denen eine Speicherung personenbezogener, biometrischer Daten unerwünscht ist. Durch die Löschung der Daten kann außerdem die Privatsphäre der sich authentifizierenden Person verbessert werden ("improved privacy").

Nach Ausführungsformen ist das Verfahren zur Authentifizierung der einen Person ein Verfahren zur Authentifizierung einer Person aus der Ferne. Die Person befindet sich also während sie sich mit diesem Verfahren authentisiert nicht innerhalb der sicheren Räumlichkeiten, die zur Registrierung genutzt wurden. Beispielsweise kann die Person sich während der Durchführung des Authentifizierungsverfahrens in der eigenen Wohnung, in einem Krankenhaus, im Ausland oder einen sonstigen beliebigen Ort aufhalten, in welchem eine Netzwerkverbindung zwischen der Client-Applikation auf dem portablen Telekommunikationsgerät und der Server-Applikation auf dem Server-Computersystem aufgebaut werden kann. Bei der Netzwerkverbindung kann es sich zum Beispiel um eine Mobilfunkverbindung handeln.

Nach Ausführungsformen der Erfindung erfolgt der Empfang des zumindest einen Bekanntbilds durch die Client-Applikation im Zuge der Registrierung der einen Person.

Beispielsweise kann der Vorgang der Übertragung der bei der Registrierung der Person erfassten Bekanntbilder an die Client-Applikation des Telekommunikationsgerätes dieser Person einmalig während oder im Anschluss an den Registrierungsprozess durchgeführt werden, aber nicht für jeden einzelnen später durchgeführten Authentifizierungsprozess. Dies kann vorteilhaft sein, da der Datenverkehr über das Netzwerk reduziert wird und auch die Gefahr, dass die Bekanntbilder während der Übertragung von unberechtigten Dritten mit gelesen werden, reduziert wird.

Nach einer Ausführungsform speichert die Client Applikation nach Erhalt des zumindest einen Bekanntbildes das zumindest eine empfangene Bekanntbild auf geschützte Weise in einem nicht-flüchtigen Speicher des Telekommunikationsgeräts. Beispielsweise kann die Speicherung in verschlüsselter Form erfolgen und/oder kann auf einen Speicherbereich erfolgen, auf welchen ausschließlich der Prozessor des Telekommunikationsgerätes Zugriff hat, nicht jedoch ein externes Gerät. Nach einem erfolgreichen Empfang und einer erfolgreichen Speicherung des zumindest einen Bekanntbildes auf dem lokalen, nicht-flüchtigen Speicher des Telekommunikationsgerätes sendet die Client-Applikation eine Empfangsbestätigung bezüglich des zumindest einen Bekanntbildes an die Server-Applikation. In Antwort auf den Empfang der Empfangsbestätigung löscht die Server-Applikation sämtliche anderen existierenden Kopien des Bekanntbildes.

Entsprechende Ausführungsformen können den Vorteil einer erhöhten Datensicherheit bzw. eines erhöhten Datenschutzes haben, denn das zumindest eine Bekanntbild der einen Person wird nur kurzzeitig serverseitig gespeichert. Die serverseitige Speicherung erfolgt nur solange, bis sie auf einen lokalen Speicher des Telekommunikationsgerätes der einen Person übertragen werden konnten. Danach werden diese - potenziell sehr sensiblen - persönlichen Daten serverseitig gelöscht. Für den Fall, dass unberechtigte Dritte in das Server-Computersystem eindringen sollten, ist die Gefahr also sehr gering, dass hierbei Bekanntbilder einer bestimmten Person in Erfahrung gebracht werden können bzw. es wären nur einige wenige Personen betroffen (nämlich die, die sich gerade eben registriert haben und deren Bekanntbilder noch nicht auf ein Telekommunikationsgerät der jeweiligen Person übertragen werden konnten).

Nach weiteren Ausführungsformen erfolgt der Empfang des zumindest einen Bekanntbilds durch die Client-Applikation im Zuge jedes Authentifizierungsprozesses für die eine Person. Jeder Authentifizierungsprozess umfasst: Empfang einer Authentifizierungsanfrage für die eine Person von der Client-Applikation durch die Server-Applikation; In Antwort auf den Empfang der Authentifizierungsanfrage, Identifikation des zumindest einen Bekanntbildes, das bei der Registrierung der einen Person erfasst wurde, durch die Server-Applikation; beispielsweise kann der Schritt der Identifikation des zumindest einen Bekanntbildes für die eine Person eine Suche innerhalb einer Bilddatenbank nach ein oder mehreren Bekanntbildern umfassen, welche mit einem Nutzerprofil dieser einen Person verknüpft gespeichert sind. Die Bilddatenbank kann zum Beispiel eine Vielzahl von Gesichtsbildern von bei der Server-Applikation registrierten Personen beinhalten, wobei aber die Gesichtsbilder anderer Personen keine Bekanntbilder für die eine Person darstellen, sondern allenfalls in manchen Ausführungsformen als Fremdbilder verwendet werden können. Der Authentifizierungsprozess umfasst außerdem ein Senden des identifizierten zumindest einen Bekanntbildes an die Client-Applikation durch die Server-Applikation über die Netzwerkverbindung.

Der Umstand, dass das zumindest eine Bekanntbild bei jedem Authentifizierungsprozess neu von der Server-Applikation bezogen wird, kann den Vorteil haben, dass die Client-Applikation weniger Speicherplatz auf einem nicht-flüchtigen Speichermedium des Telekommunikationsgerätes verbraucht.

Nach Ausführungsformen der Erfindung umfasst das Verfahren eine Speicherung des während der Registrierung der einen Person erfassten zumindest einen Bekanntbilds auf geschützte Weise (z.B. nach Verschlüsselung des zumindest einen Bekanntbildes durch die Server-Applikation) in einem nicht-flüchtigen Speicher des Server-Computersystems durch die Server-Applikation. Das zumindest eine empfangene Bekanntbild wird von der Client-Applikation auf einem Speicher des Telekommunikationsgeräts ausschließlich temporär für die Dauer des Authentifizierungsprozesses gespeichert.

Oftmals ist es ausreichend, dass die zum Zwecke der Authentifizierung benötigten Bekanntbilder lediglich in einem flüchtigen Datenspeicher, zum Beispiel dem Arbeitsspeicher, temporär und nur für die Dauer des Authentifizierungsprozesses, gespeichert werden. Entsprechende Ausführungsformen der Erfindung können den Vorteil haben, dass im Falle eines Verlustes des Telekommunikationsgerätes nicht auch die Bekanntbilder verloren gehen, da dieser ja ohnehin für jeden Authentifizierung Prozess erneut von der Server-Applikation bezogen werden. Somit sind die Bekanntbilder besser vor Verlust geschützt. Im Falle eines Verlusts des Telekommunikationsgeräts muss der Nutzer sich also nicht erneut registrieren bzw. erneut persönlich bei der Behörde vorstellen, um die Bekanntbilder erneut zu erfassen.

Nach Ausführungsformen ist die Client-Applikation dazu konfiguriert, nach der Ausgabe des Authentifizierungsergebnisses automatisch die in dem flüchtigen speichergespeicherten Bekanntbilder der einen Person zu löschen.

Entsprechende Ausführungsformen können den Vorteil haben, dass die Bekanntbilder noch sicherer vor Verlust bzw. vor dem Zugriff durch unberechtigte Personen geschützt werden.

Nach Ausführungsformen der Erfindung ist das zumindest eine Bekanntbild ein Gesichtsbild der einen Person.

Dies kann den Vorteil haben, dass es für die Behörde bzw. die Organisation, welche die Registrierung der Person vornimmt, selbstevident ist, dass das eigene Gesichtsbild der jeweiligen Person bekannt ist. In manchen Ausführungsformen der Erfindung kann es zwar auch möglich sein, Bekanntbilder zu erfassen, die ein anderes Motiv als das Gesicht einer Person darstellen, zum Beispiel ein Haustier, Gegenstände der Wohnung oder des Arbeitsplatzes etc. Diese anderen Motive haben aber den Nachteil, dass es oftmals für die authentifizierende Instanz (z.B. Behörde) nicht einfach ist festzustellen, ob ein bestimmtes Motiv auch sicher und verlässlich einer bestimmten Person bekannt bzw. sehr vertraut ist. Bei dem eigenen Gesichtsbild kann dies jedoch vorausgesetzt werden.

Nach Ausführungsformen der Erfindung ist das zumindest eine Bekanntbild ein mittels einer Kamera oder Videokamera erfasstes Bild eines Bildmotivs, das der einen Person erwiesenermaßen bekannt ist.

Nach anderen Ausführungsformen der Erfindung ist das zumindest eine Bekanntbild eine Vielzahl von mittels einer Kamera oder Videokamera erfassten Bildern eines Bildmotivs, das der einen Person erwiesenermaßen bekannt ist. Beispielsweise kann das Gesicht der einen Person im Zuge des Registrierungsprozesses mehrfach, zum Beispiel von verschiedenen Winkeln und Perspektiven aus und/oder unter Verwendung unterschiedlicher Lichtquellen von einer Kamera erfasst werden. Es werden also eine Vielzahl leicht unterschiedlicher Gesichtsbilder der gleichen Person erfasst, die jeweils das gleiche Gesicht etwas anders abbilden bzw. darstellen.

Nach weiteren Ausführungsformen der Erfindung ist das zumindest eine Bekanntbild eine Vielzahl von Kopien eines mittels einer Kamera oder Videokamera erfassten Bildes eines Bildmotivs, das der einen Person erwiesenermaßen bekannt ist. Beispielsweise kann im Zuge des Registrierungsprozesses ein einziges Gesichtsbild von der Person erfasst werden. Dieses kann einzelnen gespeichert werden oder in Form mehrerer identischer Kopien. Es ist auch möglich, dass die Kopien des einen Bekanntbildes erst dynamisch für einen bestimmten Authentifizierungsversuch der einen Person erzeugt werden.

Die oben genannten Varianten zur Erzeugung mehrerer Bekanntbilder von der einen Person im Zuge des Registrierungsprozesses und/oder erst im Zuge des Authentifizierungsprozesses können vorteilhaft sein, da die Sicherheit bzw. Verlässlichkeit des Authentifizierungsverfahrens mit der Anzahl der gezeigten Selbstbilde und Fremdbilder steigt. Beispielsweise kann dadurch die Länge und Komplexität der Bildsequenz, gemäß welcher die Bekanntbilder und Fremdbilder der einen Person angezeigt werden, erhöht werden. Je mehr Bilder gezeigt bzw. je mehr Hirnaktivitätssignale erfasst werden, desto weniger können einzelne Störsignale das Gesamtergebnis der Analyse der Hirnaktivitätssignale beeinflussen und zu falsch positiven oder falsch negativen Ergebnissen führen.

Nach Ausführungsformen der Erfindung umfasst die Registrierung der einen Person ferner:
- Bereitstellung von zumindest einem biometrischen Sensor innerhalb der sicherer Räumlichkeit, wobei der Sensor insbesondere ausgebildet ist als ein Sensor, der zur Unterscheidung von Personen, die Gesichtsmasken tragen von Personen, die keine Gesichtsmasken tragen; beispielsweise können Wärmebildkameras und/oder Sensoren für die Leitfähigkeit der Gesichtshaut verwendet werden, um festzustellen, ob die Person, die sich gerade registriert, eine Maske trägt oder nicht;
- Erfassung eines biometrischen Merkmals der Person durch den biometrischen Sensor;
- Auswertung des erfassten biometrischen Merkmals;
- falls die Auswertung des erfassten biometrischen Merkmals ergibt, dass die eine Person keine Maske trägt, Durchführung der Registrierung und Bereitstellung des zumindest einen Bekanntbilds von der Server-Applikation an die Client-Applikation;
- falls die Auswertung des erfassten biometrischen Merkmals ergibt, dass die eine Person eine Maske trägt, Abbruch der Registrierung, ohne das zumindest eine Bekanntbild zu erfassen und/oder ohne das zumindest eine Bekanntbild an die Client-Applikation bereitzustellen.

Entsprechende Ausführungsformen der Erfindung können den Vorteil haben, dass hierdurch unterbunden werden kann, dass eine Person den Registrierungsprozess dadurch manipuliert, dass das zumindest eine Bekanntbild, typischerweise das Gesichtsbild der sich registrieren Person, das Gesicht einer anderen Person darstellt. Beispielsweise könnte eine Person, die bereits im Besitz eines bestimmten Berechtigungsausweises ist, z.B. eines Mitarbeiterausweises mit Lichtbild, sich per Fingerabdruck als Mitarbeiter authentifizieren und behaupten, diesen Ausweis verloren zu haben, um sich einen neuen Mitarbeiterausweis ausstellen zu lassen. Die Person könnte das Ziel haben, mit diesem neuen Mitarbeiterausweis einer anderen Person Zutritt zu dem Firmengelände zu verschaffen und zu diesem Zweck eine Gesichtsmaske tragen, welche das Gesicht dieser anderen Person widergibt. Um dies zu verhindern, können innerhalb der sicheren Räumlichkeit weitere Sicherheitsmaßnahmen getroffen werden, z.B. die besagten biometrischen Sensoren eingesetzt werden.

Nach Ausführungsformen der Erfindung wird das zumindest eine Bekanntbild, das in der sicheren Räumlichkeit erfasst wird, von einer Sicherheitskamera erfasst.

Die Sicherheitskamera kann z.B. eine Kamera mit einem Zugriffsschutz sein. Der Zugriffsschutz bewirkt, dass die Kamera von einem Betreiber nur nach einem vorhergehenden Authentifizierungsschritt gegenüber der Sicherheitskamera verwendet werden kann. Der Zugriffsschutz kann z.B. passwortbasiert sein, auf einem biometrischen Merkmal beruhen oder auf sonstigen Mitteln, die einen Zugriff erst nach einem Authentifizierungsprozess gegenüber der Kamera erlauben.

Zusätzlich oder alternativ dazu kann die Sicherheitskamera eine Kamera mit einem Signaturschlüssel sein, die dazu ausgebildet ist, die von ihr erfassten Bekanntbilder zu signieren. Die Server-Applikation einen Signaturprüfschlüssel hat, der dazu ausgebildet ist, die Signatur von Bildern zu prüfen und im Zuge des Registrierungsprozesses nur solche Bilder als Bekanntbilder zu akzeptieren, welche geprüftermaßen von der Sicherheitskamera signiert wurden.

Entsprechende Ausführungsformen können den Vorteil haben, dass die Sicherheit zusätzlich erhöht wird. Beispielsweise kann es sich bei der sicheren Räumlichkeit, innerhalb welcher das Bekanntbild erfasst wird, nicht nur um eine Räumlichkeit einer Behörde handeln, wo die Angestellten und/oder biometrische Sensoren sicherstellen, dass das Bekanntbild auch tatsächlich die Person abbildet, die sich aktuell in der sicheren Räumlichkeit zum Zwecke der Registrierung aufhält. Es ist aber auch möglich, dass bestimmte Dienstleister, zum Beispiel bestimmte Fotostudios, den behördlichen Auftrag oder mit behördlicher Genehmigung Gesichtsbilder oder sonstige Bekanntbilder von Personen zum Zwecke der Registrierung aufnehmen, die Erfassung des Bekanntbildes in den eigenen Räumlichkeiten (zum Beispiel Fotostudio) vornehmen. In diesem Fall gilt das Fotostudio als gesicherte Räumlichkeit. In derartigen Anwendungsszenarien ist das Risiko, dass ein Bekanntbild, zum Beispiel ein Gesichtsbild einer Person, nicht authentisch ist (also zum Beispiel eine Person mit Maske abbildet und/oder gemorpht ist), erheblich größer. Das Risiko, dass das von einem Fotostudio abgelieferte Bekanntbild manipuliert ist/nicht authentisch ist kann jedoch dadurch reduziert werden, dass dem Fotostudio zwingend vorgeschrieben wird, für die Erfassung von Bekanntbildern für sicherheitskritische Registrierungsprozesse zwingend eine Sicherheitskamera zu verwenden. Ob eine Sicherheitskamera verwendet wurde kann die Behörde zum Beispiel über die Signatur der Bekanntbilder feststellen. Somit kann in manchen Fällen die Erfassung von Bekanntbildern an Dienstleister delegiert werden, deren gesicherte Räumlichkeiten nicht das gleiche Sicherheitsniveau bieten wie entsprechende Räumlichkeiten von Behörden, ohne dass das Risiko einer Manipulation der Bekanntbilder nennenswert vergrößert wird.

Für weitere Anwendungen (z.B. privatwirtschaftliche Anwendungen) ist es auch möglich, dass der Registrierungsprozess in einer Umgebung abläuft, in der eine zweite Person die Ordnungsgemäßheit des Registrierungsprozesses bestätigt (Sog. Kollaborative Registrierung/Enrollment).

Nach Ausführungsformen der Erfindung behandelt das Authentifizierungsmodul (und damit das Authentifizierungsverfahren) die eine Person als erfolgreich authentifiziert, wenn die ersten Hirnaktivitätssignale sich signifikant unterscheiden von den zweiten Hirnaktivitätssignalen.

Erfindungsgemäß behandelt das Authentifizierungsmodul (und damit das Authentifizierungsverfahren) die eine Person als erfolgreich authentifiziert, wenn die ersten Hirnaktivitätssignale einander ähnlich sind, wenn die zweiten Hirnaktivitätssignale einander ähnlich sind, wenn die ersten Hirnaktivitätssignale unähnlich zu den zweiten Hirnaktivitätssignalen sind und wenn die Sequenz voneinander ähnlichen ersten Hirnaktivitätssignalen und einander ähnlichen zweiten Hirnaktivitätssignalen zu der Sequenz der angezeigten Bekanntbildern und Fremdbildern korrespondiert.

Ausführungsformen der Erfindung können den Vorteil haben, dass die Analyse der ersten und zweiten Hirnaktivitätssignale im Zuge des Authentifizierungsverfahrens die relative Beschaffenheit der ersten Hirnsignale gegenüber den zweiten Hirnsignalen berücksichtigt und vorzugsweise nicht ein bestimmtes absolutes Signal oder Signalprofil. Das Erfassen, Speichern und Auswerten von absoluten, für eine bestimmte Person spezifischen, Referenzsignalen für die ersten und zweiten Hirnaktivitätssignale ist somit nicht erforderlich. Die Problematik des Abhandenkommens solcher personenbezogenen biometrischen Referenzdaten kann somit vermieden werden.

Zudem können Ausführungsformen der Erfindung den Vorteil haben, dass es nicht erforderlich ist, dass alle Personen beim Betrachten von Bekanntbildern im Wesentlichen identische erste Hirnaktivitätssignale erzeugen und dass alle Personen beim Betrachten von Fremdbildern im Wesentlichen identische zweite Hirnaktivitätssignale erzeugen. Vielmehr kann es ausreichend sein, festzustellen, dass das Betrachten mehrerer Bekanntbilder in reproduzierbarer Weise das Erzeugen von ersten Hirnaktivitätssignalen bewirkt, die zueinander signifikant ähnlich sind, und auch das Betrachten mehrerer Fremdbilder in reproduzierbarer Weise das Erzeugen von zweiten Hirnaktivitätssignalen bewirkt, die zueinander signifikant ähnlich sind, wohingegen jedes der ersten Hirnaktivitätssignale sich signifikant von jedem der zweiten Hirnaktivitätssignale unterscheidet.

Gemäß einer Ausführungsform der Erfindung enthalten die angezeigten Bilder mehrere ermittelte Bekanntbilder und mehrere ermittelte Fremdbilder. Das Authentifizierungsverfahren behandelt die Person als erfolgreich authentisiert, wenn die ersten Hirnaktivitätssignale sich signifikant und in einer über eine Mindestanzahl and ersten und zweiten Hirnaktivitätssignalen hinweg reproduzierbaren Weise unterscheiden von den zweiten Hirnaktivitätssignalen.

Ausführungsformen der Erfindung können den Vorteil haben, dass das Anzeigen mehrerer Bekanntbilder und mehrerer Fremdbilder es einem Authentifizierungsmodul erlaubt, zu prüfen, ob sich die ersten Hirnaktivitätssignale in reproduzierbarer Weise von den zweiten Hirnaktivitätssignalen unterscheiden. Würde nur ein einziges erstes Hirnaktivitätssignal erfasst und mit einem einzigen zweiten Hirnaktivitätssignal verglichen, bestünde ein erhöhtes Risiko, dass das zweite Authentifizierungsverfahren aufgrund messtechnischer Varianzen ein falsch positives oder falsch negatives Ergebnis liefert.

Nach Ausführungsformen der Erfindung beinhaltet der KLHA-Sensor eine Signatur, die von einem KLHA-Signaturschlüssel erzeugt wurde. Die Client-Applikation beinhaltet einen zu dem KLHA-Signaturschlüssel korrespondierenden KLHA-Signaturprüfschlüssel und ist dazu ausgebildet, die Erfassung der ersten und zweiten Hirnaktivitätssignale und/oder deren Verwendung für die Authentifizierung nur dann zuzulassen, wenn eine Prüfung der Signatur des KLHA-Sensors mit dem KLHA-Signaturprüfschlüssel ergibt, dass die KLHA-Sensor-Signatur valide ist.

Nach Ausführungsformen der Erfindung werden die Bilder auf einer digitalen Anzeige des Telekommunikationsgeräts anzuzeigen. Die Verwendung einer digitalen Anzeige hat den Vorteil der größeren apparativen Einfachheit und des Umstands, dass eine solche Anzeige ohnehin auf jedem heute verwendeten Smartphone und auch Tablet-Computern und Notebooks vorhanden ist. Digitale Anzeigen in Form von z.B. LCD-, LED- oder OLED-Bildschirmen gibt es in allen möglichen Größen und Formen.

Nach Ausführungsformen ist das Authentifizierungsmodul dazu konfiguriert, im Zuge des zweiten Authentifizierungsverfahrens die Variabilität verschiedener erster Hirnaktivitätssignale und/oder die Variabilität verschiedener zweiter Hirnaktivitätssignale zu bestimmen. Überschreitet die Variabilität der ersten und/oder zweiten Hirnaktivitätssignalen einen vorbestimmten Grenzwert, bricht das Authentifizierungsmodul das Authentifizierungsverfahren ab, wobei vorzugsweise eine Fehlermeldung ausgegeben wird. Die Person hat sich somit im Authentifizierungsverfahrens nicht authentifiziert. Dies kann vorteilhaft sein, falls die Erfassung von Hirnaktivitätssignalen aufgrund verschiedener Störsignale oder sonstige ungünstige Umstände nur in einer Qualität gelingt, die eine verlässliche Authentifizierung nicht zulassen. In der Regel würde eine starke Störung der vom Sensor erfassten Hirnaktivitätssignale dazu führen, dass der Authentifizierungsversuch der Person im Authentifizierungsverfahren abgelehnt wird und die Person als "nicht berechtigt" gilt. In manchen Fällen kann dies mit negativen Konsequenzen für die Person verbunden sein, wenn zum Beispiel das Authentifizierungsmodul den Account der Person nach einer gewissen Anzahl an fehlgeschlagenen Authentifizierungsversuchen sperrt oder die Option der Authentisierung aus der Ferne dauerhaft deaktiviert. Nach Ausführungsformen der Erfindung führt ein Abbruch des Authentifizierungsverfahrens aufgrund hoher Signalvarianz nicht zu negativen Konsequenzen für die sich authentisierende Person, da der Grund des Scheiterns der Authentifizierung in der hohen Signalvarianz begründet ist.

Nach Ausführungsformen der Erfindung erzeugt das Authentifizierungsmodul für jeden Authentifizierungsvorgang der Person eine zufällige Reihung von einem oder mehreren Bekanntbildern und einem oder mehreren Fremdbildern. Die Spezifikation der Bildsequenz wird so erzeugt, dass sie diese zufällige Reihung widergibt.

Die Anzeige der mehreren Bilder erfolgt derart, dass die chronologischen Sequenz der angezeigten Bilder dieser zufälligen Reihung entspricht. Die Analyse der erfassten ersten und zweiten Hirnaktivitätssignale erfolgt unter Berücksichtigung der chronologischen Sequenz.

Beispielsweise kann das Authentifizierungsmodul dazu konfiguriert sein, jeder Person, die sich authentisieren möchte, eine Sequenz aus sechs Gesichtsbildern anzuzeigen. Die sechs Gesichtsbilder können zum Beispiel immer eine festgelegte Zahl an Bekanntbildern und Fremdbildern umfassen, zum Beispiel immer zwei Bekanntbilder und 4 Fremdbilder. Es ist aber auch möglich, dass der relative Anteil von Fremdbildern und Bekanntbildern bei jedem Authentifizierungsverfahren ebenfalls zufällig neu gewählt wird, solange nur sichergestellt ist, dass die mehreren angezeigten Bilder mindestens ein Bekanntbild, vorzugsweise mehrere Bekanntbilder, und mindestens ein Fremdbild, vorzugsweise mehrere Fremdbilder, beinhalten.

Nach Ausführungsformen der Erfindung dient die Sequenz von Bekanntbildern und Fremdbildern als Challenge im Sinne eines Challenge-Response-Verfahrens bei der Authentifizierung der einen Person. Die Analyse der erfassten Hirnaktivitätssignale umfasst eine Prüfung, ob die zeitliche Reihenfolge der ersten und zweiten Hirnaktivitätssignale die in der Challenge codierte Reihenfolge von Bekanntbildern und Fremdbildern widergibt.

Ausführungsformen der Erfindung können den Vorteil haben, dass hierdurch ein besonders wirksamer Schutz gegen Replay-Angriffen erreicht werden kann. Außerdem können Nachteile, die mit klassischen biometrischen Authentifizierungsverfahren verbunden sind, vermieden und gleichzeitig die Vorteile biometrischer Verfahren genutzt werden. Einmal erfasste und als Referenzsignal verwendete klassische biometrische Authentifizierungsdaten können nicht einfach zurückgesetzt werden, was ein Problem darstellt, sollten diese gestohlen werden. Ausführungsformen der Erfindung nutzen dagegen eine spezifische Sequenz von Hirnaktivitätssignalen zur Authentifizierung, wobei nicht einmalig erfasste, statische biometrische Merkmale einer Person verwendet werden, sondern ein dynamisch erzeugtes Challenge-Response Verfahren, bei dem das Authentifizierungsmodul dynamisch und für jeden Authentifizierungsversuch individuell (z.B. mittels eines Zufallsgenerators) die Sequenz der angezeigten Bekanntbilder und Fremdbilder bestimmt. Falls die in einer Datenbank hinterlegten Bekanntbilder einer Person entwendet werden, sodass unberechtigte Dritte diese durch häufiges Betrachten womöglich zu "Bekanntbildern" machen, können die Bilder einfach ersetzt werden. Die Authentifizierung basiert auf einer Analyse des Wechsels bestimmter Hirnaktivitätssignale, die sich für "Bekanntbilder" und "Fremdbilder" signifikant unterscheiden, wobei es hierfür nicht zwingend notwendig ist, dass ein für eine Person "charakteristisches" Hirnwellenreferenzsignal einmalig erfasst und als Referenz gespeichert wird.

Nach Ausführungsformen der Erfindung behandelt das Authentifizierungsmodul die Person nur dann als erfolgreich authentifiziert, wenn neben einer signifikanten Unterschiedlichkeit der ersten und zweiten Hirnaktivitätssignale folgende weitere Kriterien zutreffen:
- alle ersten Hirnaktivitätssignale, die je während des Anzeigens eines der Bekanntbilder erfasst werden, sind identisch oder hinreichend ähnlich zueinander;
- alle zweiten Hirnaktivitätssignale, die je während des Anzeigens eines der Fremdbilder erfasst werden, sind identisch oder hinreichend ähnlich zueinander.

Ein Vorteil des Authentifizierungsverfahrens gemäß Ausführungsformen der Erfindung kann darin bestehen, dass es nicht notwendig ist, dass die ersten Hirnaktivitätssignale bei verschiedenen Personen identische oder nahezu identische Eigenschaften aufweisen. Die Anmelderin hat beobachtet, dass auch dann, wenn die durch Betrachtung von Bekanntbildern ausgelösten ersten Hirnaktivitätssignale von Person zu Person deutlich unterschiedlich sind, sie dann doch zumindest sehr deutlich unterschiedlich sind von den zweiten Hirnaktivitätssignalen, die beim Betrachten von Fremdbildern in dieser Person erzeugt werden. Unter der Voraussetzung, dass der zu authentifizieren Person eine hinreichend große Anzahl von Fremdbildern und Bekanntbildern gezeigt wird, kann eine Analyse der zeitlichen Abfolge der Eigenschaften der Hirnaktivitätssignale während der Anzeigezeit für eine korrekte Authentifizierungsentscheidung ausreichend sein. Beispielsweise können der zu authentifizierenden Person mindestens zwei, vorzugsweise mindestens 3 Bekanntbilder und mindestens zwei, vorzugsweise mindestens 5 Fremdbilder angezeigt werden. Die Hirnaktivitätssignale der Person werden während der Anzeige der verschiedenen Bekanntbilder und Fremdbilder kontinuierlich erfasst und mit der bekannten zeitlichen Sequenz der Anzeige der Fremdbilder und Bekanntbilder verglichen. Stellt sich heraus, dass die ersten Hirnaktivitätssignale, die erfasst wurden, während die eine Person die Bekanntbilder betrachtete, alle identische oder sehr ähnliche Eigenschaften haben, und dass die zweiten Hirnaktivitätssignale, die erfasst wurden, während die eine Person die Fremdbilder betrachtete, alle identische oder sehr ähnliche Eigenschaften haben, wobei die Eigenschaften der ersten und zweiten Hirnaktivitätssignale signifikant unterschiedlich sind, gilt die eine Person gemäß Ausführungsformen der Erfindung als erfolgreich authentifiziert.

Gemäß manchen Ausführungsformen haben die ersten Hirnaktivitätssignale Eigenschaften, die bei allen Menschen gleich oder sehr ähnlich sind, und auch die zweiten Hirnaktivitätssignale haben Eigenschaften, die bei allen Menschen gleich oder sehr ähnlich sind, wobei die ersten und zweiten Hirnaktivitätssignale der allen Menschen signifikant unterschiedlich sind. In diesem Fall kann die Analyse der erfassten ersten und zweiten Hirnaktivitätssignale im Zuge des Authentifizierungsverfahrens auch einen Vergleich der erfassten ersten und zweiten Hirnaktivitätssignale mit gespeicherten ersten und zweiten Hirnaktivitäts-Referenzsignalen umfassen.

Gemäß einer Ausführungsform der Erfindung ist der KLHA-Sensor herstellerseitig reversibel oder irreversibel integriert in das portable Telekommunikationsgerät. Beispielsweise kann es sich bei dem portablen Telekommunikationsgerät um ein Smartphone handeln, wobei die Smartphonekamera als der KLHA-Sensor verwendet wird. Es ist möglich, dass es sich bei dem portablen Telekommunikationsgerät um ein Standard-Smartphone handelt, wobei die Kamera entweder fest in dem Telekommunikationsgerät verbaut ist oder austauschbar verbaut ist. In manchen Ausführungsformen handelt es sich bei dem portablen Telekommunikationsgerät um ein Smartphone eines bestimmten Typs oder einer bestimmten Baureihe, wobei die Kameras dieses Smartphonetyps bzw. dieser Baureihe auf mechanische, kryptographische und/oder sonstige Weise vor Austausch durch eine andere Kamera geschützt sind.

Gemäß anderen Ausführungsformen ist der KLHA-Sensor reversibel verbunden mit dem Telekommunikationsgerät. Beispielsweise kann der KLHA-Sensor ein elektrischer Sensor sein, der elektrische Hirnaktivitätssignale kontaktlos misst. Solche Sensoren sind derzeit kein übliches Bauteil von konventionellen portablen Telekommunikationsgeräten. Es ist aber möglich, elektrische Sensoren über verschiedene Schnittstellen, z.B. microUSB oder Bluetooth kommunikativ und/oder mechanisch mit dem portablen Telekommunikationsgerät zu koppeln, sodass die von dem KLHA-Sensor erfassten Messwerte über die kommunikative Kopplung an das Telekommunikationsgerät und die auf diesem instanziierte Client-Applikation übertragen werden. Zur Stabilisierung der Verbindung kann eine Halterung, z.B. eine Halterung auf Kunststoffbasis, verwendet werden, welches eine erste Ausnehmung hat, welche das Telekommunikationsgerät mechanisch umschließt ähnlich wie eine konventionelle Handyhülle, und welche eine weitere Ausnehmung hat, um den KLHA-Sensor zu halten und an einer definierten Position relativ zum Telekommunikationsgerät zu halten.

Beispielsweise kann eine Person, die sich aus der Ferne bei einer Behörde eines Staates authentisieren möchte, um sich einen neuen Personalausweis mit aktuellem Passbild ausstellen zu lassen, die aber aufgrund gesundheitlicher Einschränkungen die Räumlichkeiten der Behörde nicht persönlich aufsuchen kann, einen Antrag auf Zusendung eines "Authentifizierungssystems" an die Behörde senden. Der Antrag kann z.B. elektronisch, z.B. Per Mail oder Webformular, oder postalisch erfolgen, wobei die Postanschrift der Person, an welche das Authentifizierungssystem gesendet werden soll, angegeben wird. Die Behörde sendet daraufhin das Authentifizierungssystem an die angegebene Adresse. Das System kann z. B. den KLHA-Sensor und optional auch die besagte Halterung und/oder Kabel zum reversiblen kommunikativen und/oder mechanischen Verbinden des KLHA-Sensors mit dem Telekommunikationsgerät umfassen. Die Person kann das System nutzen wie hier für Ausführungsformen der Erfindung beschrieben. Beispielsweise kann nach einer erfolgreichen Authentisierung der Person gegenüber dem Authentifizierungsmodul die Client-Applikation dazu konfiguriert sein, ein oder mehrere Gesichtsbilder von der Person über die Kamera das Telekommunikationsgeräts zu erfassen und über eine Mobilfunkverbindung oder über eine sonstige Netzwerkverbindung, z.B. WLAN, die erfassten Gesichtsbilder an das von der Behörde betriebene Server-Computersystem mit der Server-Applikation senden. Vor oder nach der Übertragung kann eine Softwarefunktion der Client-Applikation und/oder der Serverapplikation die Qualität der Gesichtsbilder testen und die Bilder zurückweisen und/oder die Person zur Erneuten Erfassung der Gesichtsbilder auffordern, sollte die Qualität nicht ausreichen. Die Server-Applikation kann die Gesichtsbilder sodann an eine Software zur Personalisierung von Ausweisdokumenten weiterleiten. Die Person kann das Authentifizierungssystem nach der Benutzung an eine Postanschrift der Behörde zurücksenden. Somit kann für die Person ein neuer Ausweis mit einem aktuellen Gesichtsbild erstellt werden, von dem sicher davon auszugehen ist, dass es das Gesicht derjenigen Person zeigt, die sich in der Vergangenheit bei der Behörde bereits unter einem bestimmten Namen und unter einer bestimmten Anschrift registriert hat.

Die von dem KLHA-Sensor erfassten Hirnaktivitätssignale können also je nach Ausführungsform z. B. Beispiel drahtgebunden (zum Beispiel per Leiterbahn auf einer Platine, per microUSB Kabel) oder über eine drahtlose Schnittstelle (zum Beispiel Bluetooth) an die Client-Applikation des Telekommunikationsgerätes übertragen werden. Von dort werden die Signale an das Authentifizierungsmodul übertragen, wobei das Authentifizierungsmodul entweder Bestandteil der Client-Applikation oder der Server-Applikation ist.

Das Authentifizierungsmodul kann dazu ausgebildet sein, die Hirnaktivitätssignale, die von dem KLHA-Sensor empfangen werden, zu korrelieren mit weiteren Messdaten. Beispielsweise kann die Kamera des Telekommunikationsgeräts die Position und/oder Orientierung des Kopfes der einen Person im Raum erkennen und an das Authentifizierungsmodul weiterleiten. Änderungen der Position und/Orientierung des Kopfes können also mit Signaländerungen korreliert werden. Dies kann hilfreich sein, denn nach Ausführungsformen der Erfindung verwendet das Authentifizierungsmodul diese weiteren Messdaten und die erfassten Korrelationen, um Störsignale, die durch Bewegung des Kopfes im Raum während der Authentifizierung erzeugt werden, herauszufiltern, sodass nur oder vorwiegend diejenigen Messsignale übrig bleiben, die ursächlich auf die Betrachtung von Fremdbildern und Bekanntbildern bzw. auf die Beobachtung eines Bildwechsels zurückzuführen sind. Auch Vibrationen des Sensors, die darauf beruhen, dass Vibrationen, die z.B. durch Geh- und Dreh-Bewegungen der Person im Raum während des Authentifizierungsprozesses erzeugt werden und durch mechanische Kopplung an den Sensor übertragen werden, können bei manchen Sensortypen automatisch erfasst werden, z.B. mittels des als KLHA Sensor verwendeten elektrischen Sensors oder eines weiteren elektrischen, gyroskopischen oder optischen Sensors des Telekommunikationsgerätes. Zusätzlich oder alternativ dazu kann die Kamera des Telekommunikationsgeräts eine Serie von Gesichtsbildern der sich authentisierenden Person über einen Zeitraum erfassen und diese Gesichtsbilder an das Authentifizierungsmodul weiterleiten. Durch Analyse der zeitlichen Serie der Gesichtsbilder kann das Authentifizierungsmodul beispielsweise erkennen, ob und wann die eine Person mit den Augen blinzelt und/oder ob und wann die Person eine deutliche Emotion (Freude, Angst, Schreck, Unsicherheit) erlebt, die zum Beispiel anhand des Gesichtsausdrucks erkennbar ist. Hirnaktivitätssignale, die mit solchen Emotionen einhergehen, können die durch die Betrachtung der Bekanntbilder und Fremdbilder erzeugten Hirnaktivitätssignale überlagern und zu Fehlern führen. Auch die mit starken Emotionen einhergehenden Hirnaktivitätssignale werden gemäß Ausführungsformen der Erfindung von dem Authentifizierungsmodul automatisch als Störsignale erkannt und herausgefiltert.

Nach Ausführungsformen der Erfindung hat das Authentifizierungsmodul Zugriff auf eine Bilddatenbank, in welcher Fremdbilder und Bekanntbilder gespeichert sind. Die Fremdbilder und Bekanntbilder sind so in der Bilddatenbank gespeichert, dass zumindest die Bekanntbilder und optional auch die Fremdbilder je mit einem Nutzerprofil verknüpft gespeichert sind. Die Fremdbilder können im Gegensatz zu den Bekanntbildern auch mit mehreren Nutzerprofilen verknüpft gespeichert sein. Ein Bekanntbild für einen Nutzer kann als Fremdbild für andere Nutzer dienen. Jedes Nutzerprofil repräsentiert eine Person, die sich bereits bei der Server-Applikation registriert hat und für welche (z.B. während des Registrierungsprozesses) ein oder mehrere Bekanntbilder erfasst wurden.

Beispielsweise kann die Bilddatenbank Bekanntbilder enthalten, die Gesichtsbilder von Personen sind, die sich bereits erfolgreich bei der Server-Applikation registriert haben und als vertrauenswürdig gelten. Beispielsweise kann es sich bei den Gesichtsbildern um Bilder handeln, die in einer sicheren Umgebung erfasst wurden, z.B. innerhalb der Räumlichkeiten einer Behörde oder einer Firma, die das Authentifizierungsverfahren durchführt. Dies kann Morphingangriffe verhindern. Zusätzlich oder alternativ dazu kann es sich bei den Motiven der Bekanntbilder aber auch um physische Objekte jeglicher Art handeln, die nur einer bestimmten, berechtigten Person bekannt sind, der bzw. denen die Bekanntbilder in der Datenbank auch zugewiesen sind, wohingegen diese Motive für alle oder die allermeisten anderen Personen unbekannt oder zumindest deutlich weniger bekannt sind. Beispielsweise können die Mitarbeiter einer Firma verschiedenen Arbeitsgruppen oder Abteilungen angehören, die selektiv je nach Gruppen- bzw. Abteilungszugehörigkeit an unterschiedlichen Standorten und/oder in unterschiedlichen Gebäuden oder Räumen arbeiten. Bilder, die Objekte innerhalb von Gebäuden oder Räumen zeigen, in welchem nur eine bestimmte Personengruppe arbeitet, sind Bekanntbilder für die Personen dieser Gruppe, und gleichzeitig Fremdbilder für Personen, die diese Gebäude und Räume nicht betreten (vorausgesetzt, die gezeigten Objekte sind nicht in beiden Gebäuden vorhanden). Gemäß einer weiteren Ausführungsform kann es sich bei den einer Person zugeordneten Bekanntbildern auch um Bilder von Familienangehörigen, Haustieren, Einrichtungsgegenständen der von der Person bewohnten Wohnung oder von Fahrzeugen der Person handeln. Vorzugsweise handelt es sich jedoch bei den Bekanntbildern, die einer Person über deren Nutzerprofil zugeordnet ist, um Gesichtsbilder oder Ganzkörperbilder dieser Person (auch "Selbstbild" genannt).

Beispielsweise kann es sich bei der Bilddatenbank um eine Datenbank mit Gesichtsbildern von Bürgern eines Staates, von Mitarbeitern einer Firma oder von sonstigen Mitgliedern beliebiger Organisationen handeln. Beispielsweise kann die Person, die sich authentisieren möchte, im Zuge des ersten Authentifizierungsverfahrens ihren Namen eingeben oder das Authentifizierungsmodul erkennt auf andere Weise, zum Beispiel durch automatische Gesichtserkennung, welche aus einer Vielzahl von registrierten Personen (zum Beispiel Mitarbeitern) sich eben authentifizieren möchte. Auf Basis dieser Information durchsucht das Authentifizierungsmodul die Bilddatenbank und ermittelt ein oder mehrere Bekanntbilder, die in der Datenbank verknüpft mit dem eingegebenen Namen bzw. einem automatisch erkannten Identifikator dieser Person gespeichert sind. Bei den Bekanntbildern kann es sich z.B. um Gesichtsbilder dieser registrierten Person handeln. Im Zuge des Authentifizierungsprozesses kann es z.B. darum gehen, dass sich eine Person als die Person ("Vertrauensperson") ausweist, als welche sie sich vormals bei dem Authentifizierungsmodul registriert hatte.

Die Zuordnung von Bekanntbildern zu Personenprofilen ("Nutzerprofilen") kann z.B. über einen sekundären Schlüssel einer relationalen Datenbank realisiert sein, welche Nutzerprofile registrierter Personen je mit einem oder mehreren digitalen Bekanntbildern verknüpft.

Gemäß Ausführungsformen ermittelt das Authentifizierungsmodul ein oder mehrere Fremdbilder für die sich aktuell aus der Ferne authentifizierende Person. Die Fremdbilder können z.B. Gesichter von anderen Personen abbilden, die nicht die Person darstellen, die sich eben authentifizieren möchte. Bei den anderen Personen kann es sich um andere Bürger des gleichen oder eines anderen Staates handeln, oder um andere Mitarbeiter bzw. Mitglieder der Organisation handeln. In diesem Fall kann ein bestimmtes Gesichtsbild sowohl als Bekanntbild als auch als Fremdbild von dem Authentifizierungsmodul verwendet werden je nachdem, welche Person sich gerade authentifizieren möchte.

In anderen Ausführungsformen zeigen die in der Datenbank gespeicherten Fremdbilder Personen, die nicht Mitglied der besagten Firma bzw. Organisation sind, und/oder die nicht bei dem Server-Applikation registriert sind, die also niemals bei einem Authentifizierungsverfahren für eine registrierte Person als Bekanntbild dienen können, da sie nicht das Gesicht einer registrierten Person abbilden. Die Verwendung von Gesichtsbildern von Nicht-registrierten Personen als Fremdbilder hat den Vorteil, dass sichergestellt ist, dass das in einem Fremdbild dargestellte Gesicht der sich authentisierenden Person sicherlich nicht bekannt ist, wohingegen im Hinblick auf Gesichtsbilder von Mitarbeitern im Einzelfall ein Wiedererkennungseffekt in den Hirnaktivitätssignalen erkennbar sein kann, wenn es sich zum Beispiel um einen Kollegen handelt, dem der Mitarbeiter täglich begegnet. Die Verwendung von Gesichtsbildern Organisations-externer Personen als Fremdbilder kann den Vorteil haben, dass automatisch eine recht große Menge unterschiedlicher Gesichtsbilder verfügbar ist, z.B. in entsprechenden kommerziellen Bilddatenbanken.

Gemäß manchen Ausführungsformen kann es sich bei den Fremdbildern aber auch um Bilder handeln, die physische Objekte jeglicher Art (Personen, Tiere, Gebäude, Landschaften, Fahrzeuge, Gegenstände, etc.) darstellen, von welchen der Betreiber des Authentifizierungsmoduls mit hinreichend hoher Wahrscheinlichkeit davon ausgehen kann, dass diese physischen Objekte keine Person, die als vertrauenswürdige Person bei dem Authentifizierungsmodul registriert sind und ein entsprechendes Nutzerprofil haben, jemals gesehen hat oder zumindest nicht regelmäßig über einen längeren Zeitraum (von z.B. mehreren Wochen, mehreren Monaten oder gar mehreren Jahren) gesehen hat. Beispielsweise können die dargestellten Objekte in einer Computersimulation erzeugt worden sein, sodass allein hierdurch schon ausgeschlossen ist, dass die sich authentisierende Person das entsprechende Motiv jemals zuvor gesehen hat. Die Bekanntbilder sind in diesem Fall vorzugsweise Bilder, die den gleichen Typ von physischen Objekte abbilden (z.B. Tiere einer bestimmten Tierart, Gebäude, Landschaften, Fahrzeuge, Gegenstände, etc.), wobei hier der Betreiber des Authentifizierungsmoduls mit hinreichend hoher Wahrscheinlichkeit davon ausgehen kann, dass diese physischen Objekte der vertrauenswürdigen und registrierten Person, der das Bekanntbild zugeordnet ist, regelmäßig über einen längeren Zeitraum (von z.B. mehreren Wochen, mehreren Monaten oder gar mehreren Jahren) gesehen hat. Typischerweise ist das bei Selbstbildern immer der Fall.

Vorzugsweise ist der Typ des Motives, das in den Bekanntbildern und den Fremdbildern der Person im Zuge des Authentifizierungsverfahren gezeigt wird, identisch, lediglich der Bekanntheitsgrad des in den Bekanntbildern und Fremdbildern jeweils gezeigten Motivs für den sich authentisierenden Nutzer ist unterschiedlich. Beispielsweise werden in ersten Ausführungsformen der Erfindung Fremdbilder verwendet, die Gesichter fremder Personen zeigen, und es werden entsprechend Bekanntbilder verwendet, die Gesichtsbilder sind und die dem Nutzerprofil der Person, die sich authentisieren möchte, zugewiesen sind. Beispielsweise werden in zweiten Ausführungsformen der Erfindung Fremdbilder verwendet, die ausgefallene Gegenstände wie z.B. Vasen oder Kunstwerke zeigen, die allgemein unbekannt sind und sich auch nicht in den Arbeitsräumlichkeiten befinden, in denen die Person, die sich authentisieren möchte, regelmäßig arbeitet, und es werden entsprechende Bekanntbilder von Gegenständen des gleichen Typs (Vasen, Kunstwerke, etc.) verwendet, die sich ausschließlich in den Arbeitsräumlichkeiten befinden, in denen die besagte Person regelmäßig arbeitet. Beispielsweise werden in dritten Ausführungsformen der Erfindung Fremdbilder verwendet, die Haustiere wie z.B. Hunde oder Katzen zeigen, die allgemein unbekannt sind (z.B. Bilder entsprechender Tiere aus anderen Ländern oder weit entfernter Orte), und es werden entsprechende Bekanntbilder von physischen Objekten des gleichen Typs (Hunde, Katzen, etc.) verwendet, die ein Haustier der Person abbilden, die sich im ersten Authentifizierungsverfahren erfolgreich authentifiziert hat.

Die Verwendung typgleicher Bildmotive bei Bekanntbildern und Fremdbildern kann den Vorteil haben, dass Unterschiede der ersten und zweiten Hirnaktivitätssignale ausschließlich auf den unterschiedlichen Bekanntheitsgrad zurückzuführen sind und nicht auf die Unterschiedlichkeit der angezeigten Bildmotive (Gesicht, Haus, Kunstgegenstand, Tier, etc.).

Nach Ausführungsformen der Erfindung wird die Analyse ausschließlich auf Basis der ersten und zweiten Hirnaktivitätssignale und auf Basis der Anzeigesequenz der Bekanntbilder und Fremdbilder und optional zusätzlich auf Basis typisierter (nicht personen-individuell erhobener) Referenzdaten durchgeführt. Dieses Verfahren kann vorteilhaft sein, weil das Verfahren keine vorausgehende Speicherung von sensiblen, biometrischen, personenbezogenen Daten beansprucht. Folglich ist das Verfahren auch in Situationen einsetzbar in denen eine Speicherung personenbezogener, biometrischer Daten unerwünscht ist. Außerdem wird hierdurch die Privatsphäre der sich authentifizierenden Personen geschützt. Gegenüber anderen biometrischen Authentifizierungsverfahren, die aus dem Stand der Technik bekannt sind, ist das Verfahren zudem noch sicherer gegenüber einem Angreifer, denn biometrische Daten, die nicht gespeichert werden müssen, können nicht gestohlen werden.

Nach Ausführungsformen der Erfindung umfasst das Verfahren außerdem die Löschung der empfangenen Hirnaktivitätssignale nach dem Authentifizierungsvorgang. Beispielsweise kann die Löschung sämtliche ersten und zweiten Hirnaktivitätssignale und ggf. von diesen erstellten Kopien umfassen und z.B. von der Authentifizierungssoftware durchgeführt werden. Diese Ausführungsform der Erfindung kann vorteilhaft sein, weil dadurch die Privatsphäre der zu authentifizierenden Person geschützt wird. Hierdurch kann das Verfahren auch in Situationen eingesetzt werden bei denen eine Speicherung personenbezogener, biometrischer Daten unerwünscht ist. Außerdem ist das Verfahren gegenüber anderen biometrischen Authentifizierungsverfahren, die aus dem Stand der Technik bekannt sind, noch sicherer gegenüber einem Angreifer, denn biometrische Daten, die nicht gespeichert werden, können nicht gestohlen werden.

### Elektrischer Sensor

Nach Ausführungsformen der Erfindung ist der KLHA -Sensor ein elektrischer Sensor.

Nach Ausführungsformen der Erfindung ist der elektrische Sensor dazu ausgebildet, die ersten und/oder zweiten Hirnaktivitätssignale durch Messung von Ladungsänderungen und/oder von Ladungsumverteilungen zu erfassen. Zusätzlich oder alternativ dazu ist der elektrische Sensor dazu ausgebildet, die Amplitude der ersten und/oder zweiten Hirnaktivitätssignale und/oder die Änderung der Amplitude während eines Zeitintervalls zu erfassen.

Insbesondere kann dieser Sensor dazu ausgebildet sein, Ladungsänderungen und/oder Ladungsumverteilungen in der Nähe des Sensors zu messen. Der Sensor kann z.B. als ein Sensor ausgebildet sein, der einen Instrumentenverstärker oder Differenzverstärker mit hoher Gleichtaktunterdrückung beinhaltet, wobei der Verstärker mit Messelektroden gekoppelt wird.

Beispielsweise kann der elektrische Sensor in eine spezielle Halterung integriert sein oder in eine solche reversibel integrierbar ausgebildet sein. Diese Halterung beinhaltet neben einer Ausnehmung oder Halteelementen für den KLHA-Sensor auch eine Ausnehmung und/oder Halteelemente für das Telekommunikationsgerät. Die Person kann das Smartphone nun vor das eigene Gesicht halten, z.B. in etwa in einem Abstand einer Armlänge, wobei die Client-Applikation dazu ausgebildet ist, hierbei die von der Kamera aktuell erfassten Objekte über die Anzeige des Telekommunikationsgerätes auszugeben um der Person eine Rückmeldung darüber zu geben, ob das eigene Gesicht aktuell von der Kamera erfasst wird (falls dies von der Client-Applikation für erforderlich gehalten wird, z.B. um Gesichtsausdrücke zum Zwecke der Rauschunterdrückung zu erfassen). Die Person kann vorzugsweise während des Authentifizierungsprozesses ihren Kopf zumindest innerhalb eines gewissen Radius frei bewegen und drehen, und es ist nicht erforderlich, dass die Person Elektroden an bestimmten Bereichen des Kopfes platziert, damit Hirnaktivitätssignale erfasst werden können.

Der elektrische Sensor kann zum Beispiel einen Hochpassfilter beinhalten oder an diesen gekoppelt sein der Signalkomponenten geringer Frequenz zurückhält. Beispielsweise kann der Hochpassfilter Hirnaktivitätssignale mit einer Frequenz von mindestens einem Herz ungehindert passieren lassen, aber Signale mit einer Frequenz von unter einem Herz abschwächen oder komplett herausfiltern. Hierdurch kann Hintergrundrauschen reduziert werden.

Der Verstärker kann es ermöglichen, Hirnaktivitätssignale mit einer Amplitude ab 10 Nanovolt zu erfassen. Ein elektrischer Sensor mit einer derartigen Signalverstärkung ist um ein Vielfaches sensitiver als konventionelle, kontaktbehaftete EEG Technologie, die in der Regel Hirnaktivitätssignale erst ab einer Amplitude von mindestens einigen Mikrovolt erkennen kann.

Gemäß Ausführungsformen der Erfindung beinhaltet das Authentifizierungsmodul ein Modul zur Datenvorverarbeitung , das dazu ausgebildet ist, Störsignale zu erkennen und durch automatische Filterung zu minimieren, sodass die ersten und zweiten Hirnaktivitätssignale als störungsminimierte, "entrauschte" erste und zweite Hirnaktivitätssignale bereitgestellt und von einem anderen Modul des Authentifizierungsmoduls weiterverarbeitet werden. Die Störsignale können z.B. durch Vibrationen des KLHA-Sensors, durch den Herzschlag der einen Person, durch Ändern der Position und/oder Ausrichtung des Kopfes der einen Person im Raum und/oder durch Blinzelbewegungen oder starke Emotionen der einen Person hervorgerufen werden.

Beispiele für geeignete Hochpassfilter und Signalverstärker sind in der internationalen Patentanmeldung WO 2017/189748 beschrieben.

Im Stand der Technik sind verschiedene Sensoren zur kontaktlosen Erfassung von Hirnaktivitätssignalen, insbesondere elektrische Sensoren, bekannt, die allerdings nicht zur Authentifizierung von Personen verwendet wurden.

Beispielsweise beschreibt die internationale Patentanmeldung WO 2017/189748 verschiedene Typen geeigneter Sensoren. Der elektrische Sensor kann beispielsweise in Form einer kontaktlosen Elektrode, zum Beispiel einer trockenen Elektrode, die kein Kontaktgel benötigt und die nicht in physischen Kontakt mit der einen Person ist, ausgebildet sein. Derartige Sensoren werden auch als "Biopotentialsensoren" bezeichnet. Die Größe und Form dieser Elektrode kann je nach Anwendungsszenario sehr unterschiedlich ausgebildet sein. Beispielsweise kann die Elektrode die Form mehrerer konzentrischer Ringe aufweisen, oder die Form mehrerer parallel zueinander angeordnete Stäbe. Vorzugsweise ist der elektrische Sensor als Array mehrerer Elektroden ausgebildet, sodass Hirnaktivitätssignale von mehreren Bereichen des Kopfes unterschiedliche Bereiche der Elektrode in unterschiedlicher Stärke erreichen. Dies erlaubt es dem elektrischen Sensor, zusätzliche Informationen bezüglich der Hirnregion, die ein Hirnaktivitätssignale erzeugt, zu erfassen. Beispielsweise kann dieser Array 5-6 Einzelelektroden beinhalten (eine im Vergleich zu 30-60 Kontaktelektroden bei einem konventionellen EEG immer noch geringe Zahl). Durch die Verwendung von elektrischen Sensoren mit mehreren Einzelelektroden bzw. einer räumlichen Ausdehnung von vorzugsweise mehr als 5 cm in zwei Dimensionen kann auch die Abhängigkeit der Signalstärke vom Abstand und Ausrichtung des Kopfes der zu authentifizierenden Person erfasst werden. Dies ermöglicht es zum Beispiel festzustellen, ob die zu authentifizierenden Person auch tatsächlich auf die Anzeige des Telekommunikationsgeräts blickt, auf welcher aktuell die Fremdbilder bzw. Bekanntbilder angezeigt werden (und nicht zum Beispiel auf ein heimlich mitgebrachtes Selbst-Foto, dessen Anblick es einem Maskenträger ermöglichen würde, Hirnaktivitätssignale, die typisch für die Betrachtung eines Bekanntbilds sind, zu erzeugen, obwohl das offiziell gezeigte Bekanntbild (Spiegelbild) nur die Maske zeigt.

Die Doktorarbeit "Kapazitive Elektroden zur Messung bioelektrischer Signale" von Martin Oehler, 2009, Institut für Elektrische Messtechnik und Grundlagen der Elektrotechnik, und dort insbesondere das Kapitel 3.2, beschreibt weitere Beispiele für elektrische Sensoren, die zur kontaktlosen Erfassung von Hirnstromsignalen (und Herzschlagsignalen) geeignet sind, sowie Beispiele dafür, wie die Verstärkung und der Hochpassfilter ausgebildet sein können. Ein elektrischer Sensor kann z.B. eine oder mehrere Elektroden umfassen und folgende Elemente beinhalten: eine oder mehrere Elektroden, wobei die Elektrodenfläche, die nach außen hin isoliert sein kann, das eigentliche Signal erfasst. Die Elektrode(n) ist/sind mit dem zweiten wichtigen Teil, der Elektronik, verbunden, welche das Signal hochimpedant aufnimmt und verstärkt. Das dritte Element des elektrischen Sensors ist die Abschirmung, auch "Filter" genannt, die sowohl aktiv als auch passiv ausgeführt sein kann.

Die Funktion der kapazitiven Elektrode basiert gemäß einer Ausführungsform der Erfindung auf einer extrem hochohmigen Messung des kapazitiv eingekoppelten Hirnaktivitätssignals ("Biosignals"). Die Elektrodenfläche und der Elektrodenkörper bilden einen Koppelkondensator. Die hochohmige Messung des Eingangssignals resultiert aus der Eingangscharakteristik, die sich aus dem Koppelkondensator und dem Eingangswiderstand der Schaltung ergibt. Dieser Eingang verhält sich wie ein RC-Hochpass für das eingekoppelte Signal.

Gemäß Ausführungsformen der Erfindung umfasst das Authentifizierungsverfahren eine Positionierung des Telekommunikationsgeräts einschließlich des mit diesem verbundenen KLHA-Sensors in räumlicher Nähe zum Kopf der zu authentifizierenden Person. Beispielsweise kann die oben beschriebene Halterung für das Telekommunikationsgerät und den KLHA-Sensor eine Halterung sein, die dazu ausgebildet ist, auf einer ebenen horizontalen Fläche stabil zu stehen und das Telekommunikationsgerät so aufzunehmen und stabil zu halten, dass die Anzeige des Telekommunikationsgeräts von einer Person in räumlicher Nähe zu dieser Halterung bzw. zu diesem KLHA-Sensor gut gesehen werden kann.

Unter der räumlichen Nähe wird hier vorzugsweise ein Abstand von weniger als 100 cm, in manchen Ausführungsformen weniger als 70cm, in manchen Ausführungsformen von weniger als 30 cm, verstanden. Diese Abstände sind insbesondere beim elektrischen Sensor vorteilhaft, beim optischen Sensor kann der die räumliche Nähe definierende Abstand auch größer sein, z.B. mehrere Meter, sofern gewährleistet ist, dass die räumliche Auflösung des optischen Sensors eine bildanalysegestützte Erkennung von Hirnaktivitätssignalen wie z.B. Pupillendurchmesseränderungen zulässt.

Die von dem elektrischen Sensor erfassten Hirnaktivitätssignale können auch als Hirnstromsignale bezeichnet werden. Sie werden direkt durch elektrochemische Aktivitäten in den Zellen des Gehirns verursacht und geben Aufschluss über bewusste und/oder unbewusste Denkprozesse und Aktivitäten des Gehirns zum Zeitpunkt der Erfassung dieser Signale durch den Sensor.

Bei den von einem elektrischen Sensor erfassten Hirnaktivitätssignale kann es sich insbesondere um Signale im Frequenzbereich von (von 0,1 bis zu 40 Hz) handeln.

Nach Ausführungsformen ist der elektrische Sensor dazu ausgebildet, die ersten und/oder zweiten Hirnaktivitätssignale durch Messung von Ladungsänderungen bzw. Ladungsumverteilungen in der Nähe des Sensors zu erfassen. Unter der Nähe wird hier vorzugsweise ein Bereich verstanden, der durch einen Abstand von dem elektrischen Sensor von weniger als 100 cm gekennzeichnet ist. Gemäß Ausführungsformen der Erfindung umfasst die räumliche Nähe einen Bereich mit einem Abstand von 1 cm bis 100 cm von dem Sensor, in manchen Ausführungsformen von 1 cm bis 70 cm vom Sensor, in anderen Ausführungsformen von 1 cm bis 60 cm. In manchen Fällen wird der Sensor so positioniert, dass er sich in einem Abstand von 15-60 cm vom Kopf der Person entfernt befindet. Die exakte Positionierung kann vom Sensortyp abhängen und/oder davon, wie sich die Person während des zweiten Authentifizierungsverfahrens bewegen oder positionieren soll, um auf die Anzeige zu blicken, und wieviel Bewegungsfreiheit dem Kopf der Person während des Authentifizierungsprozesses eingeräumt werden soll.

Aus dem erfassten Signal können die Amplitude und/oder der zeitliche Amplitudenverlauf der ersten und/oder zweiten Hirnaktivitätssignale ermittelt werden.

Nach Ausführungsformen der Erfindung ist der elektrische Sensor dazu ausgebildet, die Amplitude der ersten und/oder zweiten Hirnaktivitätssignale und/oder die Änderung der Amplitude während eines Zeitintervalls zu erfassen.

Gemäß einer ersten, einfachen Ausführungsform umfasst die Analyse der erfassten ersten und zweiten Hirnaktivitätssignale eine Feststellung, ob die Amplitude der ersten Hirnaktivitätssignale, also der vom elektrischen Sensor gemessenen Höhe der Ladungsänderungen und/oder Ladungsumverteilungen in der Nähe des Sensors, beim Betrachten eines Bekanntbildes, höher ist als die Amplitude der zweiten Hirnaktivitätssignale, also der vom elektrischen Sensor beim Betrachten eines Fremdbildes gemessenen Höhe der Ladungsänderungen und/oder Ladungsumverteilungen in der Nähe des Sensors. Ist dies der Fall, entspricht das gemessene Muster der ersten und zweiten Hirnaktivitätssignale dem Erwarteten und die Person wird als erfolgreich authentifiziert betrachtet.

Gemäß einer zweiten, komplexeren Ausführungsform umfasst die Analyse der erfassten Hirnaktivitätssignale einen Vergleich von Amplitudenverlaufsprofilen der ersten Hirnaktivitätssignale und von Amplitudenverlaufsprofilen der zweiten Hirnaktivitätssignale untereinander und/oder mit Amplitudenverlaufsprofilen von ersten und zweiten Referenz-Hirnaktivitätssignalen, um festzustellen, ob sich die ersten Hirnaktivitätssignale signifikant von den zweiten Hirnaktivitätssignalen unterscheiden.

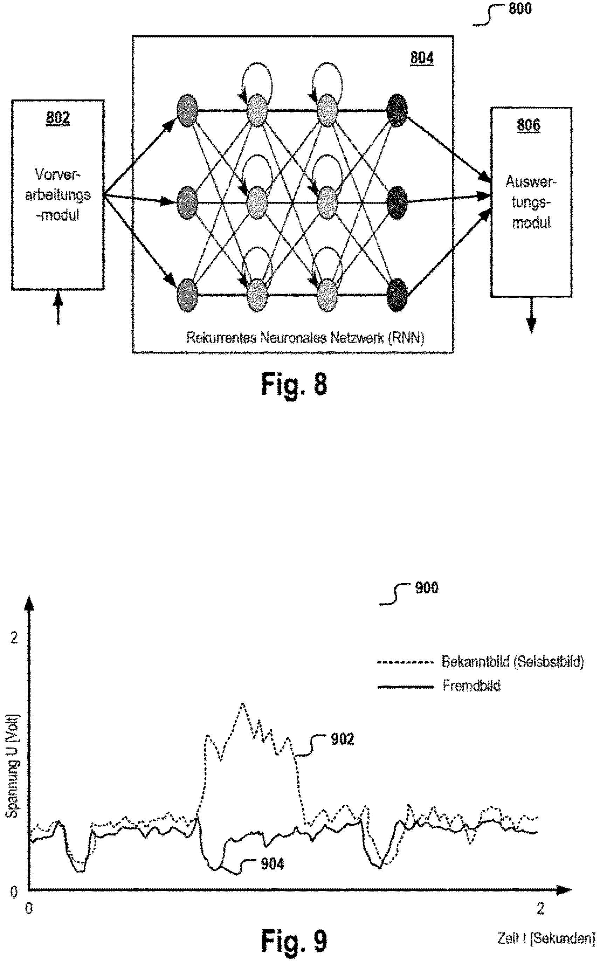

Nach Ausführungsformen sind die ersten Hirnaktivitätssignale identisch oder ähnlich zu den Hirnaktivitätssignalen gemäß Kurve 902 in Figur 9. Zusätzlich oder alternativ dazu sind die zweiten Hirnaktivitätssignale identisch oder ähnlich zu den Hirnaktivitätssignalen gemäß Kurve 904 in Figur 9.

Der Ausdruck "identisch oder ähnlich" kann insbesondere bedeuten, "identisch im Rahmen der jeweiligen Messungenauigkeit des Sensors oder so ähnlich, dass ein vordefiniertes Mindestähnlichkeitskriterium erfüllt ist". Bei dem vordefinierten Mindestähnlichkeitskriterium kann es sich z.B. einen vordefinierten Mindestwert für ein Ähnlichkeitsmaß (Kurvenabstand, Integral der Differenzfläche der Hirnaktivitätssignalprofile über einen Zeitraum, etc.) handeln.

Das bedeutet, dass bei vielen Menschen innerhalb eines Zeitraums von ca. 100 bis 2000 ms, insbesondere von ca. 300 - 1500 ms, insbesondere von 500 bis 1000 ms nach dem Beginn des Betrachtens eines Bekanntbildes, insbesondere eines Bildes, das das "eigene" Gesicht des Betrachters darstellt ("Selbstbild"), eine deutliche Verstärkung des Signals (Amplitudenzuwachs um ca. 100% relativ zum Ausgangszustand) beobachtbar ist, wohingegen beim Betrachten eines Fremdbildes dieser Anstieg ausbleibt oder sich die Signalstärke im Zeitraum von ca. 500-700 ms nach dem Beginn des Betrachtens des Fremdbildes sogar verringert.

Gemäß bevorzugten Ausführungsformen umfasst die Analyse lediglich einen Vergleich der Amplituden und zeitlichen Amplitudenprofile der ersten Hirnaktivitätssignalen und zweiten Hirnaktivitätssignalen jeweils untereinander und mit dem anderen Hirnaktivitätssignaltyp unter Berücksichtigung der bekannten zeitlichen Abfolge der Anzeige der ein oder mehreren Bekanntbilder und der ein oder mehreren Fremdbilder. Hirnaktivitätssignale, die während der Anzeige eines Bekanntbilds erfasst werden, werden als erste Hirnaktivitätssignale erfasst. Hirnaktivitätssignale, die während der Anzeige eines Fremdbilds erfasst werden, werden als zweite Hirnaktivitätssignale erfasst. Wenn die Person wirklich die Person ist, die auf dem angezeigten Bekanntbild abgebildet ist, ist also zu erwarten, dass alle erfassten ersten Hirnaktivitätssignale identische oder sehr ähnliche Eigenschaften (Amplitude, Amplitudenverlauf über die Zeit, ggf. weitere Eigenschaften des Signals wie z.B. Frequenz) haben. Ebenso ist zu erwarten, dass die erfassten zweiten Hirnaktivitätssignale identische oder zumindest ähnliche Eigenschaften haben, wobei sich allerdings die Eigenschaften der ersten und der zweiten Hirnaktivitätssignale signifikant unterscheiden. Versucht dagegen eine andere Person, sich als diejenige Person zu authentifizieren, die sich ursprünglich bei der Behörde registriert hat, so werden die von dem Authentifizierungsmodul generierte Sequenz aus Fremdbildern und Bekanntbildern im Hirn dieser Person nicht das erwartete Muster (Challenge) an zweiten und ersten Hirnaktivitätssignalen erzeugen, denn auch die Bekanntbilder werden für diese unberechtigte Person als Fremdbilder wahrgenommen und führen zu der Erzeugung von Hirnaktivitätssignalen, die für alle Bilder ähnlich aussehen (zweite Hirnaktivitätssignale auch da, wo erste Hirnaktivitätssignale erwartet wurden).

In diesem Fall eines betrügerischen Authentifizierungsversuches haben die ersten Hirnaktivitätssignale identische o. ä. Eigenschaften wie die zweiten Hirnaktivitätssignale. In diesem Fall behandelt das Authentifizierungsmodul die Authentifizierung der Person aus der Ferne als gescheitert.

Nach Ausführungsformen umfasst die Analyse der erfassten Hirnaktivitätssignale einen Vergleich von Frequenz und Amplitudenverlauf der ersten Hirnaktivitätssignale und zweiten Hirnaktivitätssignale untereinander und/oder mit ersten und zweiten Referenz-Hirnaktivitätssignalen, um festzustellen, ob sich die ersten Hirnaktivitätssignale signifikant von den zweiten Hirnaktivitätssignalen unterscheiden. Beispielsweise kann das Authentifizierungsmodul dazu konfiguriert sein, einen Ähnlichkeitsscore für ein bestimmtes erstes (oder zweites) Hirnaktivitätssignal in Bezug auf ein erstes (oder zweites) Referenz-Hirnaktivitätssignal berechnen, z.B. anhand geometrischer Abstände entsprechender Hirnaktivitätssignalkurven in einem Kurvendiagramm. Ist der berechnete Ähnlichkeitsscore, der z.B. als inverser Abstandsscore der verglichenen Signalprofile oder Signale berechnet werden kann, unterhalb eines vordefinierten Mindestschwellenwerts gelten die verglichenen Signale als signifikant unterschiedlich.

### Optischer Sensor

Nach Ausführungsformen der Erfindung ist der KLHA-Sensor ein optischer Sensor, insbesondere eine IR-Kamera oder eine IR-Videokamera oder eine Kamera oder Videokamera für Licht im sichtbaren Wellenlängenbereich.

Nach manchen Ausführungsformen handelt es sich bei dem KLHA-Sensor um eine herstellerseitig in das Telekommunikationsgerät integrierte Kamera. Eine herstellerseitig in das Telekommunikationsgerät integrierte Kamera ist ein Beispiel für einen irreversibel am Telekommunikationsgerät befestigten KLHA-Sensor.

Entsprechende Ausführungsformen können den Vorteil haben, dass es nicht erforderlich ist, zusätzliche Hardware zu beschaffen und mit dem Telekommunikationsgerät zu verbinden. Vielmehr ist der als KLHA-Sensor verwendete optische Sensor in Form einer Smartphonecamera von vornherein integraler Bestandteil der meisten heute verkauften Telekommunikationsgeräte.

Nach anderen Ausführungsformen handelt es sich bei dem KLHA-Sensor um ein separates Bauteil, zum Beispiel eine externe Kamera, die speziell zum Zweck der Authentifizierung (und zumeist zusätzlich zu der bereits herstellerseitig in das Telekommunikationsgerät integrierten Kamera) mit dem Telekommunikationsgerät verbunden wird. Beispielsweise kann es sich um eine externe Kamera oder Videokamera handeln, die über eine microUSB Schnittstelle oder über eine Bluetooth Schnittstelle mit dem Telekommunikationsgerät verbunden ist. Zusätzlich zu dieser Datenaustauschschnittstelle kann die Verbindung zwischen dem als externe Kamera ausgebildeten KLHA-Sensor und dem Telekommunikationsgerät auch eine mechanische Verbindung umfassen. Die mechanische Verbindung kann zum Beispiel als Smartphone-Halterung ausgebildet sein, die ein oder mehrere Haltemittel (zum Beispiel Ausnehmungen, Schieber oder Greifarme) beinhaltet, die so ausgebildet sind, dass sie ein Telekommunikationsgerät und/oder den KLHA-Sensor selbsttätig mechanisch fixieren. Die Smartphone-Halterung kann eine Verlängerung haben, zum Beispiel einen Stil von 0,5 bis 5 cm Länge, wobei am Ende der Verlängerung die externe Kamera angebracht ist.

Nach Ausführungsformen der Erfindung ist der als optischer Sensor ausgebildete KLHA-Sensor dazu ausgebildet, Bilder oder Bildsequenzen des Gesichts oder von Teilen des Gesichts der einen Person zu erfassen, die die ersten und/oder zweiten Hirnaktivitätssignale enthalten, wobei die Analyse der ersten und zweiten Hirnaktivitätssignale durch das Authentifizierungsmodul eine automatische Bildanalyse der Bilder oder Bildsequenzen umfasst. Die Bildanalyse umfasst eine rechnerische Bestimmung eines Pupillendurchmessers der einen Person. Zusätzlich oder alternativ dazu umfasst die Bildanalyse eine rechnerische Bestimmung eines Pupillendurchmesseränderungsprofils (also eine Änderung des Durchmessers über die Zeit) der einen Person.

Falls das erste Authentifzierungsverfahren eine Kamera zur Erfassung biometrischer Merkmale verwendet, kann beispielsweise dieselbe oder eine andere Kamera auch zur Erfassung der Hirnaktivitätssignale auf optischem Wege verwendet werden.

Nach Ausführungsformen der Erfindung umfasst das Verfahren Machine-Learning Verfahrensschritte, z.B. um im Zuge einer Trainingsphase einen personenspezifischen oder generischen Klassifikator zu erzeugen, der dazu ausgebildet ist, die Unterschiede der ersten und/oder zweiten Hirnaktivitätssignale zu lernen (z.B. während der Registrierung eines Nutzers), und/oder im Zuge einer Test- bzw. Anwendungsphase des trainierten Klassifikators zur Unterscheidung der ersten und/oder zweiten Hirnaktivitätssignale während eines Authentifizierungsprozesses.

Nach Ausführungsformen der Erfindung umfasst die Analyse der erfassten Hirnaktivitätssignale:
- eine Bildverarbeitung zur Erkennung eines Pupillendurchmessers; und/oder
- Korrelation von Eigenschaften der ersten und zweiten Hirnaktivitätssignale mit den Zeiten, an welchen Bekanntbilder und Fremdbilder angezeigt wurden.

Nach Ausführungsformen ermittelt das Authentifizierungsmodul absolute Pupillendurchmesser und damit auch Unterschiede im Pupillendurchmesser bei der Betrachtung von Bildern unterschiedlichen Typs. Aus den Bildsequenzen wird der zeitliche Verlauf des Pupillendurchmessers beim Betrachten eines bestimmten Bildes ermittelt. Aus dem ermittelten Signal können die Amplitude (Pupillendurchmesser) und/oder der zeitliche Amplitudenverlauf der ersten und/oder zweiten Hirnaktivitätssignale ermittelt werden. Ein "Amplitudenverlauf" oder "Amplitudenverlauf über die Zeit" wird hier auch als "Profil" oder "Amplitudenprofil" bezeichnet. Die Amplitude kann sich z.B. auf Hirnaktivitätssignalintensitäten beziehen, die in den als Rohdaten erfassten Signalen vorkommen. In anderen Ausführungsformen bezieht sich die Amplitude auf Signale, die von den Rohdaten rechnerisch abgeleitet wurden, z.B. auf Amplituden von Signalen innerhalb eines bestimmten Frequenzbereichs. Die Beschränkung auf ausgewählte Frequenzbereiche kann den Vorteil haben, dass Störsignale reduziert werden.

Gemäß Ausführungsformen umfasst das Verfahren eine automatische Bildanalyse der Bilder oder Bildsequenzen, die als die Hirnaktivitätssignale erfasst wurden, um einen Pupillendurchmesser der einen in dem Bild abgebildeten Person zu bestimmen. Die Bestimmung des Pupillendurchmessers kann durch das Authentifizierungsmodul oder durch ein anderes Softwareprogramm durchgeführt werden.

Gemäß einer ersten, einfachen Ausführungsform umfasst die Analyse der erfassten ersten und zweiten Hirnaktivitätssignale eine Feststellung, ob die Amplitude der ersten Hirnaktivitätssignale, also der Pupillendurchmesser beim Betrachten eines Bekanntbildes, höher ist als die Amplitude der zweiten Hirnaktivitätssignale, also der Pupillendurchmesser beim Betrachten eines Fremdbildes. Ist dies der Fall, entspricht das gemessene Muster der ersten und zweiten Hirnaktivitätssignale dem Erwarteten und die Person wird als erfolgreich authentifiziert betrachtet.

Gemäß einer zweiten, komplexeren Ausführungsform umfasst die Analyse der erfassten Hirnaktivitätssignale einen Vergleich von Amplitudenverlaufsprofilen der ersten Hirnaktivitätssignale und von Amplitudenverlaufsprofilen der zweiten Hirnaktivitätssignale untereinander und/oder mit Amplitudenverlaufsprofilen von ersten und zweiten Referenz-Hirnaktivitätssignalen, um festzustellen, ob sich die ersten Hirnaktivitätssignale signifikant von den zweiten Hirnaktivitätssignalen unterscheiden.

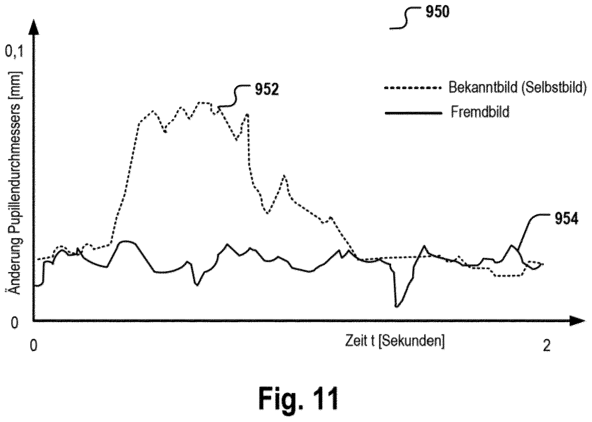

Nach Ausführungsformen sind die ersten Hirnaktivitätssignale identisch oder ähnlich zu den Hirnaktivitätssignalen gemäß Kurve 952 in Figur 11. Nach Ausführungsformen sind die die zweiten Hirnaktivitätssignale identisch oder ähnlich zu den Hirnaktivitätssignalen gemäß Kurve 954 in Figur 11.

Das bedeutet, dass bei vielen Menschen innerhalb der ersten 1500 ms nach dem Beginn des Betrachtens eines Bekanntbildes, z.B. eines "Selbstbildes", eine deutliche Vergrößerung des Pupillendurchmessers (um ca. 0,05 mm - 0,50 mm) beobachtbar ist, die beim Betrachten eines Fremdbildes mit dem gleichen Motivtyp ausbleibt.

Nach Ausführungsformen umfasst die Analyse der erfassten Hirnaktivitätssignale die Durchführung eines Bildverarbeitungsprozesses. Dabei werden unter Zuhilfenahme von Verfahren des Machine-Learnings und Deep-Learning-Algorithmen trainiert, die selbstständig Unterschiede bezüglich des Pupillendurchmessers während der Betrachtung des Fremd- und Bekanntbilder detektieren und so eine Klassifizierung vornehmen können.

Beispielsweise kann es sich bei dem optischen Sensor um eine Kamera oder Videokamera handeln, die im Infrarotbereich oder im Wellenlängenbereich des sichtbaren Lichtes ein oder mehrere Bilder des Gesichts oder von Teilen des Gesichts der zu authentifizierenden Person aufnimmt und an das Authentifizierungsmodul weiterleitet. Das Authentifizierungsmodul führt eine Bildanalyse durch, beispielsweise um einzelne Komponenten der Augenpartie des Gesichtes zu erkennen, insbesondere Iris und/oder Pupille von einem oder beiden Augen der zu authentifizierenden Person. Durch Analyse der Position und/oder Größe der Pupille einer Person in mehreren über die Zeit aufgenommenen Bildern kann außerdem ein Pupillendurchmesseränderungsprofil über ein Zeitintervall (von z.B. 0-4 Sekunden Dauer nach dem Beginn des Anzeigens eines Bekanntbilds oder Fremdbilds, insb. von 0-4 Sekunden Dauer) von einem oder beiden Augen dieser Person durch Bildanalyse ermittelt werden.

Die Anmelderin hat festgestellt, dass der Pupillendurchmesser und die Änderung des Pupillendurchmessers über die Zeit Ausdruck von Hirnaktivitäten sind, und insbesondere auch signifikant unterschiedlich sind in Abhängigkeit davon, ob einer Person ein Bekanntbild oder ein Fremdbild angezeigt wird. Somit ist es möglich, durch automatisches Erfassen und Analysieren von Bildern der Augenpartie von Personen während eines Zeitraums, innerhalb welchem der Person ein oder mehrere Bekanntbilder und ein oder mehrere Fremdbilder gezeigt werden, zu erkennen, ob sich der oder die Pupillendurchmesser, die während des Betrachtens eines Bekanntbildes gemessen wurden, signifikant von dem oder den Pupillendurchmesser(n), die während des Betrachtens eines Fremdbilds gemessen werden, unterscheiden, wohingegen die entsprechenden Signale, die beim Betrachtens des gleichen Bildtyps (Bekanntbild oder Fremdbild) gemessen werden, identisch oder sehr ähnlich sind. Somit eignen sich die besagten biometrische Merkmale "Pupillendurchmesser" bzw. "Pupillendurchmesseränderungsprofil" dazu, die Person auf Basis des Authentifizierungsverfahrens gemäß Ausführungsformen der Erfindung zu authentifizieren.

Die oben genannten optisch erfassten Hirnaktivitätssignale geben zumindest indirekt Aufschluss über Hirnaktivitäten, denn auch wenn bei diesen Merkmalen die Hirnaktivität nicht direkt in Form von Hirnstromsignalen gemessen wird, so werden doch physiologische Parameter erfasst, die auf direkte und bewusst nicht steuerbare Weise von den Hirnaktivitäten abhängen, die durch das Betrachten von Bekanntbildern und Fremdbildern ausgelöst werden. Hierbei ist hervorzuheben, dass nicht jegliche Art physiologischer Parameter zur Authentifizierung der Person geeignet ist, denn wenn diese physiologische Parameter nicht einerseits zumindest bei der einen Person bei Bildern des gleichen Typs (entweder Bekanntbild oder Fremdbild) reproduzierbar identische oder sehr ähnliche Eigenschaften aufweist und gleichzeitig die Signale beim Betrachten von Bildern unterschiedlichen Typs signifikant unterschiedliche Eigenschaften aufweisen, sind sie nicht geeignet, als Basis für das Authentifizierungsverfahren Verwendung zu finden.

Die Anmelderin hat beobachtet, dass eine deutliche Vergrößerung des Pupillendurchmessers innerhalb der ersten 2000 ms, vorzugsweise innerhalb der ersten 1000 ms nach dem Anzeigen eines Bildes (z.B. eine Vergrößerung von mindestens 8%, vorzugsweise mindestens 15%), ein Indiz dafür ist, dass der Betrachter ein Bekanntbild, insbesondere ein Selbstbild, sieht. Bleibt diese Pupillenweitung aus, handelt es sich um ein Fremdbild.

Gemäß einer Ausführungsform wird eine Bestimmung der Augenlidöffnung mehrfach pro angezeigtem Bild gemessen und dadurch ein oder mehrere Blinzelbewegungen der einen Person erfasst. Vorzugsweise dienen die erfassten Blinzelbewegungen dazu, ein erfasstes Hirnaktivitätssignal zu korrigieren. Dies kann vorteilhaft sein, da das Blinzeln in manchen Fällen auch eine Störung anderer Hirnaktivitätssignale wie z.B. der von einem elektrischen Sensor erfassten Hirnstromsignale bewirkt. Durch eine entsprechende Korrektur wird die Akkuratheit der Vorhersage erhöht.

Gemäß einer Ausführungsform werden die Fremdbilder so gewählt oder deren Helligkeit so normalisiert, dass diese einen ähnlichen Helligkeitsgrad aufweisen wie das eine Bekanntbild, oder wie ein mittlerer Helligkeitsgrad mehrerer Bekanntbilder oder wie der Helligkeitsgrad des zuletzt gezeigten Bekanntbildes. Beispielswiese kann ein ähnlicher Helligkeitsgrad bedeuten, dass der Mittelwert aller Pixelintensitäten des Fremdbildes nicht mehr als 25%, vorzugweise nicht mehr als 10% unter oder über dem Mittelwert aller Pixelintensitäten des Bekanntbildes oder der vorgenannten Bekanntbilder liegt.

Dies kann den Vorteil haben, dass Änderungen des Pupillendurchmessers, die auf die Adaptation an unterschiedliche Helligkeitsverhältnisse und nicht auf die Fremdbild/Bekanntbild-Rezeption zurückzuführen sind und die als Störsignale zu betrachten sind, reduziert oder vermieden werden.

Nach einer Ausführungsform wird die Bildanalyse von einem neuronalen Netz oder einer anderen Machine-Learning- Software (zum Beispiel Supportvektormaschine) durchgeführt. Die Machine-Learning- Software kann beispielsweise in einer Trainingsphase gelernt haben, bestimmte Gesichtsregionen bzw. Augenregionen wie zum Beispiel Iris und/oder Pupille automatisch zu erkennen und optional auch Größe und/oder Position von Pupille (und/oder ggf. für Signalkorrekturzwecke auch der Augenlidöffnung) zu bestimmen. Das Ergebnis der Bildanalyse besteht entsprechend aus ein oder mehreren numerischen Werten, die die Pupillengröße und/oder ein Pupillengrößenänderungsprofil über ein Zeitintervall spezifizieren. Zumindest ein oder mehrere dieser numerischen Werte werden als Eingabe an ein weiteres Softwaremodul des Authentifizierungsmoduls weitergegeben. Das weitere Modul ist dazu ausgebildet, derartige numerische Werte, die jeweils beim Betrachten von Bekanntbildern erfasst wurden, als erste Hirnaktivitätssignale zu verarbeiten, und entsprechende numerische Werte, die jeweils beim Betrachten von Fremdbildern erfasst wurden, als zweite Hirnaktivitätssignale zu verarbeiten. Im nächsten Schritt ermittelt das Authentifizierungsmodul die Ähnlichkeit der ersten Hirnaktivitätssignale untereinander (also die Ähnlichkeit mehrerer erster Hirnaktivitätssignale die beim Betrachten mehrerer Bekanntbilder erfasst werden untereinander), die Ähnlichkeit der zweiten Hirnaktivitätssignale untereinander (also die Ähnlichkeit mehrerer zweiten Hirnaktivitätssignale die beim Betrachten mehrerer Fremdbilder erfasst werden untereinander) sowie die Ähnlichkeit der ersten Hirnaktivitätssignale und der zweiten Hirnaktivitätssignale. Für den letztgenannten Vergleich können verschiedene Verfahren verwendet werden, beispielsweise Clusteranalysen oder ein Mehrschrittverfahren, in welchem ein erster Mittelwert aus allen ersten Hirnaktivitätssignalen berechnet wird, ein zweiter Mittelwert aus allen zweiten Hirnaktivitätssignalen berechnet wird, und sodann die Ähnlichkeit des ersten und zweiten Mittelwerts berechnet wird. Durch Vergleich der berechneten Ähnlichkeiten bzw. Abweichungen mit vordefinierten Grenzwerten kann das Authentifizierungsmodul automatisch feststellen, ob die ersten und zweiten Hirnaktivitätssignale signifikant voneinander unterschieden sind.

Nach Ausführungsformen umfasst die Analyse der erfassten Hirnaktivitätssignale die Ausführung eines Machine-Learning-Programms.

Beispielsweise kann ein "supervised learning" Ansatz dazu verwendet werden, zeitliche Profile der Signalamplituden (z.B. Spannung eines elektrischen Feldes im Falle von elektrischen Sensoren, Pupillendurchmesser im Falle von optischen Sensoren), die von einer Person je beim Betrachten von Fremdbildern oder Bekanntbildern erzeugt werden, zu analysieren und zu lernen, auf Basis dieser Verläufe den Typ des betrachteten Bildes automatisch zu erkennen bzw. vorherzusagen. Beispielsweise kann es sich bei dem Machine-Learning-Programm um ein neuronales Netzwerk oder eine Supportvektormaschine handeln. Insbesondere kann das neuronale Netz als ein rekurrentes neuronales Netzwerk ausgebildet sein. Das neuronale Netz lernt während des Trainings auf Grundlage von zeitlichen Verläufen der Signalamplitude (z.B. Durchmesser Pupille in Micrometer), wie die Signalamplituden bzw. Signalamplitudenprofile bei der Betrachtung von Bekanntbildern und Fremdbildern jeweils aussehen und/oder wie diese sich bei der Betrachtung von Bekanntbildern und Fremdbildern unterscheiden.

Gemäß Ausführungsformen wird das vom elektrischen Sensor erfasste Rohsignal als erstes oder zweites Hirnaktivitätssignal verwendet und ausgewertet. Bei dem Rohsignal kann es sich um die Gesamtheit der innerhalb eines oder mehrerer Frequenzbereiche erfassten Hirnaktivitätssignale handeln oder um eine oder mehrere diskrete Frequenzen. Gemäß anderer Ausführungsformen wird das vom elektrischen Sensor erfasste Rohsignal zunächst vorverarbeitet, z.B. normalisiert, entrauscht, und/oder gefiltert, um die Signalqualität und/oder Vergleichbarkeit des Signals zu erhöhen, und dieses vorverarbeitete Hirnaktivitätssignal wird als erstes oder zweites Hirnaktivitätssignal verwendet und ausgewertet.

Eine über die Bestimmung des Pupillendurchmessers hinausgehende Verarbeitung von Bilddaten ist nicht notwendig, da keine Objektklassifizierung stattfindet. Das Training kann daher auf Grundlage von annotierten Daten (z.B. Pupillendurchmessern oder Pupillendurchmesseränderungsprofilen, die mit "bei Bekanntbildbetrachtung" oder "bei Fremdbildbetrachtung" annotiert sind, performant durchgeführt werden.

Die für das Training verwendeten annotierten Trainingsdaten können z.B. anhand eines Protokolls aufgezeichnet und annotiert werden, damit das Modell trainiert und verifiziert werden kann.

Nach Ausführungsformen umfasst die Analyse der erfassten Hirnaktivitätssignale die Erkennung einer Korrelation von signifikant unterschiedlichen Hirnaktivitätssignalen zu Bildtypwechselzeitpunkten, wobei an einem Bildtypwechselzeitpunkt ein in der Anzeige gezeigtes Bekanntbild durch ein Fremdbild ersetzt wird oder umgekehrt.

Nach Ausführungsformen beinhaltet das Verfahren einen Schritt der Freigabe und/oder Durchführung einer Funktion der Server-Applikation nur dann, wenn die eine Person sich erfolgreich authentifiziert hat. Die Funktion kann z.B. darin bestehen, aktuelle Gesichtsbilder dieser einen Person von der Client-Applikation zu empfangen und an eine Software zur Personalisierung eines neuen Identitätsdokuments für die eine Person weiterzuleiten.

### Weitere Ausführungsformen verschiedener KLHA-Sensortypen

Nach Ausführungsformen beinhaltet eine reversible Verbindung zwischen dem KLHA-Sensor und dem Telekommunikationsgerät eine microUSB Schnittstelle und/oder eine Bluetooth Schnittstelle sowie optional zusätzlich eine mechanisch stabilisierende Verbindung zwischen dem Telekommunikationsgerät und dem KLHA-Sensor. Die mechanische Verbindung kann z.B. als Kunststoffhalterung ausgebildet sein.

In manchen Ausführungsformen ist der KLHA-Sensor signiert und die Client-Applikation ist dazu ausgebildet, bei der Verbindung des KLHA-Sensors an das Telekommunikationsgerät die Signatur zu prüfen.

Dies kann vorteilhaft sein, da nur KLHA-Sensoren, die von dem Betreiber des Server-Computersystems, z.B. eine Behörde oder eine Firma, hergestellt oder als vertrauenswürdig freigegeben und mit einer entsprechenden Signatur versehen wurden, für das Authentifizierungsverfahren gemäß Ausführungsformen verwendet werden können. Es ist somit ausgeschlossen, dass ein manipulierter Sensor zum Einsatz kommt, der im Falle des Bekanntwerdens der Challenge eine zu der Challenge passende Signalsequenz selbsttätig erzeugt, um das Authentifizierungsmodul zu täuschen.

In manchen Ausführungsformen beinhaltet der KLHA-Sensor einen KLHA-Signaturschlüssel, der dazu ausgebildet ist, die ersten und zweiten Hirnaktivitätssignale zu signieren. Die Client-Applikation beinhaltet einen zu dem KLHA-Signaturschlüssel korrespondierenden KLHA-Signaturprüfschlüssel. Die Client-Applikation ist dazu ausgebildet, den KLHA-Signaturprüfschlüssel zu verwenden, um die Signaturen der ersten und zweiten Hirnaktivitätssignale zu prüfen und die ersten und zweiten Hirnaktivitätssignale nur dann zum Zweck der Authentifizierung der einen Person weiterzuverarbeiten und/oder an die Server-Applikation zur Auswertung weiterzuleiten, wenn die Signaturen der Hirnaktivitätssignale valide sind.

Entsprechende Ausführungsformen der Erfindung können den Vorteil haben, dass es nicht möglich ist, dass eine evtl. auf dem Telekommunikationsgerät installierte Schadsoftware die Challenge "abfängt" und selbsttätig eine Sequenz erster und zweiter Hirnaktivitätssignale erzeugt, die der Challenge entspricht, um tatsächlich gemessene Signale durch diese künstlich erzeugten Signale zu ersetzen und dadurch einer nicht berechtigten Person zu ermöglichen, sich als eine andere zu authentisieren. Dies wird dadurch verhindert, dass das Authentifizierungsmodul nur Signale mit einer validen Signatur nach Durchführung einer Signaturprüfung weiterverarbeitet, da nur signierte Signale verlässlicherweise Signale sind, die der KLHA-Sensor gemessen hat.

Nach Ausführungsformen der Erfindung ist der KLHA-Sensor dazu ausgebildet, Bilder oder Bildsequenzen des Gesichts oder von Teilen des Gesichts der einen Person zu erfassen, die die ersten und/oder zweiten Hirnaktivitätssignale enthalten. Die Analyse der ersten und zweiten Hirnaktivitätssignale durch das Authentifizierungsmodul umfasst eine automatische Bildanalyse der Bilder oder der Bildsequenzen. Die Bildanalyse umfasst eine rechnerische Bestimmung eines Pupillendurchmessers der einen Person. Zusätzlich oder alternativ dazu umfasst die Bildanalyse der Bilder oder der Bildsequenzen eine rechnerische Bestimmung eines Pupillendurchmesseränderungsprofils der einen Person.

Nach Ausführungsformen der Erfindung die ersten Hirnaktivitätssignale identisch oder ähnlich sind zu den Hirnaktivitätssignalen gemäß Kurve 952 in Figur 11;

Gemäß dem besagten und/oder weiteren Ausführungsformen sind die zweiten Hirnaktivitätssignale identisch oder ähnlich zu den Hirnaktivitätssignalen gemäß Kurve 954 in Figur 11.

Nach Ausführungsformen der Erfindung umfasst die Analyse der erfassten Hirnaktivitätssignale einen oder mehrere der folgenden Schritte:
- Bildverarbeitung zur Erkennung eines Pupillendurchmessers; und/oder
- Korrelation von Eigenschaften der ersten und zweiten Hirnaktivitätssignale mit den Zeiten, an welchen Bekanntbilder und Fremdbilder angezeigt wurden.

Nach Ausführungsformen der Erfindung beinhaltet das Telekommunikationsgerät eine Kamera. Das zumindest eine Bekanntbild, das bei der Registrierung erfasst wurde, ist ein Gesichtsbild der zumindest einen Person. Das Verfahren umfasst ferner, falls das Authentifizierungsergebnis beinhaltet, dass sich die eine Person erfolgreich authentifiziert hat:
- Anzeige einer GUI der Client-Applikation auf einem Display des Telekommunikationsgeräts, wobei die GUI eine Aufforderung beinhaltet, das Gesicht der einen Person in den Erfassungsbereich der Kamera des Telekommunikationsgeräts zu halten;
- Erfassung eines aktuellen Gesichtsbilds der einen Person (z.B. auf Veranlassung durch die Client-Applikation hin); und
- Senden des aktuellen Gesichtsbilds über die Netzwerkverbindung von der Client-Applikation an die Server-Applikation.

Entsprechende Ausführungsformen der Erfindung können den Vorteil haben, dass im Anschluss an eine erfolgreiche Authentifizierung der einen Person aus der Ferne die vorhandene Ausrüstung auch gleich zur Erfassung eines aktuellen Gesichtsbildes genutzt werden kann. Hierbei ist durch das Verfahren inhärent sichergestellt, dass es sich bei dem erfassten Bild um ein aktuelles Gesichtsbild derjenigen Person handelt, welche sich soeben erfolgreich authentisiert hat. Die eine Person muss also weder eine Behörde noch ein autorisiertes Fotostudie aufsuchen, um der Behörde ein aktuelles Gesichtsbild auf eine fälschungssichere Weise zur Verfügung zu stellen.

Gemäß einer Ausführungsform umfasst das Verfahren einen weiteren Schritt der Anzeige des erfassten aktuellen Gesichtsbilds über die Anzeige des Telekommunikationsgeräts außerhalb der sicheren Räumlichkeit und Erfassung von Hirnaktivitätssignalen während der Anzeige des aktuellen Gesichtsbildes. Das Gesichtsbild wird nur dann von der Client-Applikation an die Server-Applikation weitergeleitet und/oder wird nur dann von dem Authentifizierungsmodul als aktuelles Gesichtsbild der Person, die sich soeben authentisiert hat, akzeptiert, wenn die erfassten Hirnaktivitätssignale signifikant ähnlich den ersten Hirnaktivitätssignalen und signifikant unähnlich den zweiten Hirnaktivitätssignalen sind, die während des Authentifizierungsvorgangs gemessen wurden. Dies erhöht die Sicherheit, dass das aktuelle Gesichtsbild auch tatsächlich das Gesicht der Person abbildet, die sich eben erfolgreich authentifiziert hat, und nicht z.B. ein Gesicht, das auf eine Foto abgebildet ist, das nach der Authentifizierung in die Kamera des Telekommunikationsgeräts gehalten wurde.

Nach Ausführungsformen umfasst das Verfahren ein Speichern und Verwenden des aktuellen Gesichtsbildes der einen Person als das zumindest eine Bekanntbild der Person anstelle des zumindest einen Bekanntbildes, das bei der Registrierung der einen Person erfasst wurde.

Zusätzlich oder alternativ dazu umfasst das Verfahren eine Bereitstellung des aktuellen Gesichtsbildes der einen Person von der Server-Applikation an eine Software zur Personalisierung von Identitäts- oder Sicherheitsdokumenten, um ein Identitäts- oder Sicherheitsdokument für die eine Person zu personalisieren.

Entsprechende Ausführungsformen können den Vorteil haben, dass sich eine Person nur einmal innerhalb der sicheren Räumlichkeiten authentifizieren und registrieren muss, beispielsweise, um nach Erreichen der Volljährigkeit erstmalig einen Personalausweis oder ein anderes Identitätsdokument mit dem eigenen Gesichtsbild zu erhalten. Um dann nach mehreren Jahren auf Basis eines neuen und aktuellen Gesichtsbildes einen neuen Ausweis zu bekommen, muss die Person nicht erneut persönlich in den sicheren Räumlichkeiten der Behörde erscheinen, weder um sich zu authentisieren, noch um ein Aktuelles Gesichtsbild auf sichere und verlässliche Weise der den Ausweis ausstellenden Behörde zukommen zu lassen. Ausführungsformen der Erfindung können es ermöglichen, sich aus der Ferne zu authentisieren und außerdem mit einer Kamera des Telekommunikationsgeräts bei dieser Gelegenheit auch ein Aktuelles Gesichtsbild zu erfassen und über die Client-Applikation an die Server-Applikation zu übermitteln. Vorzugsweise wird das erfasste aktuelle Gesichtsbild der Person noch einmal angezeigt und währenddessen die Hirnaktivitätssignale der Person über den KLHA-Sensor erfasst. Nur wenn die erfassten Hirnaktivitätssignale den ersten Hirnaktivitätssignalen ähnlich und den zweiten Hirnaktivitätssignalen unähnlich sind, gilt das aktuelle Gesichtsbild als vertrauenswürdig und wird als Grundlage für die Neuausstellung das Identitätsdokuments verwendet. Andernfalls wird das aktuelle Gesichtsbild nicht für die Neuausstellung des Identitätsdokuments verwendet. Beispielsweise kann das Authentifizierungsmodul Bestandteil der Client-Applikation sein und die Weiterleitung des Bildes an die Server-Applikation unterlassen, oder das Authentifizierungsmodul ist Bestandteil der Server-Applikation und unterlässt die Weiterleitung des Gesichtsbildes an die Personalisierungssoftware.

In einem weiteren Aspekt betrifft die Erfindung ein Verfahren zur Herstellung eines Identitäts- oder Sicherheitsdokuments für eine Person. Das Verfahren umfasst eine Authentifizierung der einen Person gemäß eines Authentifizierungsverfahrens aus der Ferne gemäß Anspruch 1, welches hierfür in Ausführungsformen der Erfindung beschrieben ist, die eine Erfassung eines aktuellen Gesichtsbilds der Person umfassen. Außerdem umfasst das Verfahren eine Herstellung eines Identitäts- oder Sicherheitsdokuments, welches der einen Person eindeutig zugewiesen ist, wobei das aktuelle Gesichtsbild der einen Person, das an die Server-Applikation übertragen wurde, als Sicherheitselement des Identitäts- oder Sicherheitsdokuments verwendet wird.

Beispielsweise kann das aktuelle Gesichtsbild auf oder in das Dokument gedruckt werden oder es kann dazu verwendet werden, um ein Hologramm zu erzeugen, welches auf das Sicherheitsdokument aufgebracht wird.

In einem weiteren Aspekt betrifft die Erfindung ein System zur Authentifizierung einer Person. Das System ist dazu konfiguriert, ein Authentifizierungsverfahren nach Anspruch 1 gemäß einer der hier beschriebenen Ausführungsformen durchzuführen.

Das System beinhaltet ein Server-Computersystem mit einer Server-Applikation, einem portablen Telekommunikationsgerät sowie einem Authentifizierungsmodul.

Die Server-Applikation beinhaltet ein Register mit den Profilen mehrerer bei der Server-Applikation registrierter Personen, wobei jedes Profil einer registrierten Person verknüpft mit zumindest einem Bekanntbild gespeichert ist. Das zumindest eine Bekanntbild ist ein Bild, das innerhalb einer sicheren Räumlichkeit bei Anwesenheit dieser Person in der sicheren Räumlichkeit erfasst wurde. Das Bekanntbild einer Person ist ein Bild ist mit einem Bildmotiv, das dieser Person bekannt ist.

Das portable Telekommunikationsgerät ist reversibel oder irreversibel mit einem KLHA-Sensor verbunden. Auf dem Telekommunikationsgerät ist eine Client-Applikation instanziiert, die mit der Server-Applikation interoperabel ist. Der KLHA-Sensor ist ein kontaktloser Sensor zur Erfassung von Hirnaktivitäten. Das Telekommunikationsgerät ist der einen Person zugeordnet.

Das Authentifizierungsmodul ist Bestandteil der Server-Applikation oder der Client-Applikation.

Die Client-Applikation ist ausgebildet zum Empfang des zumindest einen Bekanntbilds von der Server-Applikation über eine Netzwerkverbindung. Das Authentifizierungsmodul ist ausgebildet zum Erzeugen einer Spezifikation einer Sequenz von Bekanntbildern und Fremdbildern. Ein Fremdbild ist ein Bild mit einem Motiv, das der einen Person nicht bekannt ist. Die Client-Applikation ist ausgebildet zur Anzeige mehrerer Bilder auf einer Anzeige des Telekommunikationsgeräts außerhalb der sicheren Räumlichkeit. Die angezeigten Bilder beinhalten eine Sequenz aus einem oder mehreren Bekanntbildern und einem oder mehreren Fremdbildern gemäß der Spezifikation.

Der KLHA-Sensor ist dazu ausgebildet, während die mehreren Bilder der Person angezeigt werden, erste und zweite Hirnaktivitätssignale, die in der einen Person durch die Betrachtung der Bilder jeweils ausgelöst werden, zu erfassen, wobei erste Hirnaktivitätssignale erfasst werden, während der Person ein Bekanntbild angezeigt wird, und wobei zweite Hirnaktivitätssignale erfasst werden, während der einen Person ein Fremdbild angezeigt wird.

Das Authentifizierungsmodul ist ausgebildet zur Authentifizierung der einen Person als Funktion der Ähnlichkeit der erfassten ersten und zweiten Hirnaktivitätssignale unter Berücksichtigung der Spezifikation der Bildsequenz und zur Ausgabe eines Authentifizierungsergebnisses bezüglich der einen Person.

Das Verfahren zur Authentifizierung einer Person behandelt die eine Person als erfolgreich authentifiziert, wenn die ersten Hirnaktivitätssignale einander ähnlich sind, wenn die zweiten Hirnaktivitätssignale einander ähnlich sind, wenn die ersten Hirnaktivitätssignale unähnlich zu den zweiten Hirnaktivitätssignalen sind und wenn die Sequenz voneinander ähnlichen ersten Hirnaktivitätssignalen und einander ähnlichen zweiten Hirnaktivitätssignalen zu der Sequenz der angezeigten Bekanntbildern und Fremdbildern korrespondiert.

Beispielsweise kann die Ausgabe des Ergebnisses darin bestehen, dass das Authentifizierungsmodul eine Nachricht an die Server-Applikation übermittelt, dass die Person sich erfolgreich authentisiert hat. Dies kann die Server-Applikation wiederum dazu veranlassen, weitere Schritte auszuführen, zum Beispiel eine Nachricht an die Client-Applikation zu senden, um die Client-Applikation dazu veranlassen, ein Aktuelles Gesichtsbild der einen Person aufzunehmen, das aufgenommene Gesichtsbild auf der Anzeige des Telekommunikationsgeräts anzuzeigen, währenddessen Hirnaktivitätssignale der Person mit dem KLHA Sensor zu messen, diese Hirnaktivitätssignale mit den während des Authentifizierungsverfahrens erfassten ersten und zweiten Hirnsignale zu vergleichen, und dann, falls die beim Betrachten des aktuellen Gesichtsbilds erhaltenen Hirnaktivitätssignale ähnlich sind zu den ersten Hirnaktivitätssignalen und unähnlich sind zu den zweiten Hirnaktivitätssignalen, dass erfasste aktuelle Gesichtsbild an die Server-Applikation zur weiteren Verarbeitung weiterzuleiten. Die Weiterverarbeitung kann beispielsweise eine Verwendung des aktuellen Gesichtsbildes zur Neuausstellung eines Identitätsdokumentes für die eine Person beinhalten.

Nach Ausführungsformen ist der KLHA-Sensor ein elektrischer Sensor zur Erfassung eines Hirnsignals ohne direkten Kontakt des Kopfes mit dem elektrischen Sensor.

Nach anderen Ausführungsformen ist der KLHA-Sensor ein optischer Sensor.

Gemäß einer Ausführungsform wird, z.B. im Zuge der Registrierung einer Person bei der authentifizierenden Instanz, durch Messung von Hirnaktivitätssignalen während der Betrachtung mehrerer Bekanntbilder und Fremdbilder ein Trainingsdatensatz erzeugt und ein personen-individueller Klassifikator auf diesen Bildern trainiert. Der trainierte Klassifikator ist in der Lage, Hirnaktivitätssignale speziell dieser Person in solche zu klassifizieren, die das Resultat der Betrachtung eines Bekanntbildes sind und in solche, die das Resultat einer Betrachtung eines Fremdbildes sind. Der personenspezifisch trainierte Klassifikator kann z.B. als Bestandteil des Nutzerprofils dieser Person gespeichert werden.

Mehrere Ausführungsformen der Erfindung wurden unter Bezugnahme auf eine Behörde als Beispiel für eine authentifizierende Instanz beschrieben. Anstelle einer Behörde kann jedoch auch eine private Organisation, z.B. ein Unternehmen, ein Verein oder eine sonstige Entität, gegenüber welcher sich ein Nutzer authentifizieren möchte, fungieren.

Ein "**Identitätsdokument**" (auch "ID-Dokument" bezeichnet) ist ein physisches Objekt, zum Beispiel eine papierbasierte oder kunststoffbasierte Karte mit einem Chip, die die Identität oder eine Eigenschaft oder ein Recht des Inhabers des Identitätsdokuments nachweist. Ein Identitätsdokument kann zum Beispiel einen Personalausweis, ein Reisepass, ein Mitarbeiterausweis oder ein personalisiertes Wertdokument (zum Beispiel Kreditkarte) sein. Identitätsdokumente beinhalten oftmals Sicherheitsmerkmale wie zum Beispiel Gesichtsbilder, Hologramme, Prüfzahlen, kryptographische Schlüssel oder dergleichen.

Unter einer "**Anzeigevorrichtung"** wird hier ein Gerät verstanden, das dazu ausgebildet ist, zeitlich veränderlichen Informationen wie Bilder oder Zeichen anzuzeigen. Insbesondere kann es sich bei der Anzeigevorrichtung um einen Bildschirm oder sonstige Form einer elektrisch angesteuerten Anzeige handeln. Es kann sich aber auch um eine Kombination eines Projektors mit einer Projektionsfläche handeln. Die Anzeigevorrichtung kann dabei ein eigenständiges Gerät oder Teil eines Gerätes sein, z.B. Teil eines Terminals.

Unter einem **"Sensor",** auch als Detektor oder (Mess-)Fühler bezeichnet, ist ein technisches Bauteil oder Gerät, das bestimmte physikalische und/oder chemische Eigenschaften (insbesondere Impedanz, elektrische Felder, elektromagnetische Felder, optische Signale, Ladungsänderungen und/oder Ladungsumverteilungen in der Umgebung, etc.) qualitativ oder quantitativ erfassen kann. Diese Größen werden mittels physikalischer oder chemischer Effekte erfasst und vom Sensor in ein weiterverarbeitbares elektrisches Signal umgeformt.

Unter einem "**elektrischen Sensor"** wird hier ein Sensor verstanden, der dazu ausgebildet ist, Ladungsänderungen und/oder Ladungsumverteilungen in seiner Umgebung zu messen, wobei die Umgebung der räumliche Sensitivitätsbereich des Sensors ist.

Unter einem "**optischen Sensor"** wird hier ein Sensor bezeichnet, welcher dazu ausgebildet ist, ein oder mehrere Bilder eines physischen Objekts, z.B. eines Gesichts oder Gesichtsbereichs, zu erfassen. Die Bilder können insbesondere digitale Bilder sein. Der optische Sensor kann z.B. eine Kamera oder eine Videokamera sein. Der optische Sensor kann z.B. dazu ausgebildet sein, selektiv Licht eines bestimmten Wellenlängenbereichs zu erfassen, z.B. Infrarotlicht (IR-Licht) oder Licht im für das menschliche Auge sichtbaren Wellenlängenbereich (Weißlicht, Tageslicht). Die erfassten Bilder werden chemisch oder elektronisch aufgezeichnet. Vorzugsweise handelt es sich bei den erfassten Bildern um digitale Bilder, die elektronisch gespeichert und/oder direkt an ein Authentifizierungsmodul bereitgestellt werden.

Unter einem **"kontaktlosen Hirnaktivitäts-Sensor (KLHA-Sensor)"** wird hier ein Sensor verstanden, welcher ein oder mehrere Signale empfangen kann, die von einem Menschen ausgesendet werden, ohne dass während des Empfangs der Signale ein Kontakt des Sensors zu dem Menschen besteht. Die empfangenen Signale geben direkt (Hirnstromsignale gemessen durch einen kontaktlosen elektrischen Sensor) oder indirekt (Pupillendurchmesser, Pupillendurchmesseränderungsprofil) Aufschluss über Hirnaktivitäten des Menschen, von dem die Signale empfangen werden, zum Zeitpunkt des Empfangs.

Unter einer "**Hirnaktivität"** wird hier die physiologische Aktivität einer Vielzahl von Neuronen des Gehirns eines Menschen verstanden. Die physiologische Aktivität korrespondiert in elektrischen Zustandsänderungen der Neuronen zur Informationsverarbeitung des Gehirns.

Unter einem "**Hirnaktivitätssignal"** wird hier ein von einem Menschen ausgestrahltes Signal verstanden, welches durch eine Hirnaktivität direkt oder indirekt bewirkt wird. Beispielsweise addieren sich die über den gesamten Kopf verteilten elektrischen Zustandsänderungen und Potentialänderungen der Neuronen gemäß ihrer spezifischen räumlichen Anordnung auf und lassen sich direkt als sogenannte "Hirnstromsignale" mittels eines elektrischen Sensors messen. Bei einem Hirnaktivitätssignal kann es sich aber auch um jegliches andere durch einen physiologischen Prozess in einem menschlichen Körper emittierte Signal handeln, welches von einer Hirnaktivität hervorgerufen wird und sich vorzugsweise bewusst nicht oder nur eingeschränkt kontrollieren lässt. Beispielsweise ist das Einstellen der Iris auf einen bestimmten Pupillendurchmesser abhängig von unbewussten neuronalen Verarbeitungsprozessen im menschlichen Gehirn, die z.B. davon abhängen, was eine Person gerade sieht, z.B. ein Bild ihrer selbst oder ein Bild einer anderen Person (Fremdbild).

Unter einem "**ersten Hirnaktivitätssignal"** wird hier ein Hirnaktivitätssignal verstanden, welches erfasst wird, während eine Person ein Bekanntbild betrachtet.

Unter einem "**zweiten Hirnaktivitätssignal"** wird hier wird hier ein Hirnaktivitätssignal verstanden, welches erfasst wird, während eine Person ein Fremdbild betrachtet

Unter einem "**Hirnstromsignal"** wird hier ein Hirnaktivitätssignal verstanden, welches sich ergibt durch Überlagerung einer Vielzahl von über den gesamten Kopf einer Person verteilten elektrischen Zustandsänderungen, insb. Potentialänderungen, der Neuronen gemäß ihrer spezifischen räumlichen Anordnung.

Unter einem "**Gesichtsbild"** wird hier ein Bild, insbesondere ein digitales Bild, verstanden, welches das Gesichts oder einen Gesichtsbereich einer Person abbildet.

Ein **"digitales Bild"** ist ein Datensatz, in dem Bildinhalte repräsentiert und gespeichert werden. Insbesondere kann es sich bei dem digitalen Bild um einen Datensatz handeln, in dem der Inhalt eines Bildes durch ganze Zahlen repräsentiert wird. Insbesondere kann es sich bei dem digitalen Bild um eine Rastergraphik handeln.

Unter einer "**Vertrauensperson"** wird hier eine Person verstanden, die sich bei dem Authentifizierungsmodul und/oder der Server-Applikation vorab registriert hat und die nach erfolgreicher Authentisierung der Person gegenüber dem Authentifizierungsmodul von dieser und der Server-Applikation als vertrauenswürdig behandelt wird zumindest im Hinblick auf bestimmte ausgewählte Funktionen der Server- Applikation.

Unter einem "**Bekanntbild"** wird hier ein Bild verstanden mit einem Bildmotiv, das der Person bekannt ist, sofern es sich bei der Person um die Person handelt, als welche sich die Person authentifiziert. Beispielsweise wird im Zuge eines Registrierungsprozesses einer Person in sicheren Räumlichkeiten der Betreiber eines Server-Computersystems eine sichere, vertrauenswürdige Verknüpfung zwischen einem Profil dieser einen Person und einem oder mehreren Bekanntbildern für diese Person erzeugt. Bei späteren Authentisierungsprozessen, in welchen eine unbekannte Person aus der Ferne versucht, sich als die eine bereits registrierte Person zu authentisieren, wird dieser Person eine-vorzugsweise zufällige-Sequenz von Bekanntbildern und Fremdbildern gezeigt, wobei die Bekanntbilder diejenigen Bekanntbilder sind, die im Zuge des Registrierungsprozesses mit dem Profil der Person verknüpft sind, als welche sich die sich eben authentisieren der Person ausgibt. Handelt es sich in Wirklichkeit um eine andere Person, also um einen Täuschungsversuch, wird dies erkannt, denn die beim Betrachten der Bekanntbilder erzeugten Hirnaktivitätssignale sehen Hirnaktivitätssignalen ähnlich, die von dieser Person beim Betrachten von Fremdbildern erzeugt werden.

Die Motive der Bekanntbilder und Fremdbilder, die von dem Authentifizierungsmodul ermittelt und angezeigt werden, gehören vorzugsweise zum gleichen Typ. Ein Motivtyp kann z.B. ein Typ eines physischen Objekts sein, z.B. Gesicht, der menschliche Körper, ein Gegenstand einer bestimmten Kategorie, ein Fahrzeug, ein Wasserfahrzeug, ein Gebäude, eine Tierart, insbesondere eine Haustierart. Bei den Bekanntbildern einer Vertrauensperson kann es sich z.B. um das Arbeitsgebäude oder Haustier oder das Gesicht eines Familienmitglieds handeln und bei dem Fremdbild um ein unbekanntes Gebäude ähnlicher Größe oder Funktion, ein unbekanntes Individuum der gleichen Haustierart, ein Gesicht einer fremden Person, etc.

Vorzugsweise ist ein Bekanntbild ein Bild, von welchem bekannt ist oder der Betreiber des Authentifizierungsmoduls mit hinreichender Wahrscheinlichkeit annehmen kann, dass das Motiv des Bekanntbildes nur der Vertrauensperson bekannt und keiner weiteren Person sonst, oder zumindest keiner weiteren Person, die sich mit hinreichender Wahrscheinlichkeit unberechtigterweise authentifizieren möchte. Beispielsweise können Gegenstände in einem Raum, zu dem nur ein kleiner Personenkreis Zutritt hat, durchaus allen Mitgliedern dieses Personenkreises bekannt sein und als Motiv eines Bekanntbildes verwendet werden. Alle diese Personen gelten jedoch als berechtigt bezüglich des Zutritts zu diesem Raum. Damit der Gegenstand als Motiv eines Bekanntbildes verwendet werden kann, ist nur erforderlich, dass er nicht auch in anderen Räumen vorkommt, in welchen andere Personen arbeiten, die keinen Zutritt zu dem geschützten Raum erhalten sollen.

Bekanntheit ist hier im Sinne von hoher Vertrautheit zu verstehen, die durch mehrfaches Betrachten des Motivs des Bekanntbildes über einen längeren Zeitraum entsteht, vorzugweise durch mindestens tägliches oder mindestens wöchentliches Betrachten über einen Zeitraum von mehreren Monaten oder Jahren hinweg.

Unter einem "**Fremdbild**" wird hier ein Bild verstanden, das ein physisches Objekt darstellt, von welchem bekannt ist oder von dem mit hinreichend hoher Wahrscheinlichkeit davon auszugehen ist, dass das dargestellte physische Objekt der sich authentisierenden Person nicht bekannt ist oder zumindest signifikant weniger bekannt ist als der Vertrauensperson, sofern es sich bei der sich authentifizierenden Person tatsächlich um die Person handelt, als welche sie sich authentifizieren möchte.

Beispielsweise kann es sich bei einem Fremdbild, das einer bestimmten Person gezeigt wird, um ein Bild handeln, welches das Gesicht einer anderen Person abbildet, die auf einem anderen Kontinent lebt, die vor langer Zeit gelebt hat oder von welcher aus sonstigen Gründen nicht anzunehmen ist, dass die Person, die sich authentisieren will, diese andere Person jemals gesehen hat. Das "nicht-Bekanntsein" des Motiv eines Fremdbildes ist vorzugsweise so zu verstehen, dass mit einer gewissen Mindestwahrscheinlichkeit keine Person, die sich des Authentifizierungsverfahrens voraussichtlich bedienen wird, das in einem Fremdbild abgebildete Motiv, also z.B. eine andere Person, jemals gesehen hat.

Unter einer "**signifikanten Ähnlichkeit**" von Datenwerten wie zum Beispiel Hirnaktivitätssignalen wird hier insbesondere eine Situation verstanden, in welchem zwei Signale als im Rahmen der Messgenauigkeit identisch oder sehr ähnlich angesehen werden. Unter Berücksichtigung der Messungenauigkeit des Sensortyps und Sensormodells können "signifikant ähnliche Signale" also Signale sein, deren Unterschiedlichkeits-Score unterhalb eines vordefinierten Grenzwerts liegt, wobei der Grenzwert so gewählt ist, dass Unterschiedlichkeits-Scores von Hirnaktivitätssignalen, die von im Wesentlichen identischen oder sehr ähnlichen Vorgängen im Kopf der Person erzeugt werden, unterhalb dieses Grenzwerts liegen. Identische oder nahezu identische Hirnaktivitätssignale sind Beispiele für Signale, die signifikant ähnlich zueinander sind.

Unter einer "**signifikanten Unähnlichkeit**" von Datenwerten wie zum Beispiel Hirnaktivitätssignalen wird hier verstanden, dass die verglichenen Daten sich so stark voneinander unterscheiden, dass es sehr unwahrscheinlich ist, dass die Unterschiede auf messtechnische oder sonstige Varianzen (Messfehler) zurückzuführen sind. Bei der messtechnischen Erfassung von Signalen (z.B. mit optischem oder elektrischem Sensor) ist es unvermeidlich, dass hierbei leichte Schwankungen der Signalstärke auftreten. Die hierdurch bedingte Varianz, auch Messfehler oder "Hintergrundrauschen" bezeichnet, hat je nach Sensortyp und Sensormodell eine unterschiedliche Größe und Beschaffenheit, sodass es nicht möglich ist, für alle denkbaren Typen und Modelle von Sensoren eine absolute Grenze vorzugeben, ab welcher Höhe Signalunterschiede noch im Rahmen der Messungenauigkeit unterschiedlich sind und wann sie dagegen "signifikant unterschiedlich" ("signifikant unähnlich") sind, also so unterschiedlich sind, dass die Unterschiede nicht mehr auf die übliche Messungenauigkeit zurückführbar sind. Dem Fachmann ist der Umgang mit Messungenauigkeiten beim Verarbeiten und Vergleichen von gemessenen Signalen jedoch bekannt. Durch Wahl geeigneter Grenzwerte, z.B. eines Mindestabstands zwischen zwei Signalamplituden oder einer Mindestfläche, die sich errechnet als Differenz der Flächen unter zwei Amplitudenprofile der beiden Signale über die Zeit, kann der Fachmann definieren, ab welcher Unterschiedlichkeitsschwelle zwei Hirnaktivitätssignale als "signifikant unterschiedlich" gelten und wann die Signale dagegen als "identisch oder ähnlich im Rahmen der jeweiligen Messgenauigkeit" gelten.

Unter Berücksichtigung der Messungenauigkeit des Sensortyps und Sensormodells können "signifikant unähnliche Signale" oder "Signale, die signifikant unterschiedlich sind" also Signale sein, deren Unterschiedlichkeits-Score über einem vordefinierten Grenzwert liegt, wobei der Grenzwert so gewählt ist, dass Unterschiedlichkeits-Scores von Hirnaktivitätssignalen, die von im Wesentlichen unterschiedlichen Vorgängen im Kopf der Person erzeugt werden (z.B. beim Betrachten von Fremdbildern einerseits und von Bekanntbildern andererseits), über diesem Grenzwert liegen.

Unter einem "**Authentifizierungsmodul**" wird hier Software verstanden, die dazu ausgebildet ist, zumindest einige Teilschritte eines Authentifizierungsverfahrens durchzuführen, um eine bestimmte Person zu authentifizieren. Die Software kann als Bestandteil der Client-Applikation oder der Server-Applikation ausgebildet sein.

Authentifizierung ist die Verifizierung einer behaupteten Eigenschaft (claim) einer Person durch eine prüfende Instanz (z.B. Authentifizierungsmodul), wobei die Person hierfür Daten an die prüfende Instanz bereitstellt, also eine Authentisierung durchführt. Das Wort Authentifizieren bezeichnet hier den gesamten Vorgang der Bereitstellung der Information (Authentisierung) als auch die Echtheitsprüfung dieser Daten. Die Authentisierung einer Person bezüglich der behaupteten Eigenschaft der Authentizität, die beispielsweise Einräumen einer "bestehenden Zugangsberechtigung" oder "Mitgliedschaft in einer Personengruppe, die bestimmte Rechte zum Zugriff auf bestimmte Funktionen hat", sein kann, erlaubt der authentifizierten Person weitere Aktionen. Die Person gilt dann als authentisch bzw. als "erfolgreich authentifiziert".

Unter einer "**Challenge**" wird hier eine Challenge zur Verwendung in einem Challenge-Response Protokoll verstanden. Eine Challenge ist eine Menge aus einem oder mehreren Datenwerten, welche einer ersten Partei bekannt ist, und welche einer zweiten Partei auf eine bestimmte Weise übermittelt wird um es der zweiten Partei zu ermöglichen, sich durch Nachweis der Kenntnis der Challenge oder durch Nachweis einer vordefinierten Verarbeitung der Challenge bei der ersten Partei zu authentifizieren.

Unter einer "**sicheren Räumlichkeit**" wird hier eine Räumlichkeit verstanden, innerhalb welcher eine Erfassung, Speicherung und/oder Verarbeitung von personenbezogenen Daten aufgrund organisatorischer und/oder technischer Vorkehrungen als hinreichend sicher im Hinblick auf einen bestimmten Zweck angesehen wird. Beispielsweise können die Räumlichkeiten einer Behörde für die Erfassung eines Gesichtsbildes einer Person zum Zwecke der Ausstellung oder Neuausstellung eines Identitäts- oder Sicherheitsdokuments als "sichere Räumlichkeit" gelten, da die Angestellten dort entsprechend geschult sind, und optional zudem bestimmte technische Sensoren verwenden, um sicherzustellen, dass das erfasste Gesichtsbild auch tatsächlich die Person abbildet, welche die Person vorgibt zu sein. In manchen Fällen ist es auch möglich, dass ein privates Fotostudio, das von der Behörde als hinreichend vertrauenswürdig angesehen und entsprechend zur Gesichtsbildaufnahme für die Dokumentenerstellung berechtigt und qualifiziert ist, als sichere Räumlichkeit angesehen werden. Die Wohnung oder der Arbeitsplatz der Person, die das Ausweisdokument beantragt hat, gilt gemeinhin jedoch nicht als sichere Räumlichkeit. Vorzugsweise ist die "sichere Räumlichkeit" auch in technischer Hinsicht besonders geschützt. Beispielsweise kann die sichere Räumlichkeit nur Personen gegenüber offenstehen, welche sich zuvor ausgewiesen haben und/oder kann technische Geräte und insbesondere Computer beinhalten, die dazu ausgebildet sind, personenbezogene Daten, die zur Personalisierung eines Dokuments erfasst und/oder verarbeitet wurden, daraufhin zu prüfen, ob diese von einer als sicher geltenden Datenquelle stammen (z.B. von einer Kamera oder einem Fotostudio, das seine Vertrauenswürdigkeit nachweisen kann, z.B. mittels einer elektronischen Signatur des Gesichtsbildes.

Unter einer "**Server-Computersystem"** wird hier ein verteiltes oder monolithisches Computersystem verstanden, welches mit einem oder mehreren anderen Datenverarbeitungssystemen ("Clients"), z.B. Telekommunikationsgeräten, über ein Netzwerk verbunden ist und Daten und/oder Dienste an diese Clients bereitstellt.

Unter einer "**Server-Applikation**" wird hier eine Software Applikation verstanden, die auf dem Server-Computersystem instanziiert ist.

Unter einer "**Registrierung"** wird hier der Vorgang eines Eintragens einer Information in ein Verzeichnis, z. B. eine Erstellung eines neuen Nutzerprofils für eine Person in einer Nutzerprofildatenbank, verstanden. Vorzugsweise erfordert der Registrierungsprozess eine Authentisierung der Person, für die das neue Nutzerkonto angelegt werden soll, in sicheren Räumlichkeiten der Organisation, welche die Nutzerprofildatenbank verwaltet.

Unter einer "**Client-Applikation**" wird hier eine Softwareapplikation verstanden, die auf dem portablen Telekommunikationsgerät instanziiert ist, und die mit der Server-Applikation interoperabel ist (also so Daten, insbesondere Nutzdaten und Befehle, austauschen zu können, dass die jeweilige Gegenseite diese Daten richtig verarbeiten und interpretieren kann).

Unter einem "**portablen Telekommunikationsgerät**" wird hier ein Datenverarbeitungsgerät verstanden, dessen Größe und Gewicht es erlaubt, dass eine Person das Telekommunikationsgerät mit sich führt, und welches dazu ausgebildet ist, Daten über eine Netzwerkverbindung, insbesondere eine Mobilfunkverbindung, mit anderen Datenverarbeitungsgeräten auszutauschen. Insbesondere kann es sich bei dem Telekommunikationsgerät um Notebooks, Tablet-Computer und Mobiltelefone, insbesondere sog. "Smartphones", handeln. Smartphones sind Mobiltelefone mit umfangreichen Computer-Funktionalitäten und Konnektivitäten. Ein Internetzugang ist in der Regel wahlweise per mobiler Breitbandverbindung des Mobilfunkanbieters oder WLAN möglich.

### Kurze Beschreibung der Zeichnung

Nachfolgend werden Ausführungsformen der Erfindung mit Bezug auf die Zeichnung beschrieben. In der Zeichnung zeigt
- Fig. 1: ein exemplarisches Flussdiagramm einer Ausgestaltung des erfindungsgemäßen Verfahrens zur Registrierung und nachfolgender Authentifizierung einer Person;
- Fig. 2: ein Flussdiagramm einer Variante des Verfahrens nach Figur 1, wonach die Bekanntbilder im Zuge der Registrierung clientseitig gespeichert werden;
- Fig. 3: ein Flussdiagramm einer anderen Variante des Verfahrens nach Figur 1, wonach die im Zuge der Registrierung erfassten Bekanntbilder serverseitig gespeichert werden und in Antwort auf eine Authentifizierungsanfrage an die Client-Applikation übermittelt werden;
- Fig. 4: ein Blockdiagramm eines Authentifizierungssystems mit serverseitigen Authentifizierungsmodul;
- Fig. 5: ein Blockdiagramm eines Authentifizierungssystems mit clientseitigen Authentifizierungsmodul;
- Fig. 6: ein Authentifizierungssystem welches im Anschluss an eine erfolgreiche Authentisierung einer Person auf Basis einer Bildsequenz ein aktuelles Gesichtsbild der Person erfasst und über ein Display anzeigt, um die Echtheit des erfassten Gesichtsbilds zu verifizieren;
- Fig. 7: eine Sequenz von angezeigten Bekanntbildern und Fremdbildern und dazu korrespondierenden ersten und zweiten Hirnaktivitätssignalen;
- Fig. 8: ein Schema eines neuronalen Netzes zur Analyse und Klassifizierung der Hirnaktivitätssignale;
- Fig. 9: einen Plot mit zwei Hirnaktivitätssignalen in Form gemessener Ladungsumverteilungen in der Sensorumgebung bei Betrachtung eines Fremdbilds und eines Bekanntbilds;
- Fig. 10: ein Blockdiagramm eines weiteren Authentifizierungssystems; und
- Fig. 11: einen Plot mit Hirnaktivitätssignalen in Form von gemessenen Pupillendurchmesser bei Betrachtung eines Fremdbilds und eines Bekanntbilds.

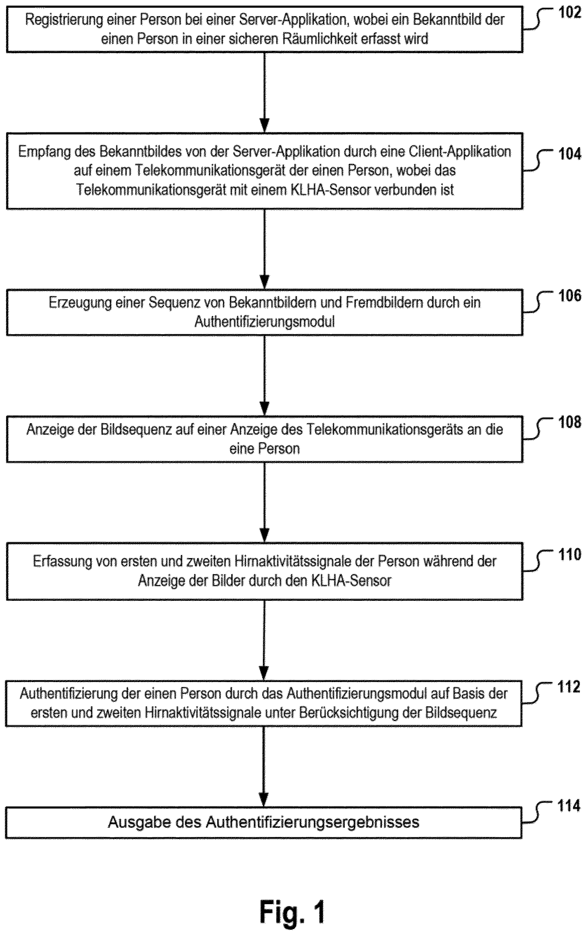

**Figur 1** illustriert ein exemplarisches Flussdiagramm einer Ausgestaltung des erfindungsgemäßen Verfahrens zur Registrierung und nachfolgender Authentifizierung einer Person.

Das Verfahren gemäß Ausführungsformen der Erfindung kann vorteilhaft sein, weil es einer Person, die aus gesundheitlichen oder sonstigen Gründen nicht in der Lage ist, bestimmte, als sicher geltende Räumlichkeiten einer Behörde oder sonstigen Organisation aufzusuchen um sich zu authentisieren, ermöglicht, sich auf bequeme und dennoch sichere Weise aus der Ferne zu authentisieren.

Hierfür ist es zunächst erforderlich, dass sich die Person einmalig bei der Behörde oder bei einer sonstigen Organisation, die ein Authentifikation System gemäß Ausführungsformen der Erfindung betreibt, registriert. Der Registrierungsschritt 102 beinhaltet, dass die Person eine als sicher geltende Räumlichkeit der Organisation aufsucht, um sich dort zu authentisieren und um der Organisation ein oder mehrere Bekanntbilder bereitzustellen. Beispielsweise kann sich die Person mittels verschiedener Dokumente, Ausweise, Geburtsurkunden, biometrischer oder sonstiger Merkmale bei einer Behörde ausweisen, um nach Erreichen der Volljährigkeit einen Personalausweis zu erhalten, auf dem das Gesichtsbild dieser Person abgebildet ist. Im Zuge der Registrierung wird ein Nutzerprofil für die registrierte Person erzeugt oder, falls dieses Nutzerprofil schon vorab bestand, aktualisiert. In den sicheren Räumlichkeiten werden ein oder mehrere Bekanntbilder dieser einen Person erfasst. Typischerweise handelt es sich dabei um ein oder mehrere Gesichtsbilder oder Ganzkörperbilder dieser Person. In Einzelfällen kann es sich aber auch um Bilder anderer Objekte handeln, von den die Organisation aufgrund der Umstände sicher sein kann, dass diese Objekte dieser einen Person sehr bekannt sind, praktisch allen anderen Personen jedoch unbekannt oder deutlich weniger bekannt.

Bei der sicheren Räumlichkeit kann es sich zum Beispiel um einen Raum innerhalb einer Behörde handeln. Es ist aber auch möglich, dass die sichere Räumlichkeit faktisch aus einer Kombination verschiedener Räumlichkeiten besteht. Beispielsweise kann eine Behörde bestimmten, als vertrauenswürdig geltenden Fotostudios erlauben, Passbilder in Form von digitalen Bildern zu erstellen und im Auftrag dieser Person an die Behörde zu übermitteln. In solchen Fällen kann der Ort der Erfassung der Bekanntbilder und der Ort der Authentisierung der Person im Zuge der Registrierung gegenüber der Organisation unterschiedlich sein. Dennoch gilt auch das Fotostudio als sichere Räumlichkeit, da vorab organisatorische und/oder technische Maßnahmen getroffen wurden, welche sicherstellen sollen, dass die erfassten Bekanntbilder auch wirklich zu der Person gehören, die sich aktuell registriert. Beispielsweise kann die Organisation zum Zweck der Registrierung der Person eine Vorgangsnummer erzeugen. Die Person kann mit dieser Vorgangsnummer zu dem Fotostudio gehen, dort digitale Gesichtsbilder von sich erstellen lassen, wobei die digitalen Gesichtsbilder von der Kamera und/oder von einer Software, die von dem Fotostudio verwendet wird, signiert werden. Das Fotostudio sendet sodann die signierten digitalen Gesichtsbilder mitsamt der Vorgangsnummer an die Organisation, bei welcher die Registrierung vorgenommen wird. Die Organisation prüft sowohl die Vorgangsnummer als auch die Signatur der Bilder und kann sich daher sicher sein, dass das Foto auch tatsächlich das Gesicht der Person, die sich registrieren möchte, abbildet, und nicht etwa ein "gemorphtes" Bild ist, dass auf dem Computer auf Basis der Gesichtsbilder zweier oder mehrerer Personen erzeugt wurde.

Die erfassten Bekanntbilder werden je nach Ausführungsform serverseitig und/oder clientseitig gespeichert. Die Bekanntbilder werden dabei so gespeichert, dass sie mit dem Nutzerprofil derjenigen Person verknüpft sind, im Zuge deren Registrierung sie erfasst wurden. Es ist ausreichend, dass im Zuge der Registrierung ein einziges Bekanntbild, zum Beispiel ein Gesichtsbild, erfasst wird. Dieses kann später als Basis dienen, um mehrere Bekanntbilder in Form von mehreren Kopien dieses einen Bekanntbildes zu erzeugen. Es ist aber auch möglich, dass im Zuge der Registrierung mehrere Bekanntbilder erfasst werden, zum Beispiel mehrere Varianten eines Gesichtsbildes, die aufgrund leicht unterschiedlicher Position des Gesichts und/oder leicht unterschiedlicher Gesichtsausdrücke leichte Varianzen aufweisen.

In einem nächsten Schritt 104 werden die Bekanntbilder und optional auch mehrere Fremdbilder von der Server-Applikation an eine Client Applikation über ein Netzwerk, zum Beispiel das Internet, gesendet. Die Client-Applikation ist auf einem portablen Telekommunikationsgerät der einen Person instanziiert, die sich in Schritt 102 registriert hatte. Das portable Telekommunikationsgerät kann insbesondere ein Smartphone sein. Das zielgerichtete Senden der Bekanntbilder und optional auch der Fremdbilder an die Client Applikation nur desjenigen Telekommunikationsgeräts, dass auch dieser einen Person zugeordnet ist, kann zum Beispiel dadurch erfolgen, dass für das im Zuge der Registrierung erzeugte Nutzerprofil ein Nutzername und ein Passwort erzeugt wird und sich die Person eine sogenannte Client-App herunterlädt und dort mittels dieser Nutzername-Passwort Kombination eingeloggt. Die Client Applikation kann dann von der Server-Applikation erfragen, ob Bekanntbilder und/oder Fremdbilder für diese Person vorliegen und die entsprechenden Bilder automatisch im Hintergrund herunterladen.

Schritt 104 kann je nach Ausführungsform sehr verschieden implementiert sein. Beispielsweise können die Bekanntbilder während oder unmittelbar im Anschluss an die Registrierung einmalig von der Server-Applikation auf die Client-Applikation übertragen werden, wo sie dann lokal gespeichert sind und wiederholt zur Authentifikation aus der Ferne verwendet werden können. In diesem Fall können die Bekanntbilder optional serverseitig gelöscht werden. Alternativ dazu können die Bekanntbilder aber auch primär serverseitig gespeichert sein und für jede einzelne später zur folgende Authentifikation aus der Ferne an das Telekommunikationsgerät übertragen werden. Auf Einzelheiten entsprechende Ausführungsformen wird in anderen Figuren näher eingegangen.

In einem nächsten Schritt 106 erzeugt ein Authentifizierungsmodul eine (vorzugsweise zufällige) Sequenz ("Challenge") mehrerer Bekanntbilder und Fremdbilder der Person. Das Authentifizierungsmodul kann Bestandteil der Client-Applikation oder Bestandteil der Server-Applikation sein. Falls Sie Bestandteil der Server-Applikation ist, wird die Spezifikation der Sequenz über das Netzwerk an die Client-Applikation übermittelt.

Die Sequenz beinhaltet eine Mischung von Fremdbildern und Bekanntbildern in einer bestimmten, vorzugsweise zufälligen und für jede Authentifizierung neu erzeugten Reihung, wobei die Reihung dem Authentifizierungsmodul bekannt ist. Eine zufällige Sequenz von Bekannt- und Fremdbildern ist eine Bildsequenz, bei welcher die chronologische Reihenfolge der Bekanntbilder und Fremdbilder und optional zudem auch die Anzahl der Bekanntbilder und/oder Fremdbilder zufällig gewählt wird. Die Sequenz der Bekanntbilder und Fremdbilder wird von dem Authentifizierungsmodul gemäß einer Ausführungsform bei jedem Authentifizierungsvorgang auf Zufallsbasis neu erzeugt.

Bei den mehreren Bekanntbildern kann es sich um Kopien eines einzigen Bekanntbilds handeln. Bei den mehreren Fremdbildern kann es sich um Kopien eines einzigen Fremdbildes handeln. Es kann sich aber auch um Mischungen verschiedener Bekanntbilder und/oder verschiedener Fremdbilder handeln.

Je nachdem, ob das Authentifizierungsmodul serverseitig oder clientseitig implementiert ist, muss im Falle einer serverseitigen Erzeugung der Bildsequenz eine Spezifikation der Bildsequenz und optional außerdem die entsprechenden Fremdbilder und Bekanntbilder von der Server-Applikation an die Client-Applikation über ein Netzwerk übermittelt werden. Dieser Schritt ist nicht nötig, falls die Bildsequenz clientseitig (also durch die Client-Applikation des portablen Telekommunikationsgeräts) erzeugt wird und dort bereits die entsprechenden Bekanntbilder und Fremdbilder vorhanden sind.

Nachdem also die Person in den sicheren Räumlichkeiten registriert und ein oder mehrere Bekanntbilder für diese Person erfasst und clientseitig und/oder serverseitig gespeichert wurden, liegen die technischen Voraussetzungen dafür vor, dass sich die Person von nun an von der Ferne aus ein oder mehrere weitere male gegenüber der Organisation authentifizieren kann, wie dies im Folgenden beschrieben ist.

Beispielsweise können seit der Registrierung der Personenschritt 102 mehrere Monate oder Jahre vergangen sein, bevor die erneute Authentisierung der Person aus der Ferne gegenüber der Organisation gemäß der folgenden Schritte 108-114 erfolgt. Beispielsweise kann es sein, dass nach einigen Jahren der im Zuge der Registrierung ausgestellte Ausweis seine Gültigkeit verliert und neu ausgestellt werden muss. Aus gesundheitlichen oder anderen Gründen kann die Person aber die sicheren Räumlichkeiten der Behörde nicht aufsuchen und beantragt daher eine Authentisierung aus der Ferne. Beispielsweise kann die Behörde bzw. sonstige Organisation in Antwort auf den Erhalt eines solchen Antrags einen kontaktlosen Sensor zur Erfassung von Hirnaktivitätssignalen (KLHA-Sensor), zum Beispiel eine spezielle Kamera oder einen elektrischen Sensor, an die von der Person spezifizierte Wunschadresse schicken. Der KLHA-Sensor ist so ausgebildet, dass er irreversibel oder reversibel so mit dem portablen Telekommunikationsgerät der Person verbunden werden kann, sodass er erfasste Hirnaktivitätssignale an die Client-Applikation des Telekommunikationsgeräts weiterleiten kann. Nachdem die Person den KLHA-Sensor erhalten und mit dem eigenen Telekommunikationsgerät verbunden hat, können die weiteren Schritte durchgeführt werden. In manchen Ausführungsformen ist es auch möglich, die bereits herstellerseitig in dem Telekommunikationsgerät verbaute Kamera als optischen KLHA-Sensor zu verwenden. In diesem Fall ist ein Versand des KLHA-Sensors per Post nicht erforderlich.

In Schritt 108 wird die Sequenz aus Bekanntbildern und Fremdbildern, die zum Zwecke der Authentifikation der einen Person erzeugt wurde, auf einem Display des Telekommunikationsgeräts angezeigt, sodass die Person die Bildsequenz sehen kann.

Während der Anzeige der Bildsequenz erfasst in Schritt 110 der KLHA-Sensor die Hirnaktivitätssignale, die von der Person während des Betrachtens der Sequenz aus Fremdbildern und Bekanntbildern erzeugt werden. Der KLHA-Sensor kann auch mehrere Sensoren umfassen. Sofern in dieser Anmeldung von einem einzigen Sensor gesprochen wird, ist die Möglichkeit der Verwendung mehrerer Sensoren implizit mitgemeint.

Dem Authentifizierungsmodul ist bekannt, zu welchen Zeiträumen Bekanntbilder bzw. Fremdbilder angezeigt wurden. Das Authentifizierungsmodul empfängt diejenigen Hirnaktivitätssignale, die jeweils während der Anzeige eines Bekanntbildes von dem KLHA-Sensor erfasst wurden, als sogenannte "erste Hirnaktivitätssignale" vom KLHA-Sensor. Hirnaktivitätssignale, die jeweils während der Anzeige eines Fremdbildes von dem KLHA-Sensor erfasst wurden, werden von dem Authentifizierungsmodul als sogenannte "zweite Hirnaktivitätssignale" empfangen.

Der Sensor wird so bereitgestellt, dass die Position, Entfernung und Orientierung des Sensors relativ zu dem Kopf der Person, die sich authentisieren möchte, geeignet ist, dass im jeweiligen Fall zu erfassende Hirnaktivitätssignal in hinreichender Stärke zu erfassen.

Falls es sich bei dem KLHA-Sensor beispielsweise um einen elektrischen Sensor handelt, der beispielsweise von der Organisation, gegenüber welchen sich die Person authentisieren möchte, per Post versendet werden kann, kann dieser Sender zusammen mit einer speziellen Halterung an die Person verschickt werden. Die Halterung kann zum Beispiel aus Holz, Kunststoff, Pappe oder einen sonstigen Material oder Verbundstoff bestehen. Die Halterung kann ein oder mehrere Ausnehmungen und/oder Halteelemente beinhalten, die sowohl das portable Telekommunikationsgerät als auch den KLHA-Sensor mechanisch fixieren und halten. Vorzugsweise beinhaltet die Halterung auch ein oder mehrere Standelemente ("Füße"), sodass die Halterung einschließlich des Telekommunikationsgerätes und des KLHA-Sensors stabil auf einer ebenen Fläche, zum Beispiel einer Tischplatte, positioniert werden kann. Die Client Applikation kann dazu ausgebildet sein, dem Nutzer anzuzeigen, wie es sich oder sein Gesicht relativ zu dem Sensor positionieren soll, während er die Bildsequenz auf der Anzeige des Telekommunikationsgerätes betrachtet. So kann sichergestellt werden, dass die Person ihren Kopf in einen sinnvollen und möglichst konstanten Abstand zu dem KLHA-Sensor positioniert. Gemäß manchen Ausführungsformen, insbesondere bei elektrischen KLHA-Sensoren, ist der Abstand zwischen Kopf und KLHA-Sensor kleiner als 15 cm, vorzugsweise kleiner als 10 cm, wobei keine Berührung zwischen Kopf und KLHA Sensor stattfindet.

Falls es sich bei dem Sensor um einen optischen Sensor handelt, zum Beispiel eine herstellerseitig integrierte oder von der besagten Organisation bereitgestellte und mit dem Telekommunikationsgerät verwendbare externe Kamera, kann der Abstand zwischen Kopf und KLHA-Sensor auch größer sein, sodass insbesondere die Augenpartie der Person vollständig optisch erfasst werden kann.

In Schritt 112 führt das Authentifizierungsmodul ein Authentifizierungsverfahren durch. Im Zuge dieser Authentifizierung prüft das Authentifizierungsmodul beispielsweise, ob die chronologische Reihenfolge der ersten und zweiten Hirnaktivitätssignale dem in der Spezifikation der Bildsequenz ("Challenge") codierten zeitlichen Muster von Bekanntbildern und Fremdbildern entspricht. Hierbei prüft das Authentifizierungsmodul z.B., ob zu den Zeiten, in welchen Bekanntbilder gezeigt wurden, immer das gleiche oder ein sehr ähnliches erstes Hirnaktivitätssignal empfangen wurde, und ob zu den Zeiten, in welchen Fremdbilder gezeigt wurden, immer das gleiche oder ein sehr ähnliches zweites Hirnaktivitätssignal empfangen wurde, wobei das erste und zweite Hirnaktivitätssignal signifikant unterschiedlich voneinander sind. Nur falls alle diese Kriterien erfüllt sind, wird die Person von dem Authentifizierungsmodul als erfolgreich authentifiziert behandelt.

Nach manchen Ausführungsformen wird die Sequenz an Bekanntbildern und Fremdbildern so erzeugt, dass sie eine Mindestanzahl an Bekanntbildern und/oder Fremdbildern beinhaltet, z.B. jeweils mindestens 3 oder mindestens 5 Bilder. Im Zuge der Auswertung der ersten und zweiten Hirnaktivitätssignale wird von dem Authentifizierungsmodul geprüft, ob die ersten Hirnaktivitätssignale zueinander ähnlich sind, ob die zweiten Hirnaktivitätssignale zueinander ähnlich sind, und ob die ersten Hirnaktivitätssignale zu den zweiten Hirnaktivitätssignalen unähnlich sind. Bei manchen Ausführungsformen, bei denen die Challenge eine große Anzahl an Bildern beinhaltet, z.B. mindestens 10 Bilder insgesamt, kann das Authentifizierungsmodul auch eine gewisse Toleranz für einzelne falsche Ergebnisse haben, beispielsweise maximal ein Hirnaktivitätssignal, welches der anderen Signalkategorie (erstes oder zweites Hirnaktivitätssignal) ähnlicher sieht als der Kategorie, der es angesichts des gezeigten Bildes angehören sollte. In manchen Ausführungsformen gelten die Anforderungen an die Signalkategorietreue (Reproduzierbarkeit) absolut, d.h., es darf gar keine falsche Abweichung von erwarteten und beobachteten Signalähnlichkeiten geben. In anderen Ausführungsformen, z.B. solchen wo sehr lange Signalsequenzen verwendet und/oder die Sicherheitsanforderungen geringer sind können die Anforderungen an die Reproduzierbarkeit geringer sein und einen oder einige wenige Fehler zulassen.

In Schritt 114 gibt das Authentifizierungsmodul die Ergebnisse des ersten und zweiten Authentifizierungsverfahrens aus. Beispielsweise kann das Authentifizierungsmodul clientseitig instanziiert sein und das Ergebnis der Authentifizierung an die Server-Applikation mitteilen, sodass die Server-Applikationen Abhängigkeit von dem übermittelten Ergebnis bestimmte Funktionen durchführt und/oder diese Funktionen zur Benutzung durch eine sich erfolgreich authentifizierte Person freigibt. Zusätzlich oder alternativ dazu kann das Authentifizierungsergebnis der Person über die Anzeige des Telekommunikationsgerätes angezeigt werden.

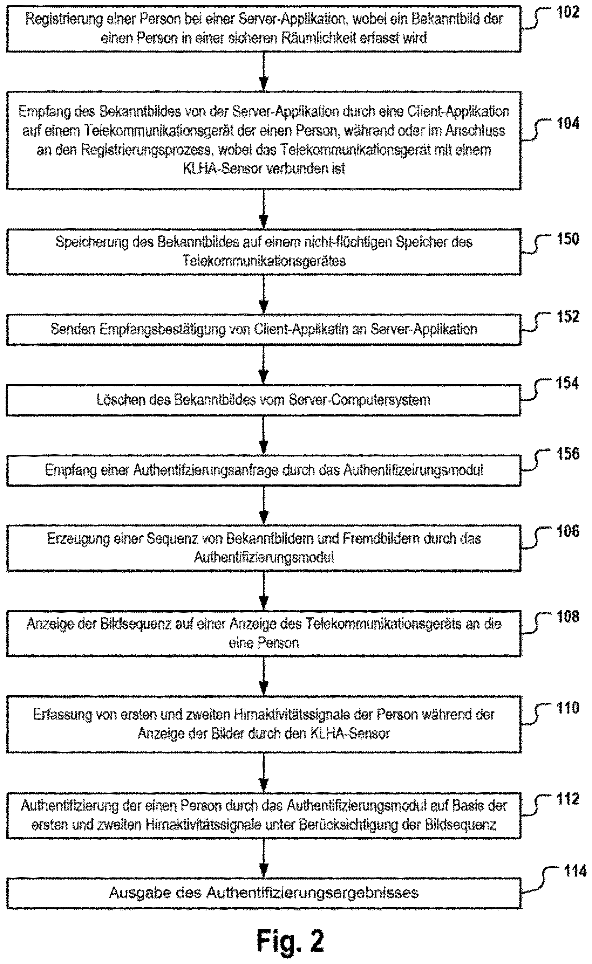

**Figur 2** ein Flussdiagramm einer Variante des Verfahrens nach Figur 1, wonach die Bekanntbilder im Zuge der Registrierung clientseitig gespeichert werden.

Die Verfahrensschritte 102, 104, 106-114 entsprechen im Wesentlichen den bereits für Figur 1 beschriebenen Schritten und sollen daher hier nicht wiederholt werden. Bei der in Figur 2 beschriebenen Verfahrensvariante werden das oder die im Zuge der Registrierung erfassten Bekanntbilder während oder nach der Registrierung von der Server-Applikation an die Client-Applikation über eine Netzwerkverbindung gesendet. Beispielsweise kann es Bestandteil des Verfahrens gemäß Figur 2 sein, dass die Person, die sich in Schritt 102 registriert, im Zuge der Registrierung auch die Client-Applikation auf das eigene Smartphone lädt und dort instanziiert und die erfassten Bekanntbilder und vorzugsweise auch ein oder mehrere Fremdbilder noch während der Registrierung herunterlädt.

In Schritt 150 werden die ein oder mehreren Bekanntbilder der Person sowie optional auch ein oder mehrere Fremdbilder in einem nichtflüchtigen Speichermedium des portablen Telekommunikationsgerätes gespeichert. Vorzugsweise werden danach die ein oder mehreren Bekanntbilder der registrierten Person vom Server-Computersystem komplett gelöscht. Dies kann den Vorteil eines besonders hohen Datenschutzes haben. Bei den Bekanntbildern handelt es sich um personenbezogene Daten, zum Beispiel Gesichtsbilder. Eine zentrale Speicherung der Gesichtsbilder einer großen Anzahl von Personen birgt die Gefahr, dass im Falle eines Eindringens unberechtigter Personen in das Server-Computersystem personenbezogene Daten einer Vielzahl von Personen gestohlen werden. Um dies zu verhindern, können beispielsweise serverseitig hohe Sicherheitsmaßnahmen vorgenommen werden. Eine Alternative hierzu kann es sein, die Bekanntbilder gar nicht erst alle serverseitig permanent zu speichern, sondern die Bekanntbilder lediglich lokal in den Daten speichern der portablen Telekommunikationsgeräte der bei dem Server registrierten Personen zu speichern.

In Schritt 156 empfängt das Authentifizierungsmodul eine Authentifizierungsanfrage der Client-Applikation. Falls das Authentifizierungsmodul Bestandteil der Server-Applikation ist, wird die Authentifizierungsanfrage über ein Netzwerk empfangen. Andernfalls ist das Authentifizierungsmodul Bestandteil der Kleinapplikation und enthält also die Anfrage von einem anderen Modul der gleichen Applikation. Die nachfolgenden Schritte 106-114 werden in Antwort auf die Authentifizierungsanfrage auf Basis der clientseitig gespeicherten Bilder durchgeführt. Es ist also nicht erforderlich, dass für jede erneute Authentifizierungsanfrage die Bekanntbilder und optional auch die Fremdbilder von dem Server-Computersystem auf das Telekommunikationsgerät übertragen werden. Dies kann den Vorteil haben, dass die Menge der zu übertragenen Daten reduziert und das Authentifizierungsverfahren dadurch beschleunigt wird.

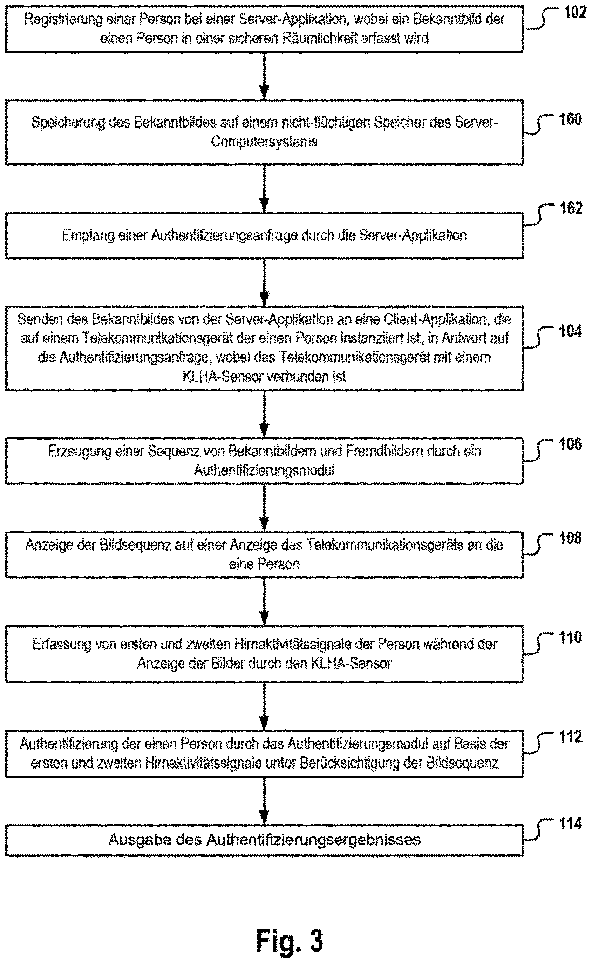

**Figur 3** zeigt ein Flussdiagramm einer anderen Variante des Verfahrens nach Figur 1, wonach die im Zuge der Registrierung erfassten Bekanntbilder serverseitig gespeichert werden und in Antwort auf jede einzelne künftige Authentifizierungsanfrage an die Client-Applikation übermittelt werden.

Die Verfahrensschritte 102, 104, 106-114 entsprechen im Wesentlichen den bereits für Figur 1 beschriebenen Schritten und sollen daher hier nicht wiederholt werden. Bei der in Figur 3 beschriebenen Verfahrensvariante wird das bzw. werden die im Zuge der Registrierung erfassten Bekanntbilder während oder nach der Registrierung in Schritt 160 in einem nichtflüchtigen Speicher des Servercomputersystems gespeichert. Beispielsweise kann das Server-Computersystem eine NutzerprofilDatenbank beinhalten, in welcher eine Vielzahl von Nutzerprofilen gespeichert sind. Jedes der Nutzerprofile repräsentiert eine Person, die sich bei den Betreiber des Server-Computersystems registriert hat. Außerdem kann das Server-Computersystem eine Bilddatenbank beinhalten, die eine Vielzahl von Bekanntbildern und Fremdbildern beinhaltet, wobei zumindest jedes der Bekanntbilder nur einem einzigen Nutzerprofil zugewiesen ist. Die Nutzerprofile und Bilder können in verschiedenen oder dergleichen Datenbank gespeichert sein. Bei der Datenbank kann es sich zum Beispiel um eine relationale Datenbank, um ein Verzeichnis innerhalb eines Verzeichnisbaumes oder eine sonstige Datenstruktur zur organisierten Speicherung von Daten handeln. Vorzugsweise werden die Nutzerprofile und/oder Bekanntbilder und/oder Fremdbilder in einem nichtflüchtigen Speichermedium des Server-Computersystems gespeichert.

In Schritt 162 empfängt die Server-Applikation eine Authentifizierungsanfrage. Die Authentifizierungsanfrage beinhaltet einen Identifikator der Person, z.B. eine Personen-ID, eine Kombination aus Name und Geburtsdatum oder sonstigen Daten, welche die Person und deren zugehöriges Nutzerprofil für die Server-Applikation eindeutig identifizierbar macht.

Beispielsweise kann das Authentifizierungsmodul serverseitig instanziiert sein und die Authentifizierungsanfrage über das Netzwerk empfangen. In Antwort auf den Empfang der Authentifizierungsanfrage identifiziert die Server-Applikation anhand der Personen-ID das diese Person repräsentierende Nutzerprofil sowie ein oder mehrere serverseitig gespeicherte Bekanntbilder, die diesem Nutzerprofil zugeordnet sind. Das zumindest eine identifizierte Bekanntbild und optional ein oder mehrere Fremdbilder werden von der Server-Applikation in Antwort auf die Authentifizierungsanfrage in Schritt 104 an die Client-Applikation über eine Netzwerkverbindung übermittelt.

Die weiteren Schritte 106-114 werden in Antwort auf die Authentifizierungsanfrage auf Basis der Anti Client-Applikation für eine bestimmte Authentifizierungsanfrage übermittelten Bilder durchgeführt. Vorzugsweise werden die übermittelten Bilder nur clientseitig nur temporär, also zum Beispiel nur für die Dauer des Authentifizierungsvorgangs, gespeichert, und dann gelöscht. Es ist also erforderlich, dass für jede erneute Authentifizierungsanfrage die Bekanntbilder und optional auch die Fremdbilder erneut von dem Server-Computersystem auf das Telekommunikationsgerät in Antwort auf eine entsprechende Authentifizierungsanfrage übertragen werden. Dies kann den Vorteil haben, dass clientseitig weniger Speicher verbraucht wird. Angesichts des Umstands, dass Speicherplatz auf portablen Geräten oftmals knapp und teuer ist, und dass insbesondere bei der Verwendung einer Vielzahl von Bekanntbildern und Fremdbildern der Speicherbedarf erheblich sein kann, kann diese Ausführungsform den Vorteil des geringeren clientseitigen Speicherverbrauchs aufweisen.

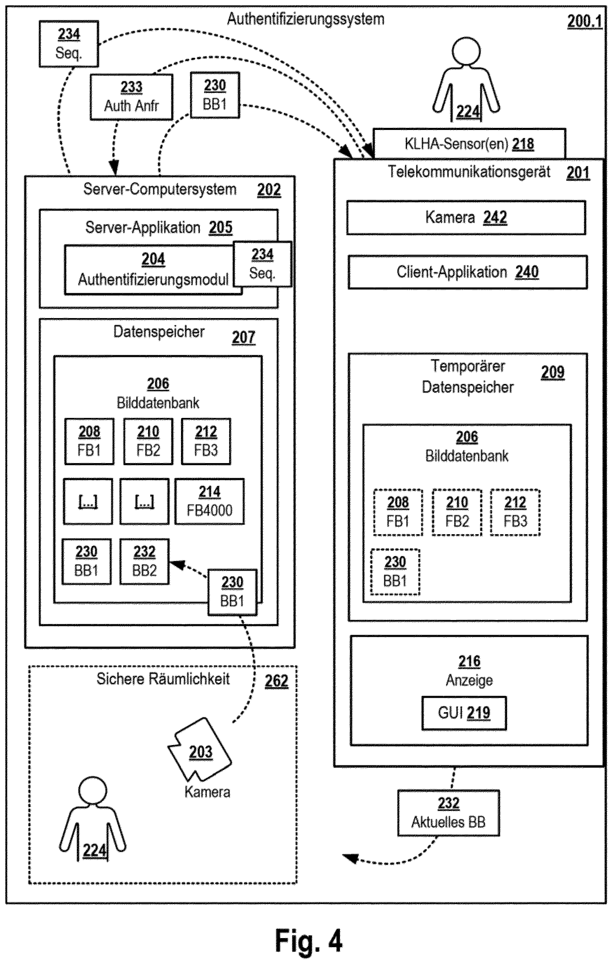

**Figur 4** zeigt ein Blockdiagramm eines Authentifizierungssystems 200.1 mit serverseitigen Authentifizierungsmodul.

Das System 200.1 beinhaltet ein Server-Computersystem 202. Das Server-Computersystem kann als monolithisches Computersystem oder als verteiltes Computersystem, zum Beispiel als Cloudcomputersystemen, ausgebildet sein. Auf dem Server-Computersystem ist eine Server-Applikation 205 instanziiert, welche gemäß der in Figur 4 gezeigten Ausführungsform ein Authentifizierungsmodul 204 beinhaltet. Das Server-Computersystem 202 beinhaltet einen Datenspeicher 207, der aus einem oder mehreren physischen Daten Speichermedien bestehen kann. Vorzugsweise ist der Datenspeicher 207 als nichtflüchtigen Datenspeicher ausgebildet. Der Datenspeicher 207 beinhaltet eine Datenbank mit den Nutzerprofilen einer Vielzahl von Nutzern, die sich auf sichere Weise bei der Server-Applikation 205 registriert haben. Außerdem beinhaltet der Datenspeicher 207 eine Bilddatenbank 206 mit mehreren Fremdbildern 208, 210, 212, 214 sowie mehreren Bekanntbildern 230, 232. Jedes Bekanntbild ist maximal einem der Nutzerprofile zugeordnet. Die Zuordnung beruht darauf, dass im Zuge der Registrierung der Person ein oder mehrere Bekanntbilder spezifisch von und/oder für diese Person erfasst und mit dem Nutzerprofil diese Person verknüpft gespeichert werden. Die Erfassung von einem Bekanntbild für eine bestimmte Person 224 geschieht dabei innerhalb einer sicheren Räumlichkeit 262 und vorzugsweise mit technisch gesicherten Bilderfassungssystemen 203, zum Beispiel Kameras.

Nach einer Ausführungsform beinhaltet die Kamera, die zur Erstellung eines Bekanntbildes für eine bestimmte Person im Zuge der Registrierung der Person verwendet wird, einen Signierschlüssel. Die Kamera ist zudem dazu ausgebildet, mit diesem Signierschlüssel die von den Kameras erfassten Bilder zu signieren. Die Server-Applikation beinhaltet einen zu dem Signierschlüssel korrespondierenden Signaturprüfschlüssel und verwendet diesen, um die Signatur der von der Kamera erfassten Bilder zu prüfen und die Bilder nur dann als Bekanntbilder der Person zu verwenden, wenn die Signatur valide ist.

Nach einer Ausführungsform beinhaltet das Authentifizierungssystem 200.1 auch die Kamera 203.nach anderen Ausführungsformen ist die Kamera nicht in dem System 200.1 enthalten.

Das System beinhaltet außerdem ein portables Telekommunikationsgerät 201, welches der Person 224 gehört, die sich bereits zu einem vorhergehenden Zeitpunkt bei der Server-Applikation 205 registriert hat. Das Telekommunikationsgerät beinhaltet eine Kamera 242 sowie eine Client-Applikation 240, die mit der Server-Applikation 205 interoperabel ist und Daten über eine Netzwerkverbindung austauschen kann. Das Telekommunikationsgerät ist kommunikativ und vorzugsweise auch mechanisch an einen KLHA-Sensor 218 gekoppelt. Der KLHA-Sensor kann zum Beispiel ein optischer Sensor sein. In diesem Fall ist der Sensor entweder als zusätzliche externe Spezialkamera ausgebildet, die nachträglich mit dem Telekommunikationsgerät 201 verbunden werden kann, oder es handelt sich bei dem optischen KLHA-Sensor 218 und der herstellerseitig in das Telekommunikationsgerät 201 integrierten Kamera 242 um die gleiche Kamera.

Nach anderen Ausführungsformen handelt es sich bei dem KLHA Sensor 218 um einen elektrischen Sensor, der zum Beispiel postalisch an die Person 224 zum Zwecke der Authentifizierung aus der Ferne zugestellt wurde. Der Sensor kann nachträglich über entsprechende Schnittstellen und Haltevorrichtungen an das Telekommunikationsgerät gekoppelt werden, wobei die Kopplung vorzugsweise reversibel ausgebildet ist. Dies hat den Vorteil, dass die Person 224 den KLHA-Sensor nach Benutzung wieder an den Betreiber des Server-Computersystem 202 zurücksenden kann.

Das Telekommunikationsgerät beinhaltet einen temporären Datenspeicher 209, zum Beispiel ein Arbeitsspeicher. Dieser wird gemäß Ausführungsformen der Erfindung dazu genutzt, die normalerweise serverseitig dauerhaft gespeicherten Bekanntbilder zum Zwecke der Authentifizierung der Person aus der Ferne lokal auf dem Telekommunikationsgerät zwischen zu speichern. Beispielsweise kann temporär eine clientseitige Kopie eines Teils der Bilddatenbank 206 gespeichert werden, wobei der Teil der Bilddatenbank ein oder mehrere Fremdbilder und selektiv nur die Bekanntbilder der Person umfasst, welcher das Telekommunikationsgerät zugeordnet ist. Nach Abschluss des Authentifizierungsverfahrens können die temporär gespeicherten Bilder von der Client-Applikation wieder gelöscht werden. Außerdem beinhaltet das Telekommunikationsgerät 201, das zum Beispiel als Smartphone ausgebildet sein kann, eine Anzeige 216, zum Beispiel einen Touchscreen. Die Client-Applikation 240 ist dazu ausgebildet, eine graphische Benutzeroberfläche (GUI) 219 zu erzeugen, die die Person durch das Authentifizierungsverfahren leitet.

Im Folgenden soll kurz umrissen werden, wie das in Figur 4 dargestellte Authentifizierungssystem 200.1 gemäß Ausführungsformen der Erfindung verwendet werden kann, um eine bereits registrierte Person aus der Ferne zu authentifizieren und außerdem nach erfolgreicher Authentifizierung sogleich ein aktuelles Bekanntbild, zum Beispiel ein Gesichtsbild, dieser Person an den Server zu übermitteln um dieses Bild für künftige Authentifizierungsversuche und/oder zur Personalisierung von Dokumenten für diese Person zu verwenden.

Zunächst registriert sich die Person 224 in der sicheren Räumlichkeit 262 wie bereits beschrieben. Hierbei erfasst eine Kamera 203 ein oder mehrere Bekanntbilder, die verknüpft mit einem Nutzerprofil diese Person in einem nichtflüchtigen Datenspeicher 207 des Server-Computersystems 202 gespeichert werden. Beispielsweise wird das Bekanntbild 230 im Zuge der Registrierung erfasst und in der Bilddatenbank 206 serverseitig in dem Datenspeicher 207 gespeichert.

Nach vielen Jahren möchte sich die Person 224 außerhalb der gesicherten Räumlichkeit, zum Beispiel in der eigenen Wohnung, erneut bei der Server-Applikation authentisieren, zum Beispiel um einen bestimmten Dienst in Anspruch zu nehmen oder um einen Ausweis neu auszustellen. Um dies zu ermöglichen, benötigt die Person 224 einen mit dem eigenen Smartphone koppelbaren KLHA-Sensor 218, der zum Beispiel per Post vom Betreiber der Server-Applikation beantragt werden kann oder dir, sofern es sich um einen optischen Sensor handelt, bereits in Form der Kamera 242 in dem Smartphone beinhaltet sein kann. Die Person kann mit einer GUI 219 der Client-Applikation 240 interagieren, um das Senden einer Authentifizierungsanfrage 233 an die Server-Applikation 205 zu veranlassen. Die Anfrage beinhaltet einen Identifikator der Person 224, also einen Datenwert, der ist der Server-Applikation erlaubt, ein oder mehrere dieser Person zugeordnet Bekanntbilder innerhalb der Bilddatenbank 206 zu identifizieren. In Antwort auf die Authentifizierungsanfrage erzeugt das Authentifizierungsmodul 204 eine Spezifikation 234 einer zufälligen Sequenz aus mehreren Fremdbildern und mehreren identifizierten Bekanntbildern dieser Person 224. Die Spezifikation der Sequenz und optional auch die Sequenz der Fremdbilder und Bekanntbilder wird von der Server-Applikation in Antwort auf die Authentifizierungsanfrage 233 an die Client-Applikation über eine Netzwerkverbindung übermittelt. Die Client Applikation erzeugt daraufhin eine GUI 219, die die Person 224 dazu anweist, den Kopf und den KLHA Sensor 218 auf eine bestimmte Weise relativ zueinander zu positionieren und die im folgenden gezeigten Bilder konzentriert anzusehen. Wenn die Person bestätigt, die Anweisung verstanden zu haben, zeigt die Client-Applikation 240 über die Anzeige 216 eine Sequenz aus Fremdbildern und Bekanntbildern gemäß der übermittelten SequenzSpezifikation 234. Während die Bildsequenz angezeigt wird erfasst der KLHA Sensor kontinuierlich und kontaktlos Hirnaktivitätssignale der Person 224. Optional kann die Kamera 242 zusätzliche Daten der Person erfassen, zum Beispiel ob die Augen auch wirklich konzentriert auf die Anzeige 216 gerichtet sind. Die während des Anzeigen von Bekanntbildern erfassten Hirnaktivitätssignale werden als erste Hirnaktivitätssignale bezeichnet. Die während des Anzeigens von Fremdbildern erzeugten Hirnaktivitätssignale werden als zweite Hirnaktivitätssignale bezeichnet. Die erfassten ersten und zweiten Hirnaktivitätssignale werden in der gleichen chronologischen Ordnung wie sie erfasst wurden über das Netzwerk an das Authentifizierungsmodul übermittelt. Da in dem hier gezeigten Beispiel das Authentifizierungsmodul serverseitig instanziiert ist, werden die Hirnaktivitätssignale über das Netzwerk gesendet. Das Authentifizierungsmodul ermittelt die Ähnlichkeiten und Unähnlichkeiten der ersten und zweiten Hirnaktivitätssignale um festzustellen, ob die Ähnlichkeiten und Unähnlichkeiten der Hirnaktivitätssignale ("Response") der zufälligen Sequenz an Bekanntbildern und Fremdbildern ("Challenge") entsprechen. Entspricht das Muster der Hirnaktivitätssignale dem erwarteten Muster auf Basis der spezifizierten Sequenz, gilt die Person als erfolgreich authentifiziert. Dies kann eine Reihe weitere Schritte zur Folge haben. Beispielsweise kann daraufhin die Client-Applikation eine GUI 219 erzeugen, in welcher der Person mitgeteilt wird, dass sie sich erfolgreich authentisiert hat, und in welcher die Person dazu aufgefordert wird, das Gesicht in eine bestimmte Position relativ zur Kamera 242 zu halten, damit die Kamera ein Gesichtsbild von der Person erfassen kann. Optional kann die Client-Applikation den richtigen Abstand von Gesicht und Kamera überprüfen und gegebenenfalls Korrekturanweisungen erzeugen und ausgeben. Wenn die Person 224 Gesicht relativ zur Kamera 242 korrekt positioniert hat, löst die Client-Applikation das Erfassen eines aktuellen Gesichtsbildes 232 durch die Kamera 242 aus. Das aktuelle Gesichtsbild kann nun direkt über die Netzwerkverbindung an die Server-Applikation übermittelt werden, zum Beispiel um damit die bei der Registrierung erfassten Bekanntbilder für die Person 224 zu ersetzen und/oder um das aktuelle Bekanntbild 232 dazu zu verwenden, ein Identitätsdokument oder Sicherheitsdokument für die Person 224 zu personalisieren. Optional kann vor dem Schritt der Übermittlung des aktuellen Bekanntbildes 232 ein weiterer Prüfschritt erfolgen, sodass das aktuelle Bekanntbild 232 nur dann an die Server-Applikation 205 übermittelt wird, wenn das aktuelle Bekanntbild 232 als valide gilt. Der Prüfschritt kann beinhalten, dass das erfasste aktuelle Bekanntbild 232 von der Client-Applikation 240 noch einmal über die GUI der Person 224 angezeigt wird und währenddessen Hirnaktivitätssignale der Person 224 durch den KLHA-Sensor 218 erfasst werden. Das Authentifizierungsmodul (das clientseitig oder serverseitig vorlegen kann) vergleicht das während der Anzeige des aktuellen Bekanntbildes 232 erfasste Hirnaktivitätssignale mit den ersten und zweiten Hirnaktivitätssignalen, die während der Anzeige der Bildsequenz erfasst wurden. Nur dann, wenn das Hirnaktivitätssignal des aktuellen Bekanntbildes ähnlich ist zu den ersten Hirnaktivitätssignalen und unähnlich ist zu den zweiten Hirnaktivitätssignalen gilt das aktuelle Bekanntbild 232 als valide und vertrauenswürdig. Dies kann helfen, auszuschließen, dass die Person sich während der Erfassung des aktuellen Bekanntbildes eine Maske aufsetzt um die Erzeugung eines Identitätsdokuments mit einem gefälschten Bild zu bewirken.

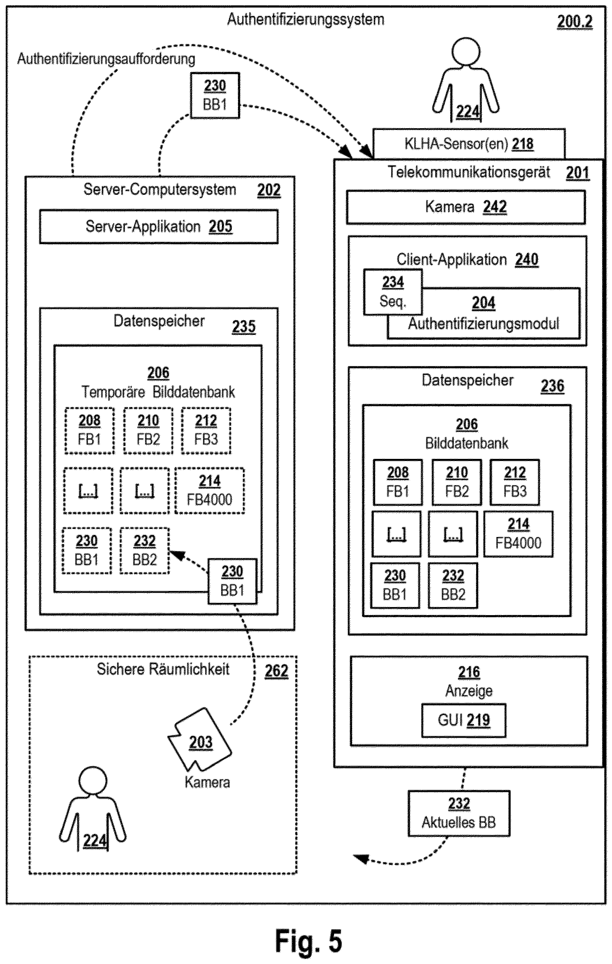

**Figur 5** zeigt ein Blockdiagramm eines Authentifizierungssystems 200.2 mit clientseitigen Authentifizierungsmodul 204.

Die einzelnen Systemelemente entsprechen im Wesentlichen den Elementen des Systems gemäß der Ausführungsform, die in Figur 4 abgebildet ist, und sollen hier nicht erneut erläutert werden. Vielmehr wird hier nur auf diejenigen Aspekte eingegangen, im Hinblick auf welche sich das in Figur 5 abgebildete System von dem in Figur 4 abgebildeten System unterscheidet.

Das Server-Computersystem 202 beinhaltet einen Datenspeicher 235, der als flüchtiger oder nichtflüchtiger Datenspeicher ausgebildet sein kann. Der Datenspeicher 235 umfasst eine Bilddatenbank 206, in welcher Fremdbilder und/oder Bekanntbilder verschiedener bei der Server-Applikation registrierte Personen gespeichert sind. Zumindest die Bekanntbilder der Personen werden nur kurzzeitig, d. h. temporär erfasst. Die Speicherdauer erstreckt sich vorzugsweise lediglich auf den Zeitraum bis die erfassten Bekanntbilder erfolgreich an eine Client-Applikation 240 des portablen Telekommunikationsgeräts 201 der Person 224 übermittelt werden konnte. Beispielsweise kann die Server-Applikation dazu ausgebildet sein, während oder unmittelbar nach der Registrierung die bei der Registrierung erfassten Bekanntbilder der Person 224 an die Client-Applikation 240 über eine Netzwerkverbindung zu übermitteln. Die Client-Applikation ist dazu ausgebildet, nach Erhalt der Bekanntbilder der Person 224 und optional auch von Fremdbildern die Bekanntbilder und optional auch die Fremdbilder in einem lokalen Datenspeicher 236 zu speichern. Der lokale Datenspeicher 236 ist vorzugsweise als nichtflüchtiger Datenspeicher ausgebildet. Nach erfolgreicher Speicherung der Bilder auf dem Datenspeicher 236 sendet die Client-Applikation eine Nachricht bezüglich der erfolgreichen Speicherung an die Server-Applikation 205. Der Erhalt der Nachricht veranlasst die Server-Applikation, die Bekanntbilder der Person 224 vom Datenspeicher 235 zu löschen. Im Ergebnis liegen nach der Registrierung der Person die sensiblen Bekanntbilder also nur noch clientseitig vor. Vorzugsweise, jedoch nicht notwendigerweise, ist in Ausführungsformen mit rein clientseitiger Speicherung der Bekanntbilder auch das Authentifizierungsmodul ein Bestandteil der Client-Applikation.

Um die Person Monate und Jahre nach der erfolgreichen Registrierung erneut aus der Ferne zu authentifizieren erzeugt die Client-Applikation 240 speziell für den aktuellen Authentifizierungsversuch eine Spezifikation 234 einer Sequenz aus Fremdbildern und Bekanntbildern. Die Sequenz ist vorzugsweise zufällig und wird für jeden einzelnen Authentifizierungsversuch erneut von dem Authentifizierungsmodul erzeugt. Die Client-Applikation zeigt über eine GUI 219 eine Sequenz von Fremdbildern und Bekanntbildern auf Basis der lokalen Bilddatenbank 206 und gemäß der Sequenzspezifikation 234 an. Die nachfolgenden Schritte können wie für Figur 4 beschrieben durchgeführt werden. Eine Übermittlung von Bekanntbildern vom Server zum Client für jeden einzelnen Authentifizierungsvorgang ist nicht möglich und nicht nötig, da die Bekanntbilder clientseitig gespeichert sind. In manchen Ausführungsformen ist es aber möglich, dass die Fremdbilder serverseitig gespeichert sind und in diesem Fall für jeden Authentifizierungsvorgang erneut übermittelt werden. Dies kann den Vorteil haben, dass dann, wenn das Authentifizierungsverfahren aus der Ferne sehr häufig eingesetzt wird, kein Gewöhnungseffekt an eine begrenzte Anzahl von lokal gespeicherten Fremdbildern eintritt. Serverseitig können im allgemeinen eine viel größere Menge an Fremdbildern gespeichert werden, sodass es möglich ist, den Nutzer bei jedem Authentifizierungsvorgang Fremdbilder zu präsentieren, die der Nutzer bisher noch nicht gesehen hat. Dies stellt sicher, dass die Unterschiedlichkeit der ersten und zweiten Hirnaktivitätssignale bleibend hoch bleibt auch bei häufiger Verwendung des Authentifizierungsverfahrens gemäß Ausführungsformen der Erfindung.

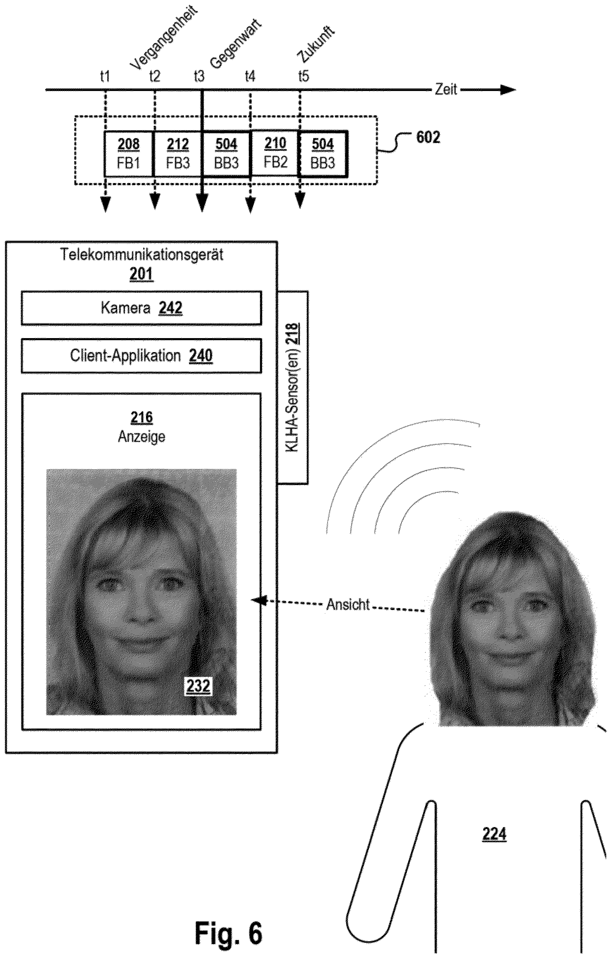

**Figur 6** zeigt ein Authentifizierungssystem 200, welches im Anschluss an eine erfolgreiche Authentisierung einer Person 224 auf Basis einer Bildsequenz ein aktuelles Gesichtsbild 232 der Person erfasst und über ein Display anzeigt, um die Echtheit des erfassten Gesichtsbilds zu verifizieren.

Zunächst wird der Person 224 eine Sequenz 602 von Bekanntbildern und Fremdbildern, die von dem Authentifizierungsmodul für einen aktuellen Authentifizierungsprozess der Person 224 zufällig erzeugt wurde, angezeigt. Die Sequenz beginnt mit einem ersten Fremdbild 208. Es folgt ein weiteres Fremdbild 212, dann ein Bekanntbild 504, dann ein anderes Fremdbild 210 und schließlich wieder ein Bekanntbild 504.

die Client-Applikation ist dazu ausgebildet, gemäß dieser zufällig erzeugten Sequenz die einzelnen Bilder nacheinander über die Anzeige 216 der Person 224 anzuzeigen. Beispielsweise kann die Client-Applikation 240 dazu konfiguriert sein, jedes der Bilder 208, 212, 504, 210, 504 zwei Sekunden lang anzuzeigen und nach Ablauf der zwei Sekunden ohne Pause sofort das nächste Bild der Sequenz anzuzeigen. Beispielsweise zeigte die Client-Applikation an dem Zeitpunkt t1 das Fremdbild 208 an, 2 Sekunden später, zum Zeitpunkt t2, ein weiteres Fremdbild einer anderen fremden Person, und wiederum 2 Sekunden später, zum Zeitpunkt t3, ein Bekanntbild 504 der Person 224, die sich aktuell authentifizieren möchte. Die Anzeige 216 zeigt das zum aktuellen Zeitpunkt (zwischen t3 und t4) auf der Anzeige ausgegebene Bekanntbild der Person. Wenn nach dem Zeitpunkt t3 weitere 2 Sekunden verstrichen sein werden, wird das Bekanntbild 504 durch das weitere Fremdbild 210 ersetzt werden, und nach weiteren 2 Sekunden zum Zeitpunkt t5 durch das Bekanntbild 504. Während die Bildsequenz 602 der Person 224 angezeigt wird, wird eine entsprechende Sequenz von ersten und zweiten Hirnaktivitätssignalen vom KLHA-Sensor aufgezeichnet und an das Authentifizierungsmodul zur weiteren Analyse und zur Authentifizierung der Person weitergeleitet.

Die Anzeigedauer der jeweiligen Bilder liegt typischerweise im Bereich zwischen einer und 5 Sekunden, vorzugsweise im Bereich 2-4 Sekunden. Es ist möglich, dass Pausen zwischen dem Anzeigen verschiedener Bilder eingeführt werden, die typischerweise kürzer sind als 5 Sekunden.

Das Authentifizierungsmodul ist dazu ausgebildet, die während der Anzeige der verschiedenen Bilder vom KLHA-Sensor 218 erfassten Hirnaktivitätssignale zu analysieren um festzustellen, ob die ein oder mehreren ersten Hirnaktivitätssignale, die während der Anzeige von Bekanntbildern empfangen wurden, signifikant unähnlich sind zu mehreren zweiten Hirnaktivitätssignalen, die während der Anzeige von Fremdbildern empfangen wurden, wobei Hirnaktivitätssignale, die während der Anzeige von Gesichtsbildern des gleichen Typs erfasst werden, vorzugsweise identisch oder sehr ähnlich sein müssen. Je nach Art der erfassten Hirnaktivitätssignale kann diese Analyse recht unterschiedlich ausfallen. Beispielsweise kann die Analyse eine Bestimmung und einen Vergleich von Amplitude und/oder Amplitudenverlauf über die Zeit ("Signalprofil") eines gemessenen ersten und zweiten Signals umfassen. Bei dem Signal kann es sich um ein elektrisches Signal (gemessen z.B. in Volt) oder ein optisch und durch Bildanalyse erfasstes Signal (gemessen z.B. in mm Pupillendurchmesser bzw. Pupillendurchmesseränderung) handeln. Die Person 224 gilt als erfolgreich gegenüber dem Authentifizierungsmodul authentifiziert, wenn das Authentifizierungsmodul feststellt, dass die ersten Hirnaktivitätssignale signifikant unterschiedlich sind zu den zweiten Hirnaktivitätssignalen, wobei die Abfolge der ersten und zweiten Hirnaktivitätssignale der Abfolge von Bekanntbildern und Fremdbildern entspricht, wobei die Hirnaktivitätssignale, die beim Anzeigen von Bildern des gleichen Typs empfangen wurden, vorzugsweise identisch oder sehr ähnlich sind.

Es ist also nicht in jedem Fall erforderlich, dass zum Beispiel die ersten Hirnaktivitätssignale bei allen Menschen identisch oder nahezu identisch sind. Die Anmelderin hat jedoch festgestellt, dass zumindest eine deutliche Unähnlichkeit der Hirnaktivitätssignale bei Bekanntbildern und Fremdbildern bei praktisch allen Menschen in reproduzierbarer Weise gegeben ist. Somit kann gemäß Ausführungsformen der Erfindung ein Authentifizierungsverfahren bereitgestellt werden, welches die Vorzüge biometrischer Authentifizierungsverfahren mit den Vorzügen von Challenge Response-Authentifizierungsverfahren verbindet.

Nachdem sich die Person erfolgreich gegenüber dem Authentifizierungsmodul authentisiert hat, können weitere Schritte zum Zweck der Erfassung eines aktuellen Bekanntbildes 232 erfolgen wie im Hinblick zum Beispiel auf Figur 4 bereits beschrieben. Um sicherzustellen, dass es sich bei dem aktuellen Bekanntbild um ein Bild des tatsächlichen Gesichts der Person handelt und nicht etwa um das Bild einer Maske, die die Person trägt, wird das von der Kamera 242 erfasste aktuelle Bekanntbild 232 über die Anzeige 216 der Person 224 gezeigt. Währenddessen werden die Hirnaktivitätssignale der Person von dem KLHA-Sensor 218 erfasst und mit den ersten und zweiten Hirnaktivitätssignalen verglichen, die beim Anzeigen der Sequenz 206 erfasst wurden. Wenn die Person keine Maske trägt und das aktuelle Bekanntbild 232 somit valide ist, ist zu erwarten, dass die erfassten Hirnaktivitätssignale identisch oder ähnlich sind zu den ersten Hirnaktivitätssignalen und gleichzeitig unähnlich sind zu den zweiten Hirnaktivitätssignalen. Wenn die Erwartung zutrifft, gilt das aktuelle Bekanntbild 232 als valide. Somit kann sichergestellt werden, dass aktuelle Bekanntbilder, die zum Beispiel zur Personalisierung aktueller Ausweisdokumente verwendet werden können, wirklich einer bestimmten Person zuzuordnen sind, ohne dass es hierfür nötig ist, dass die Person die Räumlichkeiten einer Behörde aufsucht, wo es normalerweise die Aufgabe des besonders geschulten Personals ist, sicherzustellen, dass ein zur Personalisierung von Dokumenten verwendetes Gesichtsbild mit dem realen Gesicht der Person übereinstimmt.

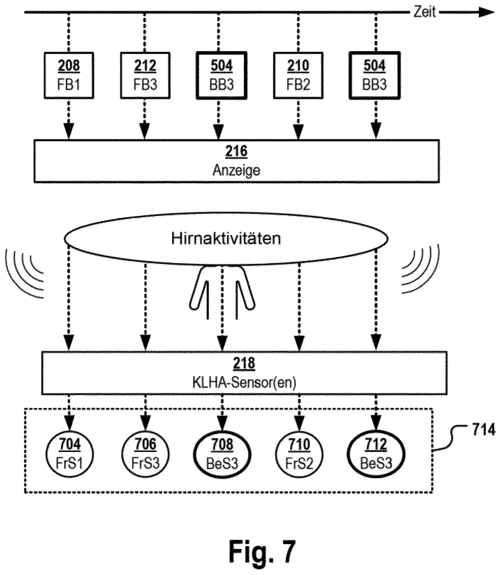

**Figur 7** zeigt eine Sequenz 714 von ersten und zweiten Hirnaktivitätssignalen, die durch Anzeige der Bildsequenz 602 in der Person 224 hervorgerufen werden.

Die Anzeige des Fremdbilds 208 erzeugt ein zweites Hirnaktivitätssignal 704. Die Anzeige des Fremdbilds 212 erzeugt ein zweites Hirnaktivitätssignal 706. Die Anzeige des auf das Bild 212 folgenden Bekanntbildes 504 erzeugt ein erstes Hirnaktivitätssignal 708. Die Anzeige des Fremdbilds 210 erzeugt ein zweites Hirnaktivitätssignal 710. Die Anzeige des auf das Bild 210 folgenden Bekanntbildes 504 erzeugt ein erstes Hirnaktivitätssignal 712. Die gestrichelten Pfeile repräsentieren hier nicht Zeitpunkte, sondern Zeitfenster, zum Beispiel 2 Sekunden lange Zeitfenster, während welcher die entsprechenden Bilder angezeigt und die zu diesen korrespondierenden Hirnaktivitätssignale gemessen werden.

Wenn die Person 224, die sich aktuell als eine bestimmte, bereits bei dem Server-System registrierte Person authentisieren will, wirklich die, die sie vorgibt zu sein, so ist zu erwarten, dass alle ersten Hirnaktivitätssignale 708, 712 einander sehr ähnlich oder identisch sind, dass alle zweiten Hirnaktivitätssignale 704, 706, 710 einander sehr ähnlich oder identisch sind, dass die zeitliche Abfolge der ersten und zweiten Hirnaktivitätssignale der zeitlichen Abfolge der Bekanntbilder und Fremdbilder entspricht, und dass die ersten und zweiten Hirnaktivitätssignale signifikant unterschiedlich sind. In diesem Fall behandelt das Authentifizierungsmodul die Person 224 als erfolgreich authentifiziert. Andernfalls behandelt das Authentifizierungsmodul die Person als nicht authentifiziert.

Ein praktisches Anwendungsszenario gemäß einer Ausführungsform der Erfindung wird im Folgenden beschrieben: Beispielsweise wird das Authentifizierungsverfahren zur Authentifizierung eines Bürgers aus der Ferne zum Zwecke der Erneuerung eines Ausweisdokuments verwendet. Die Bevölkerung des Staates, bei dem die Person als "Bürger" registriert ist, umfasst 80 Millionen Menschen, hier als "M1-M80.000.000 bezeichnet. In einer Datenbank sind für jeden Bürger zehn Gesichtsbilder des jeweiligen Bürgers hinterlegt, also für den Bürger M1 die Gesichtsbilder B_{M1.1}, B_{M1.2}, ..., BM_{1.10}, für Bürger M2 die Gesichtsbilder BM_{2.1}-BM_{2.10}. Der erste Bürger M1 möchte sich aus der Ferne authentisieren und stößt ein Authentifizierungsverfahren gemäß Ausführungsformen der Erfindung an.

Im Zuge dessen wählt das Authentifizierungsmodul aus der Bilddatenbank eine zufällige Sequenz aus zwei Bekanntbildern und vier Fremdbildern aus, z.B. gemäß der Sequenz B_{M44.7}, B_{M102.2}, B_{M1.3}, B_{M15.1}, B_{M1.8}, B_{M16.7}. In dieser Sequenz sind die Bilder B_{M1.3} und B_{M1.8} "Bekanntbilder" bezüglich Bürger M1. Die Bilder der anderen Bürger M44, M102, M15 und M16 sind Fremdbilderfür Bürger M1, können jeweils aber als Bekanntbilder dienen, wenn sich diese anderen Bürger authentifizieren. Sofern es sich bei dem sich gerade authentifizierenden Bürger tatsächlich um Bürger M1 handelt, ist also folgende Signalsequenz zu erwarten, wobei die Kürzel "HAS1" für "erstes Hirnaktivitätssignal" und HAS2" für "zweites Hirnaktivitätssignal" verwendet werden: HAS2, HAS2, HAS1, HAS2, HAS1, HAS2. Wenn die Abfolge der erfassten ersten und zweiten Hirnaktivitätssignale den gemäß der Sequenz der gezeigten Gesichtsbilder erwarteten Signalabfolge entspricht, hat sich der Bürger M1 erfolgreich authentifiziert.

Danach möchte sich Bürger M55 authentifizieren und stößt ein weiteres Authentifizierungsverfahren an. Im Zuge dessen wählt das Authentifizierungsmodul aus der Bilddatenbank eine zufällige Sequenz aus zwei Bekanntbildern und vier Fremdbildern aus, z.B. gemäß der Sequenz B_{M55.2}, B_{M14.7}, B_{M55.6}, B_{M232.2}, B_{M15.1}, B_{M46.7}. In dieser Sequenz sind die Bilder B_{M55.2} und B_{M55.6} "Bekanntbilder" bezüglich Bürger M55. Die Bilder der anderen Bürger M14, M232, M15 und M46 sind Fremdbilder für Bürger M55, können jeweils aber als Bekanntbilder dienen, wenn sich diese anderen Bürger authentifizieren. Sofern es sich bei dem sich gerade authentifizierenden Bürger tatsächlich um Bürger M55 handelt, ist also folgende Signalsequenz zu erwarten: HAS1, HAS2, HAS1, HAS2, HAS2, HAS2.

Dieses Beispiel dient allerdings nur zur Erläuterung des technischen Prinzips. Aus Datenschutzgründen würden lediglich Gesichtsbilder von Personen bzw. Bürgern als Fremdbilder zum Einsatz kommen, die diesen Verwendungszweck explizit zugestimmt haben, oder es würden computergenerierte Gesichtsbilder zum Einsatz kommen, die nicht zu den Gesicht einer real existierenden Person korrespondieren.

**Figur 8** zeigt ein Schema eines neuronalen Netzes zur Analyse und Klassifizierung der Hirnaktivitätssignalen. Das neuronale Netz ist nach einer Trainingsphase dazu in der Lage, festzustellen, ob und wie sehr sich erste und zweite Hirnaktivitätssignale gegenseitig und untereinander ähneln. Es hat sich herausgestellt, dass neuronale Netze, insbesondere rekurrente neuronale Netze 804, besonders geeignet sind, um die Ähnlichkeit von Hirnaktivitätssignalen zu bestimmen.

Beispielsweise kann die Machine-Learning-Software und/oder das Authentifizierungsmodul neben dem neuronalen Netz 804 ein Vorverarbeitungsmodul 802 und ein Auswertungsmodul 806 besitzen. Das Vorverarbeitungsmodul 802 ist dazu konfiguriert, das von dem KLHA-Sensor 218 erfasste Signal so zu repräsentieren, dass die in dem Signal enthaltene Information von dem Authentifizierungsmodul und/oder dem neuronalen Netz ausgewertet werden kann. Beispielsweise kann das Profil zeitlicher Änderungen von Amplitude (gemessene Ladungsänderungen und/oder von Ladungsumverteilungen in der Nähe eines elektrischen Sensors) und optional auch Frequenz des von einem elektrischen Sensor gemessenen Signals als mehrdimensionaler Vektor dargestellt werden, wobei beispielsweise der Vektor eine Vielzahl von Elementen (z.B. 200 Elemente für einen Vektor, der Signaleigenschaften eines über zwei Sekunden gemessenen Signals mit einer zeitlichen Auflösung von 10 ms spezifiziert) umfassen kann, wobei pro Element ein zu diesem Zeitpunkt gültige Amplitudenwert und eine zu diesem Zeitpunkt gemessene Frequenz in den Vektor enthalten ist. Falls es sich bei dem KLHA-Sensor um einen optischen Sensor handelt, kann das Vorverarbeitungsmodul 802 dazu ausgebildet sein, aus dem von dem optischen Sensor erfassten Gesichtsbild bzw. Augenbereichsbild mehrere Merkmale zu extrahieren wie zum Beispiel Pupillendurchmesser und/oder zeitliches Profil von Pupillendurchmesseränderungen, und diese Merkmale in geeigneter Form zu repräsentieren, zum Beispiel ebenfalls als Vektor mit mehreren numerischen Werten definierte Bedeutung. In einer Trainingsphase hat die Machine-Learning-Software 800 auf Basis eines annotierten Trainingsdatensatzes gelernt, zu erkennen, welche Variabilität der Signaleigenschaften akzeptiert werden kann und muss, ohne dass zwei verglichene Hirnaktivitätssignale als signifikant unähnlich angesehen werden. Biometrische Signale sind niemals 100 % identisch. Es ist aber möglich, durch das Training einer Machine-Learning Software auf einen Datensatz mehrerer Hirnaktivitätssignale, die einmal durch Betrachtung von Bekanntbildern und ein anderes Mal durch Betrachtung von Fremdbildern hervorgerufen wurden, und die entsprechend annotiert sind, zu erreichen, dass die trainierte Machine-Learning Software zuverlässig erkennen kann, ob Abweichungen in Eigenschaften der Hirnaktivitätssignale relevant oder irrelevant im Hinblick auf die Frage sind, ob hier ein Bekanntbild oder ein Fremdbild betrachtet wird.

Das Auswertungsmodul 806 aggregierten die Ausgaben der Neuronen der Ausgabeschicht des neuronalen Netzes und bereitet das Ergebnis (authentifiziert oder nicht) so auf, dass dies vom Empfänger interpretiert werden kann. Beispielsweise kann das Ergebnis als natürlichsprachlicher Text akustisch oder optisch an einen Menschen ausgegeben werden. Alternativ oder zusätzlich kann das Ergebnis der Authentifizierung auch an eine Software oder Hardwarekomponente ausgegeben werden, die in Abhängigkeit von dem Authentifizierungs-Ergebnis beispielsweise eine bestimmte Hardwarefunktion oder Softwarefunktion freigibt oder nicht.

Gemäß einer anderen, hier nicht dargestellten Ausführungsform dient ein Convolutional Neural Network (CNN) zur Klassifikation der Hirnaktivitätssignale in ähnliche und unähnliche Signale. Es kann z.B. eine erste Faltungsschicht mit sechs Feature-Maps, deren Kernelgröße 5 ist, beinhalten. Die erste Faltungsschicht ist eine erste Maxpooling-Schicht mit der Skalengröße 2. Eine zweite Faltungsschicht mit 12 Merkmalspunkten hat die Kernelgröße 3. Außerdem beinhaltet das neuronale Netz eine zweite Maxpooling-Schicht mit der gleichen Skalengröße wie die erste Maxpooling-Schicht. Schließlich gibt es eine voll verbundene Schicht mit 108 Merkmalspunkten, die die Score-Schätzung der Eingabe berechnet. Im Trainingsstadium werden Lernrate, Lossgröße und Lernepoche z.B. auf 1, 100 und 500 gesetzt.

**Figur** 9 zeigt einen Plot 900, also ein Diagramm, mit einem ersten Hirnaktivitätssignal 902, das während der Betrachtung eines Bekanntbildes von einem elektrischen Sensor gemessen wurde, und mit einem zweiten Hirnaktivitätssignal 904, dass während der Betrachtung eines Fremdbildes von einem elektrischen Sensor gemessen wurde. Bei den hier gezeigten Hirnaktivitätssignalen handelt es sich um Hirnstromsignale, die kontaktlos in Form von Ladungsänderungen und/oder von Ladungsumverteilungen in der Nähe des elektrischen Sensors erfasst wurden.

Generell unterscheidet man in der Neurologie bei Hirnstrommessungen unterschiedliche Frequenzbänder:
- Das Sub-δ-Band mit einem Frequenzbereich von 0.15 bis 0.5 Hz,
- das δ-Band mit einem Frequenzbereich von 0.5 bis 3.5 Hz,
- das θ -(Theta)-Band mit einem Frequenzbereich von 3.5 bis 8 Hz,
- das α-Band mit einem Frequenzbereich von 8 bis 13 Hz,
- das β-Band mit einem Frequenzbereich von 13 bis 30 Hz, sowie Frequenzanteile oberhalb des β-Bandes (also über 30 Hz).

Gemäß Ausführungsformen werden die Hirnaktivitätssignale in einem oder mehreren dieser Bänder gemessen.

Das α-Band liefert in manchen Ausführungsformen zusätzliche Informationen über den Wachheitszustand einer Person, Frequenzanteile oberhalb dieses α -Bandes (β-Band und darüber) können Informationen über Beeinträchtigung der mentalen Funktionen durch Drogen oder zentral wirksame Medikamente liefern, und das direkt unterhalb des α-Bands angrenzende Theta-Band liefert Informationen anderer Art, die u.a. mit dem Wachheitszustand, eingenommenen Substanzen oder Krankheiten korrelieren können. Spezifische Stimuli, z.B. Gesichtsbilder, lösen oftmals Hirnstromsignale im theta-Band und weiteren Bändern aus. Gemäß Ausführungsformen der Erfindung wird eine "Multi-Band"-Signalanalyse, d.h. eine Analyse der Eigenschaften von Signalen über einen sehr breiten Frequenzbereich, durchgeführt.

Gemäß weiteren Ausführungsformen werden die Hirnaktivitätssignale ohne Differenzierung nach einzelnen Bändern gemessen. Vielmehr wird die Signalamplitude über ein weites Frequenzband, das im Wesentlichen nur durch die Sensitivität des elektrischen Sensors bestimmt ist, erfasst.

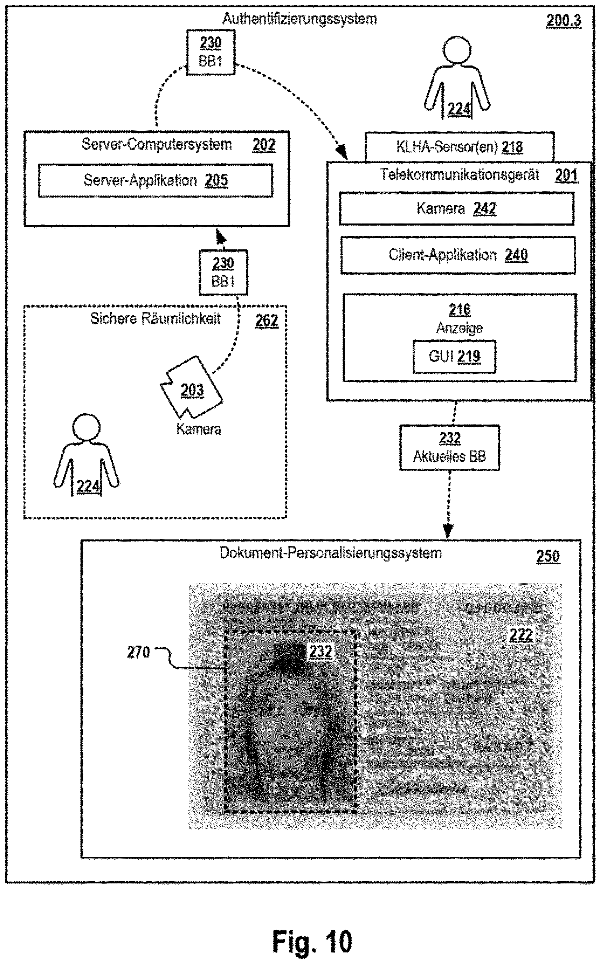

**Figur 10** zeigt ein Blockdiagramm eines weiteren Authentifizierungssystems 200.3 gemäß einer Ausführungsform der Erfindung. Der Aufbau des Authentifizierungssystems 200.3 entspricht im Wesentlichen dem Aufbau der Authentifizierungssysteme 200.1, 200.2, die beispielhaft anhand der Figuren 4 und 5 beschrieben wurden. Die Person 224 ist nicht Bestandteil des Authentifizierungssystems. Figur 10 zeigt, wie das Authentifizierungssystem von einem System 250 zur Personalisierung von Dokumenten, z.B. Identitätsdokumenten, Wertdokumenten und/oder Sicherheitsdokumenten verwendet werden kann. Beispielsweise kann es sich bei dem System 250 um ein System zur Personalisierung von Personalausweisen handeln, die als Chipkarte auf Basis eines Kunststoff- oder Papierträgers ausgebildet sind.

Die Person 224 registriert sich zunächst in den sicheren Räumlichkeiten einer Behörde, um sich zum ersten Mal einen Personalausweis ausstellen zu lassen. Hierbei wird zum ersten Mal ein Gesichtsbild dieser Person erfasst und als Bekanntbild abgespeichert. Da das Bild in gesicherten Räumlichkeiten von speziell geschultem Personal und/oder mit einer besonders sicheren Kamera erfasst wird, wird verhindert, dass das bei der Registrierung erfasste Gesichtsbild eine andere Person abbildet als die, die persönlich zur Registrierung erschienen ist. Nach Jahren authentifiziert sich die Person sodann erfolgreich aus der Ferne mittels eines Smartphones und daran gekoppelten KLHA-Sensor wie für Ausführungsformen beschrieben.

Nach einer erfolgreichen Authentifizierung wird in einem weiteren Schritt in der ungesicherten Umgebung (z.B. kein besonders geschultes Personal anwesend, keine Kamera mit spezieller Signierfunktion verwendet) ein aktuelles Gesichtsbild der Person erfasst, z.B. von einer gewöhnlichen Smartphonekamera. Das Gesichtsbild wird der Person über die Anzeige 216 des Smartphones nochmals angezeigt. Während die Person das aktuelle Gesichtsbild 232 auf der Anzeige betrachtet, werden Hirnaktivitätssignale der Person erfasst und mit den ersten und zweiten Hirnaktivitätssignalen, die im Zuge des Authentifizierungsverfahrens gemessen wurde, abgeglichen. Nur dann, wenn die erfassten Hirnaktivitätssignale den ersten Hirnaktivitätssignalen ähnlich ist und den zweiten Hirnaktivitässignalen unähnlich ist, wird das aktuelle Gesichtsbild verwendet, um einen neuen Personalausweis 222 mit diesem zu bedrucken und dadurch zu personalisieren.

**Figur 11** zeigt einen Plot 950 mit einem ersten Hirnaktivitätssignal 952 in Form eines Pupillendurchmesserprofils, das während der Betrachtung eines Bekanntbildes (hier: Bild des Gesichts des Betrachters) von einem optischen Sensor gemessen wurde, und mit einem zweiten Hirnaktivitätssignal 904 in Form eines zweiten Pupillendurchmesserprofils, dass während der Betrachtung eines Fremdbildes von dem optischen Sensor gemessen wurde. Die beiden Pupillendurchmesserprofile bzw. die jeweiligen Durchmesser wurden durch automatische Bildanalyse der erfassten Bilder ermittelt. Eine Betrachtung eines Bekanntbildes führt im Gegensatz zu der Betrachtung eines Fremdbildes bei der hier betrachteten Person zu einer deutlichen Pupillendurchmesservergrößerung innerhalb der ersten 1000 ms.

Das erfindungsgemäße Authentisierungsverfahren ist nicht auf die beschriebenen Ausführungsbeispiele beschränkt. Es kann mit weiteren Authentisierungsverfahren kombiniert werden, um eine sichere und bequeme Authentisierung zu ermöglichen. Eine Kombination mehrerer biometrischer Verfahren ist vorteilhaft um eine multimodale Authentifizierung zu gewährleisten.

### Bezugszeichenliste

- 102-114: Schritte
- 150-160: Schritte
- 200: Authentifizierungssystem
- 201: portables Telekommunikationsgerät
- 202: Server-Computersystem
- 203: (sichere) Kamera
- 204: Authentifizierungsmodul
- 205: Server-Applikation
- 206: Bilddatenbank
- 207: serverseitiger Datenspeicher
- 208: Gesichtsbild (Fremdbild)
- 209: clientseitiger temporärer Datenspeicher
- 210: Gesichtsbild (Fremdbild)
- 212: Gesichtsbild (Fremdbild)
- 214: Gesichtsbild (Fremdbild)
- 216: Anzeige
- 218: KLHA-Sensor(en)
- 219: GUI
- 222: Dokument
- 224: Person
- 230: Bekanntbild
- 232: Bekanntbild
- 233: Authentifizierungsanfrage
- 234: Spezifikation einer Bildsequenz
- 235: serverseitiger Datenspeicher
- 236: clientseitiger Datenspeicher
- 240: Client-Applikation
- 242: Kamera
- 262: sichere Räumlichkeit
- 504: Gesichtsbild (Bekanntbild)
- 602: Sequenz Gesichtsbilder
- 702: Sequenz Hirnaktivitätssignale
- 704: zweite Hirnaktivitätssignale
- 706: zweite Hirnaktivitätssignale
- 708: erste Hirnaktivitätssignale
- 710: zweite Hirnaktivitätssignale
- 712: erste Hirnaktivitätssignale
- 800: Authentifizierungsmodul auf Basis eines neuronalen Netzes
- 802: Vorverarbeitung Modul
- 804: Rekurrentes neuronales Netzwerk
- 806: Auswertungsmodul
- 900: Signalplot erfasst von elektrischem Sensor
- 902: erstes Hirnaktivitätssignal (bei Bekanntbildanzeige)
- 904: zweites Hirnaktivitätssignal (bei Fremdbildanzeige)
- 950: Signalplot erfasst von optischem Sensor
- 952: erstes Hirnaktivitätssignal (bei Bekanntbildanzeige)
- 954: zweites Hirnaktivitätssignal (bei Fremdbildanzeige)

## Patentansprüche

1. Verfahren umfassend:
- Erzeugen (106) einer Spezifikation (234) einer Sequenz von Bekanntbildern und Fremdbildern (208-214), wobei ein Bekanntbild ein Bild ist mit einem Bildmotiv, das der einen Person bekannt ist und ein Fremdbild ein Bild mit einem Motiv ist, das der einen Person nicht bekannt ist;
- Anzeige (108) mehrerer Bilder auf einer Anzeige (216), wobei die angezeigten Bilder eine Sequenz aus einem oder mehreren Bekanntbildern und einem oder mehreren Fremdbildern gemäß der Spezifikation beinhalten;
- während die mehreren Bilder der Person angezeigt werden, Erfassung (110) von ersten (708, 712, 902, 952) und zweiten (704, 706, 710, 904, 954) Hirnaktivitätssignalen, die in der einen Person durch die Betrachtung der Bilder jeweils ausgelöst werden, durch einen Sensor (218), wobei erste Hirnaktivitätssignale erfasst werden, während der Person ein Bekanntbild (230) angezeigt wird, und wobei zweite Hirnaktivitätssignale erfasst werden, während der einen Person ein Fremdbild angezeigt wird;
**dadurch gekennzeichnet, dass**
das Verfahren ein Verfahren zur Authentifizierung einer Person (224) ist, dass die Anzeige (216) einem portablen Telekommunikationsgerät (201) zugehörig ist, das der einen Person zugeordnet ist, dass das Erzeugen (106) der Spezifikation (234) der Sequenz von Bekanntbildern und Fremdbildern (208-214) durch ein Authentifizierungsmodul (204) erfolgt, dass das Authentifizierungsmodul Bestandteil einer Server-Applikation oder einer Client-Applikation ist, und dass die Anzeige (108) der mehreren Bilder auf der Anzeige (216) des portablen Telekommunikationsgeräts (201) durch die Client-Applikation außerhalb einer sicheren Räumlichkeit erfolgt,
wobei das Verfahren ferner umfasst:
- Registrierung (102) der Person bei der Server-Applikation (205), wobei die Server-Applikation auf einem Server-Computersystem (202) instanziiert ist, wobei die Registrierung eine Erfassung zumindest eines Bekanntbilds (230) der einen Person innerhalb sicherer Räumlichkeiten (262) bei Anwesenheit der einen Person in der sicheren Räumlichkeit umfasst;
- Empfang (104) des zumindest einen Bekanntbilds von der Server-Applikation über eine Netzwerkverbindung durch die Client-Applikation (240), wobei die Client-Applikation auf dem Telekommunikationsgerät (201) instanziiert ist, wobei das Telekommunikationsgerät reversibel oder irreversibel mit dem Sensor (218) verbunden ist, wobei der Sensor (218) ein kontaktloser Sensor (218) zur Erfassung von Hirnaktivitäten ist und nachfolgend als KLHA-Sensor (218) bezeichnet wird;
- Authentifizierung (112) der einen Person als Funktion der Ähnlichkeit der erfassten ersten und zweiten Hirnaktivitätssignale unter Berücksichtigung der Spezifikation der Bildsequenz durch das Authentifizierungsmodul, wobei das Verfahren zur Authentifizierung einer Person die eine Person als erfolgreich authentifiziert behandelt, wenn die ersten Hirnaktivitätssignale einander ähnlich sind, wenn die zweiten Hirnaktivitätssignale einander ähnlich sind, wenn die ersten Hirnaktivitätssignale unähnlich zu den zweiten Hirnaktivitätssignalen sind und wenn die Sequenz voneinander ähnlichen ersten Hirnaktivitätssignalen und einander ähnlichen zweiten Hirnaktivitätssignalen zu der Sequenz der angezeigten Bekanntbildern und Fremdbildern korrespondiert; und
- Ausgabe (114) eines Authentifizierungsergebnisses bezüglich der einen Person.

2. Verfahren nach Anspruch 1, wobei der Empfang des zumindest einen Bekanntbilds durch die Client-Applikation im Zuge der Registrierung der einen Person erfolgt, wobei das Verfahren vorzugsweise ferner umfasst:
- Speicherung (150) des zumindest einen empfangenen Bekanntbilds auf geschützte Weise in einem nicht-flüchtigen Speicher (236) des Telekommunikationsgeräts;
- Senden (152) einer Empfangsbestätigung bezüglich des Bekanntbildes von der Client-Applikation an die Server-Applikation nach erfolgreichem Empfang und erfolgreicher Speicherung des Bekanntbildes; und
- Löschen (154) sämtlicher anderer existierenden Kopien des Bekanntbildes durch die Server-Applikation in Antwort auf den Empfang der Empfangsbestätigung.

3. Verfahren nach Anspruch 1, wobei der Empfang des zumindest einen Bekanntbilds durch die Client-Applikation im Zuge jedes Authentifizierungsprozesses für die eine Person erfolgt, wobei jeder Authentifizierungsprozess umfasst:
- Empfang einer Authentifizierungsanfrage für die eine Person von der Client-Applikation durch die Server-Applikation;
- In Antwort auf den Empfang der Authentifizierungsanfrage, Identifikation des zumindest einen Bekanntbildes, das bei der Registrierung der einen Person erfasst wurde, durch die Server-Applikation;
- Senden des identifizierten zumindest einen Bekanntbildes an die Client-Applikation durch die Server-Applikation über die Netzwerkverbindung.

4. Verfahren nach Anspruch 1, 2 oder 3, fermer umfassend:
- Speicherung (160) des während der Registrierung der einen Person erfassten zumindest einen Bekanntbilds auf geschützte Weise in einem nicht-flüchtigen Speicher des Server-Computersystems durch die Server-Applikation;
- Speicherung des zumindest einen empfangenen Bekanntbildes auf einem Speicher des Telekommunikationsgeräts ausschließlich temporär für die Dauer des Authentifizierungsprozesses.

5. Verfahren nach einem der vorigen Ansprüche, wobei das zumindest eine Bekanntbild ein Bild ist ausgewählt aus einer Gruppe umfassend:
- ein Gesichtsbild der einen Person;
- ein mittels einer Kamera oder Videokamera (203) erfasstes Bild eines Bildmotivs, das der einen Person erwiesenermaßen bekannt ist;
- eine Vielzahl von mittels einer Kamera oder Videokamera (203) erfassten Bildern eines Bildmotivs, das der einen Person erwiesenermaßen bekannt ist;
- eine Vielzahl von Kopien eines mittels einer Kamera oder Videokamera (203) erfassten Bildes eines Bildmotivs, das der einen Person erwiesenermaßen bekannt ist.

6. Verfahren nach einem der vorigen Ansprüche, wobei die Registrierung der einen Person ferner umfasst:
- Bereitstellung von zumindest einem biometrischen Sensor innerhalb der sicherer Räumlichkeit, wobei der Sensor insbesondere ausgebildet ist als ein Sensor, der zur Unterscheidung von Personen, die Gesichtsmasken tragen von Personen, die keine Gesichtsmasken tragen;
- Erfassung eines biometrischen Merkmals der Person durch den biometrischen Sensor;
- Auswertung des erfassten biometrischen Merkmals;
- falls die Auswertung des erfassten biometrischen Merkmals ergibt, dass die eine Person keine Maske trägt, Durchführung der Registrierung und Bereitstellung des zumindest einen Bekanntbilds von der Server-Applikation an die Client-Applikation;
- falls die Auswertung des erfassten biometrischen Merkmals ergibt, dass die eine Person eine Maske trägt, Abbruch der Registrierung, ohne das zumindest eine Bekanntbild zu erfassen und/oder ohne das zumindest eine Bekanntbild an die Client-Applikation bereitzustellen.

7. Verfahren nach einem der vorigen Ansprüche, wobei zumindest eine Bekanntbild, das in der sicheren Räumlichkeit erfasst wird, von einer Sicherheitskamera (203) erfasst wird, wobei eine Sicherheitskamera eine Kamera ist ausgewählt aus einer Gruppe umfassend:
- eine Kamera mit einem Zugriffsschutz, wobei der Zugriffsschutz bewirkt, dass die Kamera von einem Betreiber nur nach einem vorhergehenden Authentifizierungsschritt gegenüber der Sicherheitskamera verwendet werden kann; und/oder
- eine Kamera mit einem Signaturschlüssel, die dazu ausgebildet ist, die von ihr erfassten Bekanntbilder zu signieren, wobei die Server-Applikation einen Signaturprüfschlüssel hat, der dazu ausgebildet ist, die Signatur von Bildern zu prüfen und im Zuge des Registrierungsprozesses nur solche Bilder als Bekanntbilder zu akzeptieren, welche geprüftermaßen von der Sicherheitskamera signiert wurden.

8. Verfahren nach einem der vorigen Ansprüche,
- wobei der KLHA-Sensor eine Signatur beinhaltet, die von einem KLHA-Signaturschlüssel erzeugt wurde;
- wobei die Client-Applikation einen zu dem KLHA-Signaturschlüssel korrespondierenden KLHA-Signaturprüfschlüssel beinhaltet; und
- wobei die Client-Applikation dazu ausgebildet ist, die Erfassung der ersten und zweiten Hirnaktivitätssignale und/oder deren Verwendung für die Authentifizierung nur dann zuzulassen, wenn eine Prüfung der Signatur des KLHA-Sensors mit dem KLHA-Signaturprüfschlüssel ergibt, dass die KLHA-Sensor-Signatur valide ist.

9. Verfahren nach einem der vorigen Ansprüche, wobei die Sequenz von Bekanntbildern und Fremdbildern als Challenge im Sinne eines Challenge-Response-Verfahrens dient und wobei die Authentifizierung als Funktion der Ähnlichkeit der erfassten ersten und zweiten Hirnaktivitätssignale eine Prüfung umfasst, ob die zeitliche Reihenfolge der ersten und zweiten Hirnaktivitätssignale die in der Challenge codierte Reihenfolge von Bekanntbildern und Fremdbildern widergibt.

10. Verfahren nach einem der vorigen Ansprüche, wobei das Authentifizierungsmodul die Person nur dann als erfolgreich authentifiziert behandelt, wenn neben einer signifikanten Unterschiedlichkeit der ersten und zweiten Hirnaktivitätssignale folgende weitere Kriterien zutreffen:
- alle ersten Hirnaktivitätssignale, die je während des Anzeigens eines der Bekanntbilder erfasst werden, sind identisch oder hinreichend ähnlich zueinander;
- alle zweiten Hirnaktivitätssignale, die je während des Anzeigens eines der Fremdbilder erfasst werden, sind identisch oder hinreichend ähnlich zueinander.

11. Verfahren nach einem der vorigen Ansprüche,
- wobei der KLHA -Sensor ein elektrischer Sensor ist; und
• wobei der elektrische Sensor dazu ausgebildet ist, die ersten und/oder zweiten Hirnaktivitätssignale durch Messung von Ladungsänderungen und/oder von Ladungsumverteilungen zu erfassen; und/oder
• wobei der elektrische Sensor dazu ausgebildet ist, die Amplitude der ersten und/oder zweiten Hirnaktivitätssignale und/oder die Änderung der Amplitude während eines Zeitintervalls zu erfassen; oder
- wobei der KLHA-Sensor ein optischer Sensor ist, der dazu ausgebildet ist, Bilder oder Bildsequenzen des Gesichts oder von Teilen des Gesichts der einen Person zu erfassen, die die ersten und/oder zweiten Hirnaktivitätssignale enthalten, wobei die Authentifizierung als Funktion der Ähnlichkeit der erfassten der ersten und zweiten Hirnaktivitätssignale durch das Authentifizierungsmodul eine automatische Bildanalyse der Bilder oder Bildsequenzen umfasst, wobei die Bildanalyse umfasst:
- rechnerische Bestimmung eines Pupillendurchmessers der einen Person; und/oder
- rechnerische Bestimmung eines Pupillendurchmesseränderungsprofils der einen Person.

12. Verfahren nach einem der vorigen Ansprüche, wobei das Telekommunikationsgerät eine Kamera (242) beinhaltet, wobei das zumindest eine Bekanntbild, das bei der Registrierung erfasst wurde, ein Gesichtsbild der zumindest einen Person ist, ferner umfassend:
- Falls das Authentifizierungsergebnis beinhaltet, dass sich die eine Person erfolgreich authentifiziert hat:
• Anzeige einer GUI (129) der Client-Applikation auf einem Display des Telekommunikationsgeräts, wobei die GUI eine Aufforderung beinhaltet, das Gesicht der einen Person in den Erfassungsbereich der Kamera des Telekommunikationsgeräts zu halten;
• Erfassung eines aktuellen Gesichtsbilds (232) der einen Person;
Senden des aktuellen Gesichtsbilds über die Netzwerkverbindung von der Client-Applikation an die Server-Applikation;
vorzugsweise ferner umfassend:
• Speichern und Verwenden des aktuellen Gesichtsbildes (232) der einen Person als das zumindest eine Bekanntbild der Person anstelle des zumindest einen Bekanntbildes (230), das bei der Registrierung der einen Person erfasst wurde; und/oder
• Bereitstellung des aktuellen Gesichtsbildes (232) der einen Person von der Server-Applikation an eine Software (250) zur Personalisierung von Identitäts- oder Sicherheitsdokumenten (222), um ein Identitäts- oder Sicherheitsdokument für die eine Person zu personalisieren.

13. Verfahren zur Herstellung eines Identitäts- oder Sicherheitsdokuments für eine Person, umfassend:
- Authentifizierung der einen Person gemäß einem Verfahren nach Anspruch 12;
- Herstellung eines Identitäts- oder Sicherheitsdokuments (222), welches der einen Person eindeutig zugewiesen ist, wobei das aktuelle Gesichtsbild der einen Person, das an die Server-Applikation übertragen wurde, als Sicherheitselement (270) des Identitäts- oder Sicherheitsdokuments verwendet wird.

14. System (200), **dadurch gekennzeichnet, dass**
das System (200) ein System (200) zur Authentifizierung einer Person (224) ist, wobei das System (200) umfasst:
- ein Server-Computersystem (202) mit einer Server-Applikation (205), wobei die Server-Applikation ein Register mit den Profilen mehrerer bei der Server-Applikation registrierter Personen beinhaltet, wobei jedes Profil mit zumindest einem Bekanntbild (230, 232) verknüpft gespeichert ist, wobei das zumindest eine Bekanntbild innerhalb einer sicheren Räumlichkeit (262) bei Anwesenheit dieser Person in der sicheren Räumlichkeit erfasst wurde, wobei ein Bekanntbild einer Person ein Bild ist mit einem Bildmotiv, das dieser Person bekannt ist;
- ein portables Telekommunikationsgerät (201), das reversibel oder irreversibel mit einem Sensor (218) verbunden ist, wobei der Sensor ein kontaktloser Sensor (218) zur Erfassung von Hirnaktivitäten ist und nachfolgend als KLHA-Sensor (218) bezeichnet wird und auf dem eine Client-Applikation instanziiert ist, die mit der Server-Applikation interoperabel ist, wobei das Telekommunikationsgerät der einen Person zugeordnet ist;
- ein Authentifizierungsmodul (204), das Bestandteil der Server-Applikation oder der Client-Applikation ist;
wobei die Client-Applikation ausgebildet ist zum Empfang des zumindest einen Bekanntbilds von der Server-Applikation über eine Netzwerkverbindung;
wobei das Authentifizierungsmodul ausgebildet ist zum Erzeugen einer Spezifikation (234) einer Sequenz von Bekanntbildern und Fremdbildern (208-214), wobei ein Fremdbild ein Bild mit einem Motiv ist, das der einen Person nicht bekannt ist;
wobei die Client-Applikation ausgebildet ist zur Anzeige (108) mehrerer Bilder auf einer Anzeige (216) des Telekommunikationsgeräts außerhalb der sicheren Räumlichkeit, wobei die angezeigten Bilder eine Sequenz aus einem oder mehreren Bekanntbildern und einem oder mehreren Fremdbildern gemäß der Spezifikation beinhalten;
wobei der KLHA-Sensor dazu ausgebildet ist, während die mehreren Bilder der Person angezeigt werden, erste (708, 712, 902, 952) und zweite (704, 706, 710, 904, 954) Hirnaktivitätssignale, die in der einen Person durch die Betrachtung der Bilder jeweils ausgelöst werden, zu erfassen, wobei erste Hirnaktivitätssignale erfasst werden, während der Person ein Bekanntbild (230) angezeigt wird, und wobei zweite Hirnaktivitätssignale erfasst werden, während der einen Person ein Fremdbild angezeigt wird;
- wobei das Authentifizierungsmodul ausgebildet ist zur Authentifizierung der einen Person als Funktion der Ähnlichkeit der erfassten ersten und zweiten Hirnaktivitätssignale unter Berücksichtigung der Spezifikation der Bildsequenz; und zur Ausgabe eines Authentifizierungsergebnisses bezüglich der einen Person, wobei das Authentifizierungsmodul die eine Person als erfolgreich authentifiziert behandelt, wenn die ersten Hirnaktivitätssignale einander ähnlich sind, wenn die zweiten Hirnaktivitätssignale einander ähnlich sind, wenn die ersten Hirnaktivitätssignale unähnlich zu den zweiten Hirnaktivitätssignalen sind und wenn die Sequenz voneinander ähnlichen ersten Hirnaktivitätssignalen und einander ähnlichen zweiten Hirnaktivitätssignalen zu der Sequenz der angezeigten Bekanntbildern und Fremdbildern korrespondiert.

## Claims

1. A method comprising the steps of:
- generating (106) a specification (234) of a sequence of known images and foreign images (208-214), wherein a known image is an image containing an image motif that is known to a person and a foreign image is an image containing a motif that is not known to a person;
- displaying (108) a plurality of images on a display (216), wherein the displayed images include a sequence of one or more known images and one or more foreign images according to the specification;
- whilst the plurality of images are being displayed to the person, detecting (110), by a sensor (218), first brain activity signals (708, 712, 902, 952) and second brain activity signals (704, 706, 710, 904, 954) that are triggered in the person as a result of looking at the images, wherein first brain activity signals are detected whilst a known image (230) is displayed to the person, and wherein second brain activity signals are detected whilst a foreign image is displayed to a person;
**characterized in that**
the method is a method for authenticating a person (224),
**in that** the display (216) is associated with a portable telecommunications device (201) which is assigned to a person, **in that** the generation (106) of the specification (234) of the sequence of known images and foreign images (208-214) is performed by an authentication module (204), **in that** the authentication module is part of a server application or a client application, and **in that** the display (108) of the plurality of images on the display (216) of the portable telecommunications device (201) is performed by the client application outside a secure premises,
wherein the method further comprises the steps of:
- registering (102) the person with the server application (205), wherein the server application is instantiated on a server computer system (202), wherein the registration comprises capturing at least one known image (230) of the person within secure premises (262) when the person is present in the secure premises;
- receiving (104) the at least one known image from the server application via a network connection by the client application (240), wherein the client application is instantiated on the telecommunications device (201), wherein the telecommunications device is connected reversibly or irreversibly to the sensor (218), wherein the sensor (218) is a contactless sensor (218) for detecting brain activity and is referred to hereinafter as a KLHA sensor (218);
- authenticating (112) the person as a function of the similarity of the detected first and second brain activity signals under consideration of the specification of the image sequence by the authentication module, wherein the method for authenticating a person treats the person as having been successfully authenticated if the first brain activity signals are similar to one another, if the second brain activity signals are similar to one another, if the first brain activity signals are dissimilar to the second brain activity signals, and if the sequence of similar first brain activity signals and similar second brain activity signals corresponds to the sequence of displayed known images and foreign images; and
- outputting (114) an authentication result in relation to the person.

2. The method according to claim 1, wherein the at least one known image is received by the client application during the course of the registration of the person, wherein the method preferably further comprises the steps of:
- saving (150) the at least one received known image in a protected way in a non-volatile memory (236) of the telecommunications device;
- sending (152) a receipt confirmation in relation to the known image from the client application to the server application following successful receipt and successful saving of the known image; and
- deleting (154) all other existing copies of the known image by the server application in response to the receipt of the receipt confirmation.

3. The method according to claim 1, wherein the at least one known image is received by the client application during the course of each authentication process for the person, wherein each authentication process comprises the steps of:
- receiving an authentication request for the person from the client application by the server application;
- in response to the receipt of the authentication request, identifying, by the server application, the at least one known image that was detected during the registration of the person;
- sending the identified at least one known image to the client application by the server application via the network connection.

4. The method according to claim 1, 2 or 3, further comprising the steps of:
- saving (160) the at least one known image detected during the registration of the person in a non-voltage memory of the server computer system by the server application in a protected way;
- saving the at least one received known image on a memory of the telecommunications device exclusively temporarily for the duration of the authentication process.

5. The method according to any one of the preceding claims, wherein the at least one known image is an image selected from a group comprising:
- a facial image of the person;
- an image, captured by means of a camera or video camera (203), of an image motif demonstrably known to the person;
- a multiplicity of images, captured by means of a camera or video camera (203), of an image motif demonstrably known to the person;
- a multiplicity of copies of an image, captured by means of a camera or video camera (203), of an image motif demonstrably known to the person.

6. The method according to any one of the preceding claims, wherein the registration of the person further comprises the steps of:
- providing at least one biometric sensor within the secure premises, wherein the sensor is configured in particular as a sensor for distinguishing people wearing a face mask from people not wearing a face mask;
- capturing a biometric feature of the person by the biometric sensor;
- evaluating the captured biometric feature;
- if the evaluation of the captured biometric feature reveals that the person is not wearing a mask, performing the registration and providing the at least one known image from the server application to the client application;
- if the evaluation of the captured biometric feature reveals that the person is wearing a mask, aborting the registration without capturing the at least one known image and/or without providing the at least one known image to the client application.

7. The method according to any one of the preceding claims, wherein at least one known image, which is captured in the secure premises, is captured by a security camera (203), wherein a security camera is a camera selected from a group comprising:
- a camera with access protection, wherein the access protection causes the camera to be able to be used by an operator only following a prior authentication step to the security camera; and/or
- a camera with a signature key which is configured to sign the known images captured by said camera, wherein the server application has a signature verification key, which is configured to verify the signature of images and, during the course of the registration process, to accept as known images only those images that have been verified and signed by the security camera.

8. The method according to any one of the preceding claims,
- wherein the KLHA sensor includes a signature that was generated by a KLHA signature key;
- wherein the client application includes a KLHA signature verification key corresponding to the KLHA signature key; and
- wherein the client application is configured to prompt the detection of the first and second brain activity signals and/or use thereof for the authentication only if a verification of the signature of the KLHA sensor with the KLHA signature verification key reveals that the KLHA sensor signature is valid.

9. The method according to any one of the preceding claims, wherein the sequence of known images and foreign images serves as a challenge in the sense of a challenge-response method, and wherein the authentication, as a function of the similarity of the detected first and second brain activity signals, comprises a check as to whether the chronological order of the first and second brain activity signals reflects the order of known images and foreign images coded in the challenge.

10. The method according to any one of the preceding claims, wherein the authentication module treats the person as having been successfully authenticated only if, besides a significant difference in the first and second brain activity signals, the following further criteria apply:
- all first brain activity signals detected during the display of any one of the known images are identical or sufficiently similar to one another;
- all second brain activity signals detected during the display of any one of the foreign images are identical or sufficiently similar to one another.

11. The method according to any one of the preceding claims,
- wherein the KLHA sensor is an electrical sensor; and
• wherein the electrical sensor is configured to detect the first and/or second brain activity signals by measuring charge changes and/or by detecting charge redistributions; and/or
• wherein the electrical sensor is configured to detect the amplitude of the first and/or second brain activity signals and/or the change in amplitude during a time interval; or
- wherein the KLHA sensor is an optical sensor which is configured to detect images or image sequences of the face or of parts of the face of the person that contain the first and/or second brain activity signals, wherein the authentication, as a function of the similarity of the detected first and second brain activity signals, comprises an automatic image analysis of the images or image sequences by the authentication module, wherein the image analysis comprises:
- computationally determining the pupil diameter of the person; and/or
- computationally determining a pupil diameter change profile of the person.

12. The method according to any one of the preceding claims, wherein the telecommunications device includes a camera (242), wherein the at least one known image that was detected during the registration is a facial image of the at least one person, said method further comprising:
- if the authentication result includes the fact that the person has successfully authenticated themself:
• displaying a GUI (129) of the client application on a display of the telecommunications device, wherein the GUI includes a request to hold the face of the person in the detection range of the camera of the telecommunications device;
• capturing a current facial image (232) of the person; sending the current facial image via the network connection from the client application to the server application;
said method preferably further comprising:
• saving and using the current facial image (232) of the person as the at least one known image of the person instead of the at least one known image (230) that was captured during the registration of the person; and/or
• providing the current facial image (232) of the person from the server application to a software (250) for personalising identity or security documents (222) in order to personalise an identity or security document for the person.

13. A method for producing an identity or security document for a person, said method comprising the steps of:
- authenticating the person by a method according to claim 12;
- producing an identity or security document (222) which is uniquely assigned to the person, wherein the current facial image of the person that was transmitted to the server application is used as security element (270) of the identity or security document.

14. A system (200), **characterised in that**
the system (200) is a system (200) for authenticating a person (224), wherein the system (200) comprises:
- a server computer system (202) with a server application (205), wherein the server application includes a register containing the profiles of a plurality of people registered with the server application, wherein each profile is stored linked with at least one known image (230, 232), wherein the at least one known image was captured within a secure premises (262) when this person was present in the secure premises, wherein a known image of a person is an image containing an image motif known to this person;
- a portable telecommunications device (201), which is reversibly or irreversibly connected to a sensor (218), wherein the sensor is a contactless sensor (218) for detecting brain activity and is referred to hereinafter as a KLHA sensor (218), and on which a client application is instantiated which is interoperable with the server application, wherein the telecommunications device is assigned to the person;
- an authentication module (204), which is part of the server application or the client application;
wherein the client application is configured to receive the at least one known image from the server application via a network connection; wherein the authentication module is configured to generate a specification (234) of a sequence of known images and foreign images (208-214), wherein a foreign image is an image containing a motif that is not known to the person;
wherein the client application is configured to display (108) a plurality of images on a display (216) of the telecommunications device outside the secure premises, wherein the displayed images include a sequence of one or more known images and one or more foreign images according to the specification;
wherein the KLHA sensor is configured, whilst the plurality of images are being displayed to the person, to detect first brain activity signals (708, 712, 902, 952) and second brain activity signals (704, 706, 710, 904, 954) that are triggered in the person as a result of looking at the images, wherein first brain activity signals are detected whilst a known image (230) is displayed to the person, and wherein second brain activity signals are detected whilst a foreign image is displayed to a person;
- wherein the authentication module is configured to authenticate the person as a function of the similarity of the detected first and second brain activity signals under consideration of the specification of the image sequence; and to output an authentication result in relation to the person, wherein the authentication module treats the person as having been successfully authenticated if the first brain activity signals are similar to one another, if the second brain activity signals are similar to one another, if the first brain activity signals are dissimilar to the second brain activity signals, and if the sequence of similar first brain activity signals and similar second brain activity signals corresponds to the sequence of displayed known images and foreign images.

## Revendications

1. Procédé comprenant :
- la création (106) d'une spécification (234) d'une séquence d'images connues et d'images inconnues (208 à 214), où une image connue est une image avec un motif d'image qui est connu par une personne et une image inconnue est une image avec un motif qui est inconnu pour la personne,
- l'affichage (108) de plusieurs images sur un afficheur (216), où les images affichées contiennent une séquence à base d'une ou de plusieurs images connues et d'une ou de plusieurs images inconnues conformément à la spécification ;
- pendant que les nombreuses images de la personne sont affichées, la détection (110) de premiers (708, 712, 902, 952) et de deuxièmes (704, 706, 710, 904, 954) signaux d'activité cérébrale qui sont respectivement déclenchés dans la personne par la contemplation des images, par un capteur (218), où des premiers signaux d'activité cérébrale sont détectés pendant qu'une image connue (230) est affichée pour la personne, et où des deuxièmes signaux d'activité cérébrale sont détectés pendant qu'une image inconnue est affichée pour la personne,
**caractérisé en ce que**
le procédé est un procédé d'authentification d'une personne (224),
que l'afficheur (216) fait partie d'un appareil de télécommunication (201) portable qui est associé à la personne, que la création (106) de la spécification (234) de la séquence d'images connues et d'images inconnues (208 à 214) a lieu par un module d'authentification (204), que le module d'authentification est un constituant d'une application serveur ou d'une application client, et que l'affichage (108) des nombreuses images sur l'afficheur (216) de l'appareil de télécommunication (201) portable a lieu en dehors d'un espace sécurisé par l'application client,
le procédé comprenant en outre :
- l'enregistrement (102) de la personne auprès de l'application serveur (205), où l'application serveur est instanciée sur un système informatique serveur (202), où l'enregistrement comprend une détection d'au moins une image connue (230) de la personne à l'intérieur d'espaces sécurisés (262) en présence de la personne dans l'espace sécurisé ;
- la réception (104) de l'au moins une image connue par l'application serveur par le biais d'une liaison par réseau par l'application client (240), où l'application client est instanciée sur l'appareil de télécommunication (201), où l'appareil de télécommunication est relié de manière réversible ou irréversible avec le capteur (218), où le capteur (218) est un capteur (218) sans contact permettant la détection d'activités cérébrales et est désigné par la suite par capteur KLHA (218) ;
- l'authentification (112) de la personne en tant que fonction de la ressemblance des premiers et deuxièmes signaux d'activité cérébrale détectés en tenant compte de la spécification de la séquence d'images par le module d'authentification, où le procédé d'authentification d'une personne considère une personne comme authentifiée avec succès lorsque les premiers signaux d'activité cérébrale sont semblables les uns aux autres, lorsque les deuxièmes signaux d'activité cérébrale sont semblables les uns aux autres, lorsque les premiers signaux d'activité cérébrale ne sont pas semblables aux deuxièmes signaux d'activité cérébrale et lorsque la séquence fait correspondre des premiers signaux d'activité cérébrales semblables les uns aux autres et des deuxièmes signaux d'activité cérébrale semblables les uns aux autres pour la séquence des images connues et des images inconnues affichées ; et
- l'émission (114) d'un résultat d'authentification concernant la personne.

2. Procédé selon la revendication 1, dans lequel la réception de l'au moins une image connue par l'application client a lieu dans le cadre de l'enregistrement de la personne, le procédé comprenant en outre, de préférence :
- l'enregistrement (150) de l'au moins une image connue reçue de manière sécurisée dans une mémoire non volatile (236) de l'appareil de télécommunication ;
- l'envoi (152) d'une confirmation de réception en ce qui concerne l'image connue de l'application client vers l'application serveur après la réception réussie et l'enregistrement réussi de l'image connue ; et
- l'effacement (154) de toutes les autres copies existantes de l'image connue par l'application serveur en réponse à la réception de la confirmation de réception.

3. Procédé selon la revendication 1, dans lequel la réception de l'au moins une image connue par l'application client a lieu dans le cadre de chaque processus d'authentification pour la personne, où chaque processus d'authentification comprend :
- la réception d'une demande d'authentification pour la personne par l'application client par l'application serveur,
- en réponse à la réception de la demande d'authentification, l'identification de l'au moins une image connue qui a été détectée lors de l'enregistrement de la personne, par l'application serveur ;
- l'envoi de l'au moins une image connu identifiée à l'application client par l'application serveur par le biais de la liaison par réseau.

4. Procédé selon la revendication 1, la revendication 2 ou la revendication 3, comprenant en outre :
- l'enregistrement (160) de l'au moins une image connue détectée de la personne pendant l'enregistrement de manière sécurisée dans une mémoire non volatile du système informatique serveur par l'application serveur ;
- l'enregistrement de l'au moins une image connue reçue sur une mémoire de l'appareil de télécommunication de manière exclusivement temporaire pour la durée du processus d'authentification.

5. Procédé selon l'une des revendications précédentes, dans lequel l'au moins une image connue est une image choisie dans un groupe comprenant :
- une image du visage de la personne ;
- une image capturée au moyen d'un appareil photographique ou d'une caméra vidéo (203) d'un motif d'image qui est connu de manière avérée par la personne ;
- une multiplicité d'images capturées au moyen d'un appareil photographique ou d'une caméra vidéo (203) d'un motif d'image qui est connu de manière avérée par la personne ;
- une multiplicité de copies d'une image capturée au moyen d'un appareil photographique ou d'une caméra vidéo (203) d'un motif d'image qui est connu de manière avérée par la personne.

6. Procédé selon l'une des revendications précédentes, dans lequel l'enregistrement de la personne comprend en outre :
- la mise en place d'au moins un capteur biométrique à l'intérieur de l'espace sécurisé, où le capteur est en particulier conçu sous forme d'un capteur pour la différentiation de personnes qui portent un masque facial de personnes qui ne portent pas de masque facial,
- la détection d'une caractéristique biométrique de la personne par le capteur biométrique ;
- l'évaluation de la caractéristique biométrique détectée ;
- dans le cas où l'évaluation de la caractéristique biométrique détectée a pour résultat que la personne ne porte pas de masque, l'exécution de l'enregistrement et la fourniture d'au moins une image connue de l'application serveur vers l'application client ;
- dans le cas où l'évaluation de la caractéristique biométrique détectée a pour résultat que la personne porte un masque, l'interruption de l'enregistrement sans détecter l'au moins une image connue et/ou sans fournir l'au moins une image connue à l'application client.

7. Procédé selon l'une des revendications précédentes, dans lequel l'au moins une image connue qui est capturée dans l'espace sécurisé est détectée par une caméra de sécurité (203), où une caméra de sécurité est une caméra choisie dans un groupe comprenant :
- une caméra avec une protection d'accès, où la protection d'accès a pour effet que la caméra ne peut être employée par un opérateur qu'après une étape d'authentification préalable vis-à-vis de la caméra de sécurité ;
et/ou
- une caméra avec une clé de signature qui est conçue pour signer les images connues qu'elle a détectées, où l'application serveur possède une clé de signature qui est conçue pour vérifier la signature d'images et n'accepter dans le cadre du processus d'enregistrement que des images sous forme d'images connues qui ont été signées et vérifiées par la caméra de sécurité.

8. Procédé selon l'une des revendications précédentes,
- dans lequel le capteur KLHA contient une signature qui a été créée par une clé de signature KLHA ;
- dans lequel l'application client contient une clé de vérification de signature KLHA correspondant à la clé de signature KLHA ; et
- dans lequel l'application client est conçue pour ne permettre la détection des premiers et deuxièmes signaux d'activité cérébrale et/ou leur utilisation pour l'authentification que si une vérification de la signature du capteur KLHA avec la clé de vérification de signature KLHA a pour résultat que la signature de capteur KLHA est valide.

9. Procédé selon l'une des revendications précédentes, dans lequel la séquence d'images connues et d'images inconnues sert de défi dans le cadre d'un procédé de défi-réponse et dans lequel l'authentification en tant fonction de la ressemblance des premiers et deuxièmes signaux d'activité cérébrale détectés comprend une vérification si l'ordre dans le temps des premiers et deuxièmes signaux d'activité cérébrale reproduit l'ordre codé dans le défi d'images connues et d'images inconnues.

10. Procédé selon l'une des revendications précédentes, dans lequel le module d'authentification ne traite la personne comme authentifiée avec succès que si les critères supplémentaires suivants apparaissent à côté d'une différentiation significative des premiers et deuxièmes signaux d'activité cérébrale :
- tous les premiers signaux d'activité cérébrale qui ont été détectés chaque fois pendant l'affichage d'une des images connues sont identiques ou suffisamment ressemblants les uns aux autres ;
- tous les deuxièmes signaux d'activité cérébrale qui ont été détectés chaque fois pendant l'affichage d'une des images inconnues sont identiques ou suffisamment ressemblants les uns aux autres.

11. Procédé selon l'une des revendications précédentes,
- dans lequel le capteur KLHA est un capteur électrique ; et
• dans lequel le capteur électrique est conçu pour détecter les premiers et/ou les deuxièmes signaux d'activité cérébrale par la mesure de modifications de charges et/ou de redistributions de charges, et/ou
• dans lequel le capteur électrique est conçu pour détecter l'amplitude des premiers et/ou des deuxièmes signaux d'activité cérébrale et/ou la modification de l'amplitude pendant un intervalle de temps ; ou
- dans lequel le capteur KLHA est un capteur optique qui est conçu pour détecter des images ou des séquences d'images du visage ou de parties du visage de la personne qui contiennent les premiers et/ou les deuxièmes signaux d'activité cérébrale, où l'authentification en tant que fonction de la ressemblance des signaux détectés parmi les premiers et les deuxièmes signaux d'activité cérébrale comprend une analyse d'images automatique des images ou des séquences d'images par le module d'authentification, où l'analyse d'images comprend :
- une détermination par calcul d'un diamètre de pupille de la personne ; et/ou
- une détermination par calcul d'un profil de modification du diamètre de pupille de la personne.

12. Procédé selon l'une des revendications précédentes, dans lequel l'appareil de télécommunication contient une caméra (242), où l'au moins une image connue, qui a été détectée lors de l'enregistrement, est une image de visage de l'au moins une personne, comprenant en outre :
- dans le cas où le résultat d'authentification contient le fait que la personne s'est authentifiée avec succès :
• l'affichage d'une interface graphique GUI (129) de l'application client sur un écran de l'appareil de télécommunication, où la GUI contient une incitation pour maintenir le visage de la personne dans la zone de détection de la caméra de l'appareil de télécommunication ;
• la détection d'une image de visage (232) actuelle de la personne ;
l'envoi de l'image de visage actuelle par le biais de la liaison par réseau de l'application client vers l'application serveur ;
comprenant en outre, de préférence :
• l'enregistrement et l'emploi de l'image de visage (232) actuelle de la personne en tant que l'au moins une image connue de la personne à la place de l'au moins une image connue (230) qui a été détectée lors de l'enregistrement de la personne ; et/ou
• la fourniture de l'image de visage (232) actuelle de la personne par l'application serveur à un logiciel (250) pour la personnalisation de documents d'identité ou de sécurité (222) afin de personnaliser un document d'identité ou de sécurité pour la personne.

13. Procédé de fabrication d'un document d'identité ou de sécurité pour une personne, comprenant :
- l'authentification de la personne conformément à un procédé selon la revendication 12 ;
- la fabrication d'un document d'identité ou de sécurité (222), lequel est associé spécifiquement à la personne, où l'image de visage actuelle de la personne qui a été transmise à l'application serveur est employée en tant qu'élément de sécurité (270) du document d'identité ou de sécurité.

14. Système (200) **caractérisé en ce que**
le système (200) est un système (200) d'authentification d'une personne (224), le système (200) comprenant :
- un système informatique serveur (202) avec une application serveur (205), où l'application serveur contient un registre avec les profils de plusieurs personnes enregistrées sur l'application serveur, où chaque profil est enregistré combiné avec au moins une image connue (230, 232), où l'au moins une image connue a été détectée à l'intérieur d'un espace sécurisé (262) en présence de cette personne dans l'espace sécurisé, où l'image connue d'une personne est une image connue avec un motif d'image qui est connu de cette personne ;
- un appareil de télécommunication (201) portable qui est relié avec un capteur (218) de manière réversible ou irréversible, où le capteur est un capteur (218) sans contact pour la détection d'activités cérébrales et est désigné par la suite par capteur KLHA (218) et est instancié sur une application client qui est inter opérationnelle avec l'application serveur, où l'appareil de télécommunication est associé à la personne ;
- un module d'authentification (204) qui est un constituant de l'application serveur ou de l'application client ;
dans lequel l'application client est conçue pour la réception de l'au moins une image connue par l'application serveur par le biais d'une liaison par réseau ;
dans lequel le module d'authentification est conçu pour la création d'une spécification (234) d'une séquence d'images connues et d'images inconnues (208 à 214); où une image inconnue est une image avec un motif qui n'est pas connu de la personne ;
dans lequel l'application client est conçue pour l'affichage (108) de plusieurs images sur un afficheur (216) de l'appareil de télécommunication exclusivement dans l'espace sécurisé, où les images affichées contiennent une séquence à base d'une ou de plusieurs images connues et d'une ou de plusieurs images inconnues selon la spécification ;
dans lequel le capteur KLHA est conçu pour, pendant que les nombreuses images de la personne sont affichées, détecter des premiers (708, 712, 902, 952) et des deuxièmes (704, 706, 710, 904, 954) signaux d'activité cérébrale qui sont générés respectivement dans la personne par la contemplation des images, où des premiers signaux d'activité cérébrale sont détectés pendant qu'on affiche à la personne une image connue (230) et où des deuxièmes signaux d'activité cérébrale sont détectés pendant que l'on affiche à la personne une image inconnue ;
- dans lequel le module d'authentification est conçu pour l'authentification de la personne en tant que fonction de la ressemblance des premiers et deuxièmes signaux d'activité cérébrale détectés en tenant compte de la spécification de la séquence d'images et pour l'émission d'un résultat d'authentification en ce qui concerne une personne, où le module d'authentification considère la personne comme authentifiée avec succès lorsque les premiers signaux d'activité cérébrale sont semblables les uns aux autres, lorsque les deuxièmes signaux d'activité cérébrale sont semblables les uns aux autres, lorsque les premiers signaux d'activité ne sont pas semblables aux deuxièmes signaux d'activité cérébrale et lorsque la séquence de premiers signaux d'activité cérébrale semblables les uns aux autres et de deuxièmes signaux d'activité cérébrale semblables les uns aux autres correspond à la séquence des images connues et des images inconnues affichées.
